(19) Europäisches Patentamt
European Patent Office
Office européen des brevets

(11) **EP 3 628 984 B1**

(12) **EUROPÄISCHE PATENTSCHRIFT**

(45) Veröffentlichungstag und Bekanntmachung des Hinweises auf die Patenterteilung:
**31.08.2022 Patentblatt 2022/35**

(21) Anmeldenummer: **19209687.3**

(22) Anmeldetag: **20.10.2011**

(51) Internationale Patentklassifikation (IPC):
**G01F 1/84** *(2006.01)* **G01F 15/02** *(2006.01)*

(52) Gemeinsame Patentklassifikation (CPC):
**G01F 1/8413; G01F 1/8436; G01F 1/8472; G01F 15/022**

(54) **MESSSYSTEM MIT EINEM MESSWANDLER VOM VIBRATIONSTYP**

MEASURING SYSTEM COMPRISING A VIBRATION-TYPE MEASURING TRANSDUCER

SYSTÈME DE MESURE DOTÉ D'UN TRANSFORMATEUR DE MESURE DU TYPE À VIBRATIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.11.2010 DE 102010050927**
**19.11.2010 DE 102010044179**

(43) Veröffentlichungstag der Anmeldung:
**01.04.2020 Patentblatt 2020/14**

(62) Dokumentnummer(n) der früheren Anmeldung(en) nach Art. 76 EPÜ:
**11771172.1 / 2 638 367**

(73) Patentinhaber: **Endress + Hauser Flowtec AG**
**4153 Reinach (CH)**

(72) Erfinder:
• **Drahm, Wolfgang**
  **85435 Erding (DE)**
• **Oudoire, Patrick**
  **38320 Eybens (FR)**
• **Rieder, Alfred**
  **84032 Landshut (DE)**
• **Wiesmann, Michael**
  **85356 Freising (DE)**
• **Zhu, Hao**
  **85354 Freising (DE)**

(74) Vertreter: **Hahn, Christian**
**Endress+Hauser Group Services**
**(Deutschland)AG +Co. KG**
**Colmarer Straße 6**
**79576 Weil am Rhein (DE)**

(56) Entgegenhaltungen:
WO-A1-2009/134830    DE-A1-102005 044 008
DE-A1-102007 061 690

• TIMOTHY J CUNNINGHAM: "An In-Situ Verification Technology for Coriolis Flowmeters", 7TH INTERNATIONAL SYMPOSIUM ON FLUID FLOW MEASUREMENT (ISFFM 2009), 13. August 2009 (2009-08-13), XP055473648,

**Beschreibung**

Die Erfindung betrifft ein, insb. als ein Kompakt-Meßgerät und/oder ein Coriolis-Massedurchfluß-Meßgerät ausgebildetes, Meßsystem für fließfähige, insb. fluide, Medien, das einen im Betrieb zumindest zeitweise von Medium durchströmten, von wenigstens einer das strömende Medium charakterisierenden Meßgröße, insb. einem Massendurchfluß, einer Dichte, einer Viskosität etc., beeinflußte Schwingungssignale generierenden Meßwandler vom Vibrationstyp sowie eine mit dem Meßwandler elektrisch gekoppelte und vom Meßwandler gelieferte Schwingungssignale zu Meßwerten verarbeitende Umformer-Elektronik umfaßt.

In der industriellen Meßtechnik werden, insb. auch im Zusammenhang mit der Regelung und Überwachung von automatisierten verfahrenstechnischen Prozessen bzw. Prozeßanlagen, zur Ermittlung von charakteristischen Meßgrößen von in einer Prozeßleitung, beispielsweise einer Rohrleitung, strömenden Medien, beispielsweise Flüssigkeiten und/oder Gasen, Pasten oder Pulver oder anderen fließfähigen Meßstoffen, oftmals solche Meßsysteme verwendet, die mittels eines Meßwandlers vom Vibrationstyp und einer daran angeschlossenen, zumeist in einem separaten Elektronik-Gehäuse untergebrachten, Umformer-Elektronik, im strömenden Medium Reaktionskräfte, beispielsweise Corioliskräfte, induzieren und von diesen abgeleitet wiederkehren die wenigstens eine Meßgröße, beispielsweise eine Massedurchflußrate, einer Dichte, einer Viskosität oder einem anderen das Medium entsprechend charakterisierenden Mediumsparameter, entsprechend repräsentierende Meßwerte erzeugen.

Derartige - oftmals mittels eines In-Line-Meßgeräts in Kompaktbauweise mit integriertem Meßwandler, wie etwa einem Coriolis-Massedurchflußmesser, gebildete - Meßsysteme sind seit langem bekannt und haben sich im industriellen Einsatz bewährt. Beispiele für solche Meßsysteme mit einem Meßwandler vom Vibrationstyp oder auch einzelnen Komponenten davon, sind z.B. in der EP-A 317 340, der EP-A 816 807, der JP-A 8-136311, der JP-A 9-015015, der US-A 2006/0112774, der US-A 2007/0062308, der US-A 2007/0113678, der US-A 2007/0119264, der US-A 2007/0119265, der US-A 2007/0151370, der US-A 2007/0151371, der US-A 2007/0186685, der US- A 2008/0034893, der US-A 2008/0041168, der US-A 2008/0141789, der US-A 2010/0050783, der US-A2010/0139416, der US-A 2010/0139417, der US-A 2010/0236338, der US-A 2010/0242623, der US-A 2010/0242624, der US-A2010/0011882, der US-A 2010/0251830, der US-A 46 80 974, der US-A 47 38 144, der US-A 47 77 833, der US-A 48 01 897, der US-A 48 23 614, der US-A 48 79 911, der US-A 50 09 109, der US-A 50 24 104, der US-A 50 50 439, der US-A 52 91 792, der US-A 53 59 881, der US-A 53 98 554, der US-A 54 76 013, der US-A 55 31 126, der US-A 56 02 345, der US-A 56 91 485, der US-A 57 34 112, der US-A 57 96 010, der US-A 57 96 011, der US-A 57 96 012, der US-A 58 04 741, der US-A 58 61 561, der US-A 58 69 770, der US-A 59 45 609, der US-A 59 79 246, der US-A 60 47 457, der US-A 60 92 429, der US-A 60 73 495, der US-A 63 111 36, der US-B 62 23 605, der US-B 63 30 832, der US-B 63 97 685, der US-B 65 13 393, der US-B 65 57 422, der US-B 66 51 513, der US-B 66 66 098, der US-B 66 91 583, der US-B 68 40 109, der US-B 68 68 740, der US-B 68 83 387, der US-B 70 17 424, der US-B 70 40 179, der US-B 70 73 396, der US-B 70 77 014, der US-B 70 80 564, der US-B 71 34 348, der US-B 72 16 550, der US-B 72 99 699, der US-B 73 05 892, der US-B 73 60 451, der US-B 73 92 709, der US-B 74 06 878, der US-B 75 62 586, der WO-A 00/14485, der WO-A 01/02816, der WO-A 03/021205, der WO-A 2004/072588, der WO-A 2005/040734, der WO-A 2005/050145, der WO-A 2007/097760, der WO-A 2008/013545, der WO-A 2008/077574, der WO-A 95/29386, der WO-A 95/16897, der WO-A 96/05484, der WO-A 99/40394 oder den eigenen, nicht vorveröffentlichten deutschen

Patentanmeldungen DE102009055069.0 bzw. DE102010039627.3 beschrieben. Jeder der darin gezeigten Meßwandler umfaßt wenigstens ein in einem Meßwandler-Gehäuse untergebrachtes, im wesentlichen gerades oder gekrümmtes Meßrohr zum Führen des, gegebenenfalls auch extrem schnell oder extrem langsam strömenden, Mediums. Das wenigstens eine Meßrohr, das an einem mit der jeweiligen Prozeßleitung kommunizierenden einlaßseitigen ersten Meßrohrende und einem gleichermaßen mit der Prozeßleitung kommunizierenden auslaßseitigen zweiten Meßrohrende jeweils mit dem Meßwandler-Gehäuse mechanischen gekoppelt ist und das sich zwischen den beiden Meßrohrenden mit einer im wesentlichen freien Nutz-Schwinglänge erstreckt, wird zwecks Generierung von durch das hindurchströmende Medium, mithin dem davon jeweils zu messenden Mediumsparameter beeinflußten Schwingungen bzw. zwecks Generierung von damit entsprechend korrespondierenden Schwingungssignalen im Betrieb in dem Fachmann an und für sich bekannter Weise aktiv zu Vibrationen um eine Ruhelage in einer für die jeweilige Messung geeigneten Schwingungsform - dem sogenannten Nutzmode - angeregt.

Bei Meßwandlern mit zwei oder mehr Meßrohren sind diese zumeist über ein sich zwischen den Meßrohren und einem einlaßseitigen Anschlußflansch erstreckenden einlaßseitig Strömungsteiler sowie über ein sich zwischen den Meßrohren und einem auslaßseitigen Anschlußflansch erstreckenden auslaßseitig Strömungsteiler in die Prozeßleitung eingebunden. Bei Meßwandlern mit einem einzigen Meßrohr kommuniziert letzteres zumeist über ein einlaßseitig einmündendes im wesentlichen gerades Verbindungsrohrstück sowie über ein auslaßseitig einmündendes im wesentlichen gerades Verbindungsrohrstück mit der Prozeßleitung. Ferner umfaßt jeder der gezeigten Meßwandler mit einem einzigen Meßrohr jeweils wenigstens einen einstückigen oder mehrteilig ausgeführten, beispielsweise rohr-, kästen- oder plattenförmigen, Gegenschwinger, der unter Bildung einer ersten Kopplungszone einlaßseitig an das Meßrohr gekoppelt ist und der unter Bildung einer zweiten Kopplungszone auslaßseitig an das Meßrohr gekoppelt ist, und der im Betrieb im wesentlichen ruht oder zum Meßrohr gegengleich, also gleichfrequent und gegenphasig, oszilliert. Das mittels Meßrohr und Gegenschwinger gebildete Innenteil des Meßwandlers ist zumeist allein mittels der zwei Verbindungsrohrstücke, über die das Meßrohr im Betrieb mit der Prozeßleitung kommuniziert, in einem schutzgebenden Meßwandler-Gehäuse gehaltert, insb. in einer Schwingungen des Innenteil relativ zum Meßrohr ermöglichenden Weise. Bei den beispielsweise in der US-A 52 91 792, der US-A 57 96 010, der US-A 59 45 609, der US-B 70 77 014, der US-A 2007/0119264, der WO-A 01 02 816 oder auch der WO-A 99 40 394 gezeigten Meßwandler mit einem einzigen, im wesentlichen geraden Meßrohr sind letzteres und der Gegenschwinger, wie bei herkömmlichen Meßwandlern durchaus üblich, zueinander im wesentlichen koaxial ausgerichtet. Bei marktgängigen Meßwandlern der vorgenannten Art ist zumeist auch der Gegenschwinger im wesentlichen rohrförmig und als im wesentlichen gerader Hohlzylinder ausgebildet, der im Meßwandler so angeordnet ist, daß das Meßrohr zumindest teilweise vom Gegenschwinger ummantelt ist. Als Materialien für solche Gegenschwinger kommen, insb. auch bei Verwendung von Titan, Tantal oder Zirkonium für das Meßrohr, zumeist vergleichsweise kostengünstige Stahlsorten, wie etwa Baustahl oder Automatenstahl, zum Einsatz.

Bei Meßsystemen der in Rede stehenden Art dient als Nutzmode üblicherweise einer von einer Vielzahl von dem Meßrohr innewohnenden natürlichen Schwingungsmoden, d.h. das wenigstens eine Meßrohr wird vornehmlich zu Schwingungen in Resonanz aktiv angeregt, so daß es im Nutzmode überwiegend Eigenschwingungen mit einer seiner momentanen Eigenfrequenzen ausführt. Zumeist dient als Nutzmode ein natürlicher Schwingungsmode erster Ordnung, der sogenannte Grundmode, des wenigstens einen Meßrohrs, in dem das wenigstens eine Meßrohr Eigenschwingungen um seine Ruhelage ausführen kann bzw. ausführt, welche Eigenschwingungen im Bereich des ersten und zweiten Meßrohrendes jeweils einen Schwingungsknoten und im Bereich der Nutz-Schwinglänge genau einen Schwingungsbauch aufweisen. Im besonderen wird bei Meßwandlern mit gekrümmtem, z.B. U-, V- oder $\Omega$-artig geformtem, Meßrohr bzw. gekrümmten Meßrohren als Nutzmode üblicherweise jene, auch als Biegeschwingungsgrundmode bezeichnete, Eigenschwingungsform gewählt, bei denen das jeweilige Meßrohr zumindest anteilig um eine gedachte Längsachse des Meßwandlers nach Art eines lediglich endseits eingespannten Auslegers pendelt, wodurch im hindurchströmenden Medium vom Massendurchfluß abhängige Corioliskräfte induziert werden. Diese wiederum führen dazu, daß den angeregten Schwingungen des Nutzmodes, im Falle gekrümmter Meßrohre also pendelartigen Auslegerschwingungen, dazu gleichfrequente Biegeschwingungen gemäß eines natürlichen Schwingungsmode höherer Ordnung, dem sogenannten Coriolismode, überlagert werden. Bei Meßwandlern mit gekrümmtem Meßrohr entsprechen diese durch Corioliskräfte erzwungenen Auslegerschwingungen im Coriolismode üblicherweise jenem Schwingungsmode, in dem das wenigstens eine Meßrohr auch Drehschwingungen um eine senkrecht zur Längsachse ausgerichtete gedachte Hochachse ausführt. Bei Meßwandlern mit geradem Meßrohr hingegen wird zwecks Erzeugung von massendurchflußabhängigen Corioliskräften oftmals ein solcher natürlicher Schwingungsmode als Nutzmode gewählt, bei dem das Meßrohr zumindest anteilig Biegeschwingungen im wesentlichen in einer einzigen gedachten Schwingungsebene ausführt, beispielsweise wiederum einem einen einzigen Schwingungsbauch aufweisenden Biegeschwingungsgrundmode, so daß die Schwingungen im Coriolismode dementsprechend als komplanare, mithin zu den Nutzmodeschwingungen frequenzgleiche Biegeschwingungen ausgebildet sind, die hinsichtlich ihrer Schwingungsform im wesentlichen einem Biegeschwingungsmode zweiter Ordnung entsprechen. Aufgrund der Überlagerung von Nutz- und Coriolismode weisen die mittels der Sensoranordnung einlaßseitig und auslaßseitig erfaßten Schwingungen des vibrierenden Meßrohrs eine auch vom Massedurchfluß abhängige, meßbare Phasendifferenz auf.

Üblicherweise werden die Meßrohre derartiger, z.B. in Coriolis-Massedurchflußmessern eingesetzte, Meßwandler im Betrieb ausschließlich oder zumindest überwiegend auf einer momentanen Eigenfrequenz der für den Nutzmode gewählten Schwingungsform angeregt, beispielsweise also einer niedrigsten Eigenfrequenz, mithin also in Resonanz vibrieren gelassen, dies zumeist auch bei konstantgeregelter Schwingungsamplitude. Da die Eigenfrequenz jedes natürlichen Schwingungsmoden des wenigstens einen Meßrohrs im besonderen auch von der momentanen Dichte des Mediums abhängig ist, kann mittels marktüblicher Coriolis-Massedurchflußmesser neben dem Massedurchfluß zusätzlich so auch die Dichte von strömenden Medien gemessen werden. Ferner ist es auch möglich, wie beispielsweise in der US-B 66 51 513 oder der US-B 70 80 564 gezeigt, mittels Meßwandlern vom Vibrationstyp, Viskosität des hindurchströmenden Mediums direkt zu messen, beispielsweise basierend auf einer für die Aufrechterhaltung der Schwingungen erforderlichen Erregerenergie bzw. Erregerleistung und/oder basierend auf einer aus einer Dissipation von Schwingungsenergie resultierenden Dämpfung von Schwingungen des wenigstens einen Meßrohrs, insb. denen im vorgenannten Nutzmode. Darüberhinaus können auch weitere, aus den vorgenannten, als primäre Meßwerte dienende Mediumsparameter Massendurchflußrate, Dichte und Viskosität abgeleitete Meßgrößen, wie etwa gemäß der US-B 65 13 393 die Reynoldszahl zu ermittelt werden.

Zum aktiven Anregen von Schwingungen des wenigstens einen Meßrohrs weisen Meßwandler vom Vibrationstyp des weiteren eine im Betrieb von einem von einer in der erwähnten Umformer-Elektronik vorgesehenen Treiberschaltung generierten und entsprechend konditionierten elektrischen Treibersignal, z.B. mit einem hinsichtlich Frequenz, Phasenlage und Amplitude geregelten Strom, angesteuerte Erregeranordnung auf, die das Meßrohr mittels wenigstens eines im Betrieb von einem Strom durchflossenen, auf das Meßrohr praktisch direkt einwirkenden elektro-mechanischen, insb. elektro-dynamischen, Schwingungserregers zu Schwingungen im Nutzmode, mithin zu Schwingungen in Resonanz anregt. Desweiteren umfassen derartige Meßwandler eine Sensoranordnung mit, insb. elektro-dynamischen, Schwingungssensoren zum zumindest punktuellen Erfassen einlaßseitiger und/oder auslaßseitiger Schwingungen des wenigstens einen Meßrohrs, insb. denen im Coriolismode, und zum Erzeugen von vom zu erfassenden Mediumsparameter, wie etwa dem Massedurchfluß oder der Dichte, beeinflußten, als Schwingungssignale des Meßwandlers dienenden elektrischen Spannungen. Wie beispielsweise in der US-B 72 16 550 beschrieben können bei Meßwandlern der in Rede stehenden Art gegebenenfalls auch der Schwingungserreger zumindest zeitweise als Schwingungssensor und/oder ein Schwingungssensor zumindest zeitweise als Schwingungserreger verwendet werden. Zwecks Antreiben des erwähnten Nutzmodes in der eingangs erwähnten Weise weist bei den meisten, nicht zuletzt auch marktgängigen, konventionellen Meßsystemen der in Rede stehenden Art das von der Umformer-Elektronik gelieferte Treibersignal zumindest zeitweise eine einzige oder zumindest dominierende Signalkomponente mit einer Signalfrequenz auf, die einer momentanen Eigenfrequenz des erwähnten natürlichen Schwingungsmodes erster Ordnung, beispielsweise also des Biegeschwingungsgrundmodes, des wenigstens einen Meßrohrs entspricht. Im Ergebnis dessen führt somit das wenigstens eine Meßrohr, angeregt vom wenigstens einen Schwingungserreger, zumindest anteilig, zumeist auch überwiegend, Schwingungen in Resonanz, nämlich mit einer der momentanen Eigenfrequenz des Schwingungsmodes erster Ordung entsprechenden Schwingungsfrequenz aus, und weist auch das wenigstens eine Schwingungssignal dementsprechend zumindest zeitweise eine Signalkomponente mit einer Signalfrequenz auf, die der Signalfrequenz der Signalkomponente des Treibersignals, mithin der momentanen Eigenfrequenz des damit angeregten Schwingungsmodes erster Ordnung entspricht.

Die Erregeranordnung von Meßwandlern der in Rede stehenden Art weist üblicherweise wenigstens einen elektrodynamischen und/oder differentiell auf das wenigstens eine Meßrohr und den ggf. vorhandenen Gegenschwinger oder ein ggf. vorhandenes anderes Meßrohr einwirkenden Schwingungserreger zum Konvertieren von elektrischer Erregerleistung in Vibrationen des wenigstens einen Meßrohrs auf, während die Sensoranordnung wenigstens einen, zumeist ebenfalls elektrodynamischen, Schwingungssensor zum Erfassen von Vibrationen des wenigstens einen Meßrohrs, beispielsweise also einlaßseitigen oder auslaßseitigen Biegeschwingungen, und zum Erzeugen eines nämliche - etwa einlaßseitige bzw. auslaßseitige - Vibrationen zumindest des wenigstens einen Meßrohrs repräsentierenden Schwingungssignals umfaßt. Überwiegend, nicht zuletzt aber für den erwähnten Fall, daß das Meßsystem als ein dem Erfassen von Massendurchflußraten bzw. Massendurchflüssen dienendes Coriolis-Masendurchfluß-Meßgerät ausgebildet ist, weist die Sensoranordnung zusätzlich zu dem einen - einlaßseitigen - Schwingungssensor wenigstens einen dazu im wesentlichen baugleichen - auslaßseitigen - Schwingungssensor auf. Solche elektrodynamischen und/oder differentiellen Schwingungserreger marktgängiger Meßwandler vom Vibrationstyp, mithin marktgängiger Meßsysteme der in Rede stehenden Art sind mittels einer zumindest zeitweise von einem Wechselstrom durchflossenen - bei Meßwandlern mit einem Meßrohr und einem daran gekoppelten Gegenschwinger zumeist an letzterem fixierten - Magnetspule sowie einen mit der wenigstens einen Magnetspule wechselwirkenden, insb. in diese eintauchenden, als Anker dienenden eher länglichen, insb. stabförmig ausgebildeten, Dauermagneten gebildet, der entsprechend am zu bewegenden Meßrohr fixiert ist. Der Dauermagnet und die als Erregerspule dienende Magnetspule sind dabei üblicherweise so ausgerichtet, daß sie zueinander im wesentlichen koaxial verlaufen. Zudem ist bei herkömmlichen Meßwandlern die Erregeranordnung üblicherweise derart ausgebildet und im Meßwandler plazierte, daß sie im wesentlichen mittig an das wenigstens eine Meßrohr angreift. Dabei ist der Schwingungserreger und insoweit die Erregeranordnung, wie beispielsweise auch bei den in der US-A 57 96 010, der US-B 68 40 109, der US-B 70 77 014 oder der US-B 70 17 424 vorgeschlagenen Meßwandlern gezeigt, zumeist zumindest punktuell entlang einer gedachten mittigen Umfangslinie des Meßrohrs außen an diesem fixiert. Alternativ zu einer mittels eher zentral und direkt auf das Meßrohr wirkenden Schwingungserregern gebildeten Erregeranordnung können, wie u.a. in der US-B 65 57 422, der US-A 60 92 429 oder der US-A 48 23 614 vorgeschlagen, beispielsweise auch mittels zweier nicht im Zentrum des Meßrohres, sondern eher ein- bzw. auslaßseitig an diesem fixierten Schwingungserreger gebildete Erregeranordnungen verwendet werden oder, wie u.a. in der US-B 62 23 605 oder der US-A 55 31 126 vorgeschlagen, beispielsweise auch mittels eines zwischen dem ggf. vorhandenen Gegenschwinger und dem Meßwandler-Gehäuse wirkenden Schwingungserreger gebildete Erregeranordnungen verwendet werden. Bei den meisten marktgängigen Meßwandlern vom Vibrationstyp sind die Schwingungssensoren der Sensoranordnung, wie bereits angedeutet, zumindest insoweit im wesentlichen baugleich ausgebildet wie der wenigstens eine Schwingungserreger, als sie nach dem gleichen Wirkprinzip arbeiten. Dementsprechend sind auch der wenigstens eine Schwingungssensor bzw. die Schwingungssensoren einer solchen Sensoranordnung zumeist jeweils mittels wenigstens einer - üblicherweise am ggf. vorhandene Gegenschwinger fixierten -, zumindest zeitweise von einem veränderlichen Magnetfeld durchsetzte und damit einhergehend zumindest zeitweise mit einer induzierten Meßspannung beaufschlagten sowie einem am Meßrohr fixierten, mit der wenigstens eine Spule zusammenwirkenden dauermagnetischen Anker gebildet, der das Magnetfeld liefert. Jede der vorgenannten Spulen ist zudem mittels wenigstens eines Paars elektrischer Anschlußleitungen mit der erwähnten Umformer-Elektronik des In-Line-Meßgeräts verbunden, die zumeist auf möglichst kurzem Wege von den Spulen über den Gegenschwinger hin zum Meßwandler-Gehäuse geführt sind.

Wie u.a. in den eingangs erwähnten der US-B 73 92 709, der US-B 75 62 586, der US-A 2007/0113678, der WO-A 99/39164 bzw. der WO-A 03/021205 diskutiert, können Meßwandler vom Vibrationstyp, mithin die damit gebildeten Meßsysteme während ihrer, zumeist mehrere Jahre umfassenden, Laufzeit einer Vielzahl von Belastungen ausgesetzt sein, die erhebliche Abweichungen des Meßsystems von einem dafür vorab, etwa bei einer Kalibrierung im Herstellerwerk und/oder bei einer Inbetriebnahme des Meßsystems, ermittelten Referenzzustand bewirken und damit einhergehend die Meßgenauigkeit des Meßsystems, mit der dieses die zu erfassenden Mediumsparameter in die entsprechenden Meßwerte schlußendlich abbildet, signifikant herabsetzen können. Als Beispiele für solche, im Ergebnis ein Schwingungsverhalten des wenigstens einen Meßrohrs insgesamt irreversible verändernde Belastungen, seien sie nun einmalig oder mehrfach wiederkehrend bzw. dauerhaft oder nur kurzzeitig auftretend, können exemplarisch Übertemperaturen, hohe Temperaturshocks oder andere thermisch bedingte Überbelastungen des wenigstens einen Meßrohrs, hohe Druckstöße im Medium, seitens der Prozeßleitung auf den Meßwandler ausgeübte zu hohe Einspannkräfte und/oder Rüttelkräfte und damit einhergehende Rißbildung und/oder plastische Deformation im wenigstens einen Meßrohr, seitens des im Meßwandler geführten Mediums, beispielsweise durch Korrosion und/oder Abrasion, bewirkte Erodierung des wenigstens einen Meßrohrs von Innen heraus, mithin eine Reduzierung von dessen Wandstärke, die Bildung von Belag auf der mediumsberührenden Innenseite des wenigstens einen Meßrohrs, Materialermüdung oder andere Abnutzungserscheinungen am wenigstens einen Meßrohr zu nennen. Darüberhinaus können während der Laufzeit des Meßsystems auch der wenigstens einen Schwingungserreger wie auch jeder der Schwingungssensoren, etwa durch thermisch bedingte Überlastung bzw. Alterung, für die Meßgenauigkeit relevanten Veränderungen unterworfen sein, etwa derart, daß im Ergebnis auch eine elektrische Impedanz des Meßwandlers verändert ist. Im Ergebnis solcher Belastungen variiert schlußendlich stets eine dem Meßwandler immanente Meßwandler-Übertragungsfunktion, gemäß der der vom wenigstens einen Treibersignal angesteuerte Meßwandler letztlich den jeweils zu erfassenden Mediumsparameter in die jeweiligen Schwingungssignale konvertiert, in einer zunächst nicht ohne weiteres erkenn- oder vorhersehbaren, jedoch gelegentlich hinsichtlich der angestrebten hohen Meßgenauigkeit nicht mehr zu vernachlässigenden Weise, arbeitet also das Meßsystem insgesamt fehlerhaft. Zudem müssen infolge solcher, nicht zuletzt auch die strukturelle Integrität des Meßwandlers insgesamt beeinflussende Überlastungen, Beeinträchtigungen der Funktionstüchtigkeit des Meßsystems oder unter Umständen sogar auch zu Leckage oder Explosion führende Zerstörungen des Meßwandlers besorgt werden. Solche auch die Betriebssicherheit von Meßsystemen der in Rede stehenden Art betreffenden Veränderungen gegenüber dem Referenzzustand, können, nicht zuletzt im Falle toxischer und/oder leicht entflammbarer Medien bzw. im Falle von unter hohem Druck stehenden Gasen, durchaus auch katastrophale Folgen für die gesamte Prozeßanlage sowie sich darin aufhaltende Personen haben. Dem Rechnung tragend werden Meßsysteme der in Rede stehenden Art üblicherweise wiederkehrend entsprechenden Nachprüfungen unterzogen, etwa im Zuge von mit der vorausschauenden Instandhaltung verbundenen Maßnahmen, und bei Bedarf, etwa bei diagnostizierte erhöhter Meßungenauigkeit, gelegentlich entsprechend nachkalibriert oder ausgetauscht.

Zwecks möglichst frühzeitiger Erkennung einer ein vorgegebenes Toleranzmaß überschreitenden Abweichung des Meßsystems vom dafür vorab ermittelten Referenzzustand, mithin einer Diagnose von seitens des Meßwandlers bedingten Fehlern des Meßsystems, und der damit einhergehend sich anbahnenden signifikanten Verringerung der Meßgenauigkeit bzw. der Betriebssicherheit von Meßsystemen der in Rede stehenden Art ist beispielsweise in der US-A 2010/0011882, der US-A 2007/0062308, der US-A 2007/0113678, WO-A 96/05484, WO-A 99/39164, der WO-A 03/021205 oder der EP-A 816 807 Meßsystem vorgeschlagen, vorgenannte Veränderungen von solchen Meßsystemen anhand von Vergleichen aktueller, nämlich im Betrieb ermittelter, Schwingungsantworten ausgewählter Komponenten des Meßwandlers bzw. nämliche Schwingungsantworten repräsentierender Systemparameter, beispielsweise eine Meßrohrsteifigkeit, eine Vielzahl von, ggf. auch frequenzselektiv erfaßten, Dämpfungsfaktoren, Verhältnisse von mechanischen Eigenfrequenzen des wenigstens Meßrohrs oder andere, vorbestimmte Meßwandler-Übertragungsfunktionen beschreibende, mithin das Meßsystem charakterisierende Systemparameter etc., auf ausgewählte - breitbandige bzw. frequenzselektive - Schwingungsanregungen, wie etwa eine Schlag oder eine kontinuierliche, ggf. auch multimodale, Schwingungsanregung einer bzw. mehrerer der Eigenfrequenzen des wenigstens Meßrohrs, mit dafür zuvor im Referenzzustand des Meßsystems passend ermittelten Meßwandler-Übertragungsfunktionen bzw. diese repräsentierende Referenz-Systemparameter zu vergleichen, um beispielsweise bei Überschreiten eines entsprechend vorgegebenen, ein noch akzeptables Toleranzmaß repräsentierenden, Schwellenwerts, mithin bei Diagnostizieren eines Fehlers, eine dies entsprechend signalisierende Systemstatusmeldung, beispielsweise ein Alarm, zu generieren. Alternativ zu solchen, schlußendlich jeweils immer auf Messungen von Resonanz-Schwingungen des wenigstens einen Meßrohrs beruhenden, mithin in erheblichem Maße auch von Mediumsparametern, insb. Dichte und Viskosität, abhängigen Diagnoseverfahren ist darüberhinaus in der US-A 2007/0113678 ferner vorgeschlagen, eine - nicht näher spezifizierte - Komponente des Meßsystems, etwa das Meßwandler-Gehäuse, mit einer erzwungene Schwingung anzuregen, nämlich auf genau einer Schwingungsfrequenz, die außerhalb einer Resonanzfrequenz nämlicher Komponenten liegt, um bestimmte - allerdings ebenfalls nicht näher spezifizierte - Charakteristiken des Meßsystems zu ermitteln, die ansonsten, nämlich über die Beobachtung von Eigenfrequenzen, nur schwer zugänglich sind. Ob oder inwieweit bzw. anhand welcher Faktoren damit schlußendlich eine Abweichung des Meßsystems vom Referenzzustand überhaupt festzustellen, nicht zuletzt aber auch ein Fehlerzustand des Meßsystems im Betrieb desselben tatsächlich zu diagnostizieren wäre, ist allerdings nicht offenbart.

Die WO 2009/134830 A1 beschreibt ein weiters vibronisches Messsystem gemäß dem Stand der Technik unter Verwendung von Treiber- bzw. Schwingungssignalen mit zwei Komponenten, wobei jeweils eine Komponente von Eigenfrequenzen des verwendeten Messrohres abweicht.

Ein Aufgabe der Erfindung besteht daher darin, mittels Meßwandler vom Vibrationstyp gebildet Meßsysteme dahingehend zu verbessern, daß damit - nicht zuletzt aber auch mit den bereits konventionellen, mithin etablierten Meßsystemen der in Rede stehenden Art "bordeigenen" Schwingungserregern und -sensoren und möglichst auch ohne den eigentlichen Meßbetrieb nennenswert zu beeinflussen oder gar unterbrechen zu müssen - das Auftreten von die Meßgenauigkeit und/oder die Betriebssicherheit herabsetzenden Verschleiß- bzw. Alterungserscheinungen des jeweiligen Meßwandlers möglichst frühzeitig und zuverlässig detektiert, ggf. auch signalisiert werden können; dies im besonderen auch weitgehend unabhängig vom im Meßwandler strömenden Medium sowie unter weitgehender, ggf. auch ausschließlicher Verwendung der für solche Meßsystemen, nicht zuletzt auch für die darin bis anhin verbauten Meßwandler, bewährten Designs wie auch unter gleichermaßen weitgehender Beibehaltung bewährten Technologien und Architekturen etablierter Umformer-Elektroniken.

Zur Lösung der Aufgabe besteht die Erfindung in einem Meßsystem gemäß dem angefügten Patentanspruch 1. Ausführungen der Erfindung sind in den Unteransprüchen spezifiziert.

Ein Grundgedanke der Erfindung besteht darin, anhand von - zu den bei Meßsystemen der in Rede stehenden Art im Nutzmode ohnehin angeregten Schwingungen des wenigstens einen Meßrohrs in Resonanz zusätzlichen - aktiv außer Resonanz angeregten, insoweit also erzwungenen Schwingungen des wenigstens einen Meßrohrs bzw. anhand von einigen wenigen, aus der Schwingungserregung, nämlich dem Treibersignal, und/oder der Schwingungsantwort, nämlich dem wenigstens einen Schwingungssignal, einfach ableitbaren Systemparametern, wie etwa Signalfrequenzen, Signalamplituden, Phasendifferenzen (Phasenwinkeln) des wenigstens einen Schwingungssignals relativ zum Treibersignal oder daraus abgeleitete Komplexfaktoren, eine Überprüfung des Meßsystems hinsichtlich dessen tatsächlicher Meßgenauigkeit bzw. Betriebssicherheit durchzuführen und sich anbahnende bzw. allfällig vorliegende Fehler frühzeitig zu detektieren und möglichst genau zu diagnostizieren. Die Erfindung basiert dabei auf der überraschenden Erkenntnis, daß sogar auch bei aktiver Anregungen des wenigstens einen Meßrohrs zu Schwingungen in einem ausgewählten, nämlich von Variationen einer Schwingungsgüte bzw. eines Dämpfungsmaßes nicht mehr nennenswert beeinflußten, mithin die Resonanzfrequenzen des wenigsten eine Meßrohrs ausschließenden, Frequenzbereich von dem im Meßwandler geführten Medium bzw. den davon zu erfassenden Mediumsparameter weitgehend unabhängige Überprüfung bzw. Diagnose des Meßsystems allein anhand von den in Meßsystemen der in Rede stehenden Art notorisch vorhanden - im Vergleich zu herkömmlichen Meßsystemen lediglich geringfügig zu modifizierenden, gleichwohl sehr einfach generierbaren - Treiber- bzw. Schwingungssignale erfolgen kann; dies im Falle von für die Erregung in ausreichendem Maße verfügbarer elektrischer Leistung sogar auch gleichzeitig zum eigentlichen Meßbetrieb.

Ein Vorteil der Erfindung besteht dabei nicht zuletzt auch darin, daß zur Realisierung der erfindungsgemäßen Schwingungsmessung bzw. der darauf schlußendlich basierenden Überprüfung bzw. Diagnose des Meßsystems sowohl auf betriebsbewährte konventionelle Meßwandler, insb. auch die darin üblicherweise eingesetzten elektrodynamischen Schwingungserreger bzw. - sensoren, als auch auf betriebsbewährte konventionelle - um die für die Überprüfung bzw. Diagnose benötigte Software selbstverständlich entsprechend erweiterte - Umformer-Elektroniken zurückgegriffen werden kann.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet.

Im einzelnen zeigen:

Fig. 1a, b     eine Variante eines als Kompakt-Meßgerät ausgebildetes Meßsystem für in Rohrleitungen strömende Medien in verschiedenen Seitenansichten;

Fig. 2a, b     eine weitere Variante eines als Kompakt-Meßgerät ausgebildetes Meßsystem für in Rohrleitungen strömende Medien in verschiedenen Seitenansichten;

Fig. 3     schematisch nach Art eines Blockschaltbildes eine, insb. auch für ein Meßsystem gemäß den Fig. 1a, 1b, 2a, 2b, geeignete, Umformer-Elektronik mit daran angeschlossenem Meßwandler vom Vibrationstyp;

Fig. 4, 5     in, teilweise geschnittenen bzw. perspektivischen, Ansichten eine Variante eines, insb. für ein Meßsystem gemäß den Fig. 1a, 1b geeigneten, Meßwandlers vom Vibrations-Typ mit einem im Betrieb vibrierenden Meßrohr;

Fig. 6, 7     in, teilweise geschnittenen bzw. perspektivischen, Ansichten eine weitere Variante eines, insb. für ein Meßsystem gemäß den Fig. 2a, 2b geeigneten, Meßwandlers vom Vibrations-Typ mit im Betrieb vibrierenden Meßrohren;

Fig. 8     schematisch ein in einem Meßwandler gemäß den Fign. 4, 5 bzw. 6, 7 detektierbares Frequenzspektrum von (Eigen-) Schwingungen eines im Meßwandler enthaltenen Meßrohrs; und

Fig. 9    Ergebnisse von im Zusammenhang mit der Erfindung, insb. auch unter Anwendung von computerbasierten Simulationsprogrammen und/oder mittels realer Meßsysteme im Labor, durchgeführten experimentellen Untersuchungen bzw. daraus abgeleitete, der Ermittlung eines Betriebszustands eines Meßsystems gemäß den Fig. 1a, b bzw. 2a, b bzw. einer Abweichung des Meßsystems von einem dafür vorab ermittelten Referenzzustand.

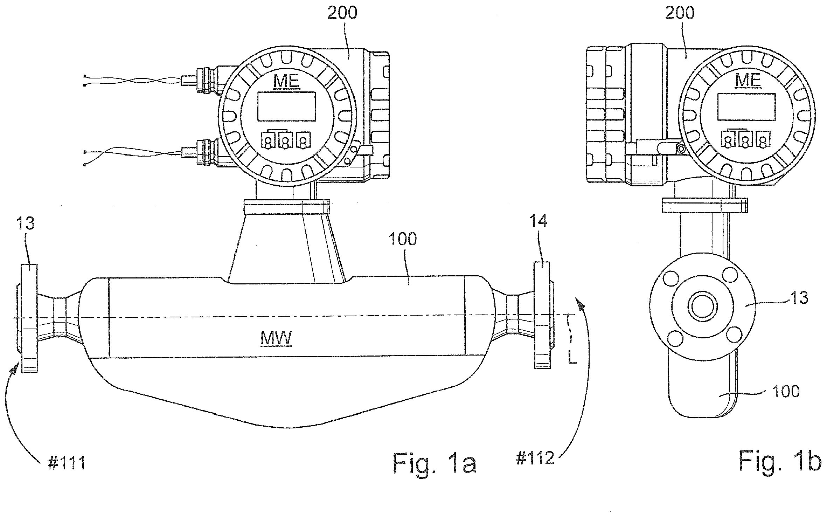

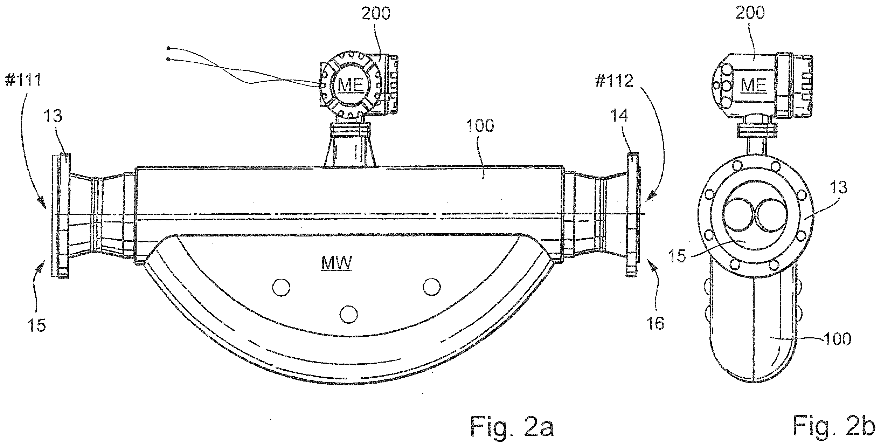

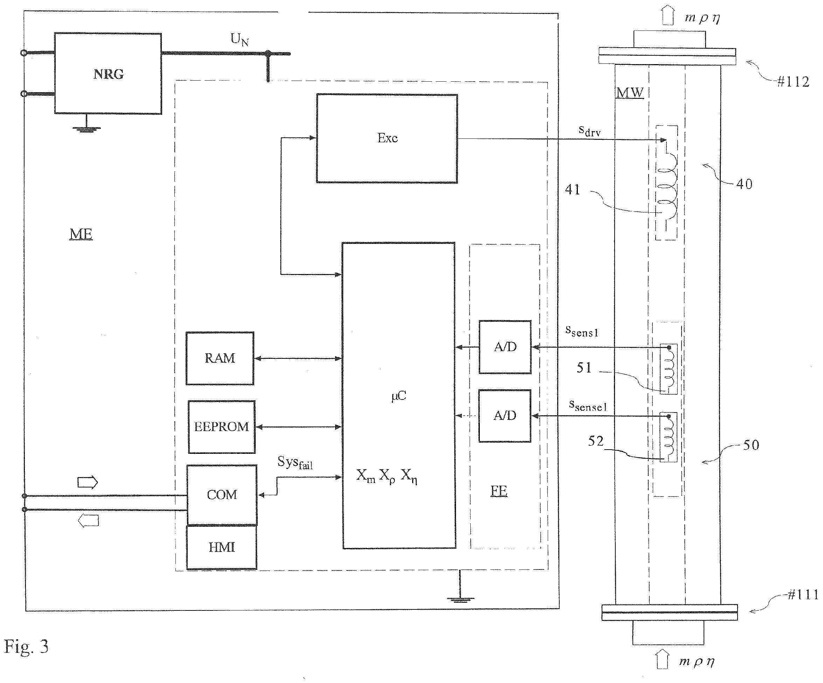

In den Fig. 1a, 1b bzw. 2a, 2b ist jeweils eine Variante eines in eine Prozeßleitung, etwa eine Rohrleitung einer industriellen Anlage, einfügbares, beispielsweise mittels eines Coriolis-Massendurchflußmeßgerät, Dichtemeßgerät, Viskositätsmeßgerät oder dergleichen gebildetes, Meßsystem für fließfähige, insb. fluide, Medien, dargestellt, das im besonderen dem Messen und/oder Überwachen eines ein in der Prozeßleitung strömendes Medium entsprechend charakterisierenden Mediumsparameter, wie etwa einer Massendurchflußrate, einer Dichte, einer Viskosität etc., dient. Das - hier mittels eines In-Line-Meßgeräts in Kompaktbauweise realisierte - Meßsystem umfaßt dafür einen über ein Einlaßende #111 sowie ein Auslaßende #112 an die Prozeßleitung angeschlossenen Meßwandler MW vom Vibrationstyp, welcher Meßwandler im Betrieb entsprechend vom zu messenden Medium, wie etwa einer niedrigviskosen Flüssigkeit und/oder einer hochviskosen Paste und/oder einem Gas, durchströmt und an eine, insb. im Betrieb von extern via Anschlußkabel und/oder mittels interner Energiespeicher mit elektrischer Energie versorgte, dem Ansteuern des Meßwandlers und zum Auswerten von vom Meßwandler gelieferten Schwingungssignalen dienende Umformer-Elektronik ME des Meßsystems angeschlossen ist. Diese weist, wie in Fig. 3 schematisch nach Art eines Blockschaltbildes dargestellt, eine dem Ansteuern des Meßwandlers dienende Treiber-Schaltung Exc sowie eine Schwingungssignale des Meßwandlers MW verarbeitende, beispielsweise mittels eines Mikrocomputers gebildete und/oder im Betrieb mit der Treiber-Schaltung Exc kommunizierende, Meß- und Auswerte-Schaltung $\mu$C, die im Betrieb die wenigstens eine Meßgröße, wie z.B. den momentanen oder einen totalisierten Massendurchfluß, repräsentierende Meßwerte liefert. Die Treiber-Schaltung Exc und die Auswerte-Schaltung $\mu$C sowie weitere, dem Betrieb des Meßsystems dienende Elektronik-Komponenten der Umformer-Elektronik, wie etwa eine interne Energieversorgungsschaltung NRG zum Bereitstellen interner Versorgungsspannungen $U_N$ und/oder eine dem Anschluß an ein übergeordnetes Meßdatenverarbeitungssystem und/oder einem Feldbus dienende Kommunikationsschaltung COM, sind ferner in einem entsprechenden, insb. schlag- und/oder auch explosionsfest und/oder hermetisch dicht ausgebildeten, Elektronikgehäuse 200 untergebracht.

Zum Visualisieren von Meßsystem intern erzeugten Meßwerten und/oder gegebenenfalls Meßsystem intern generierten Systemstatusmeldungen, wie etwa eine Fehlermeldung oder einen Alarm, vor Ort kann das Meßsystem desweiteren ein zumindest zeitweise mit der Umformer-Elektronik kommunizierendes Anzeige- und Bedienelement HMI aufweisen, wie etwa ein im Elektronikgehäuse hinter einem darin entsprechend vorgesehenen Fenster plaziertes LCD-, OLED- oder TFT-Display sowie eine entsprechende Eingabetastatur und/oder ein Touchscreen. In vorteilhafter Weise kann die, insb. programmierbare und/oder fernparametrierbare, Umformer-Elektronik ME ferner so ausgelegt sein, daß sie im Betrieb des Meßsystems mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meß- und/oder Systemdiagnosewerte oder der Steuerung des Meßsystems dienende Einstellwerte. Für den Fall, daß das Meßsystem für eine Ankopplung an ein Feldbus- oder ein anderes Kommunikationssystem vorgesehen ist, weist die Umformer-Elektronik ME eine für eine Datenkommunikation gemäß einem der einschlägigen Industriestandards ausgebildete Kommunikations-Schnittstelle COM auf. Darüberhinaus kann die Umformer-Elektronik ME beispielsweise eine solche interne Energieversorgungsschaltung NRG aufweisen, die im Betrieb von einer im vorgenannten Datenverarbeitungssystem vorgesehen externen Energieversorgung über das vorgenannte Feldbussystem gespeist wird. Gemäß einer Ausgestaltung der Erfindung ist die Umformer-Elektronik ferner so ausgebildet, daß sie mittels einer, beispielsweise als 4-20 mA-Stromschleife konfigurierten, Zweidraht-Verbindung 2L mit dem externer elektronischen Datenverarbeitungssystem elektrisch verbindbar ist und darüber mit elektrischer Energie versorgt werden sowie Meßwerte zum Datenverarbeitungssystem übertragen kann; das Meßsystem kann aber beispielsweise auch als sogenanntes Vierleiter-Meßgerät ausgebildet sein, bei dem die interne Energieversorgungsschaltung NRG der Umformer-Elektronik ME mittels einem ersten Paars Leitungen mit einer externen Energieversorgung und die interne Kommunikationsschaltung COM der Umformer-Elektronik ME mittels eines zweiten Paars Leitungen mit einer externen Datenverarbeitungsschaltung oder einem externen Datenübertragungssystem verbunden ist.

Das elektrische Anschließen des Meßwandlers an die erwähnte Umformer-Elektronik kann mittels entsprechender Anschlußleitungen erfolgen, die aus dem Elektronik-Gehäuse 200, beispielsweise via Kabeldurchführung, heraus geführt und zumindest abschnittsweise innerhalb des Meßwandlergehäuses verlegt sind. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein, vgl. hierzu auch die eingangs erwähnten US-B 67 11 958 oder US-A 53 49 872.

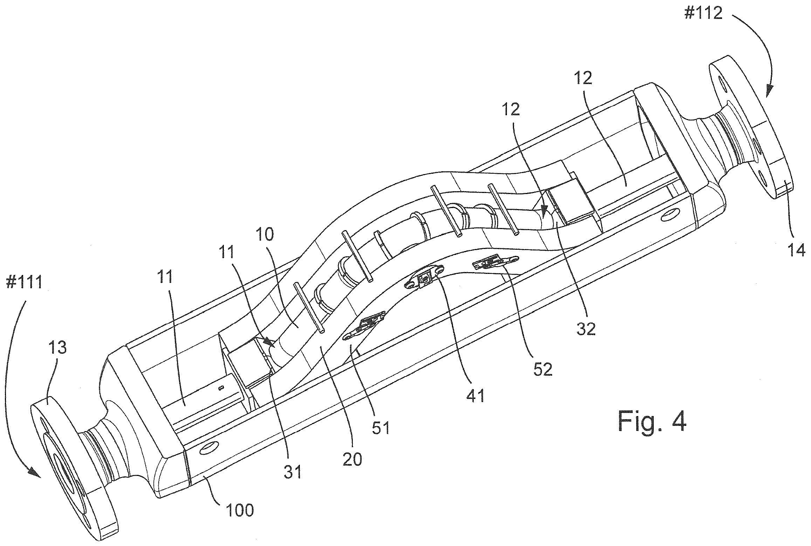

In den Fig. 4 und 5 bzw. 6 und 7 sind zur weiteren Erläuterung der Erfindung ein erstes bzw. ein zweites Ausführungsbeispiel für einen für die Realisierung des Meßsystems geeigneten Meßwandler MW vom Vibrationstyp schematisch dargestellt. Der Meßwandler MW dient generell dazu, in einem hindurchströmenden Medium, etwa einem Gas und/oder einer Flüssigkeit, mechanische Reaktionskräfte, z.B. massedurchflußabhängige Coriolis-Kräfte, dichteabhängige Trägheitskräfte und/oder viskositätsabhängige Reibungskräfte, zu erzeugen, die meßbar, insb. sensorisch erfaßbar, auf den Meßwandler zurückwirken. Abgeleitet von diesen Reaktionskräften können so z.B. ein Massedurchfluß m, eine Dichte ρ und/oder eine Viskosität η des Mediums gemessen werden. Jeder der Meßwandler umfaßt dafür jeweils ein in einem Meßwandler-Gehäuse 100 angeordnetes, die physikalisch-elektrische Konvertierung des wenigstens einen zu messenden Parameters eigentlich bewirkendes, insoweit als Meßwerk dienendes, Innenteil. Zusätzlich zur Aufnahme des Innenteils kann das Meßwandlergehäuse 100 zudem auch dazu dienen, das Elektronikgehäuse 200 des In-line-Meßgeräts mit darin untergebrachter Treiber- und Auswerte-Schaltung zu haltern.

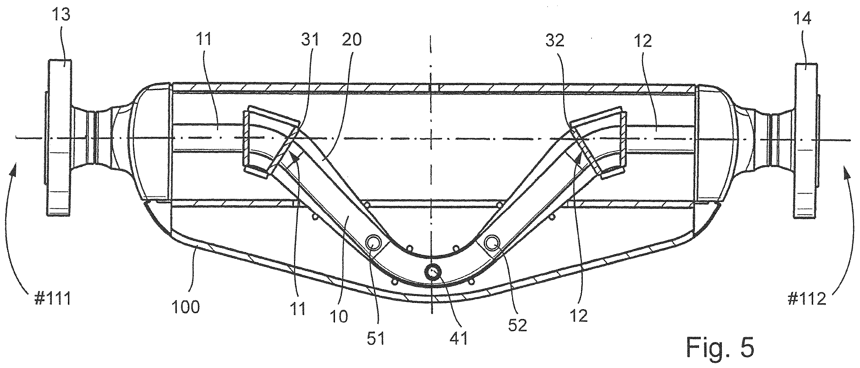

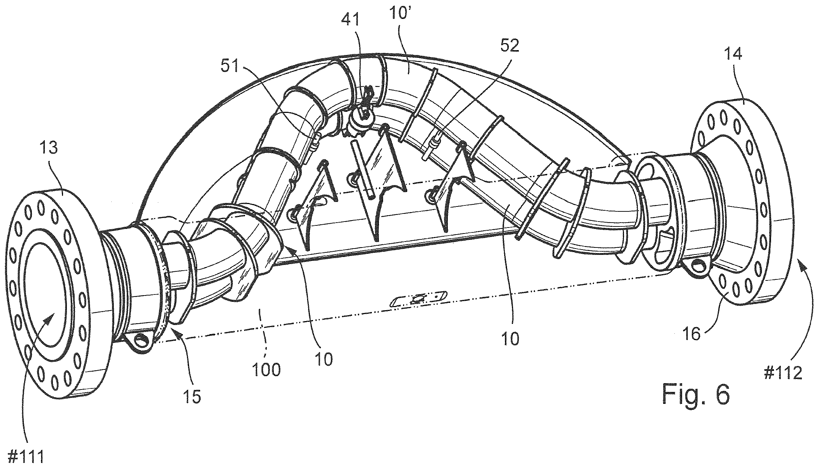

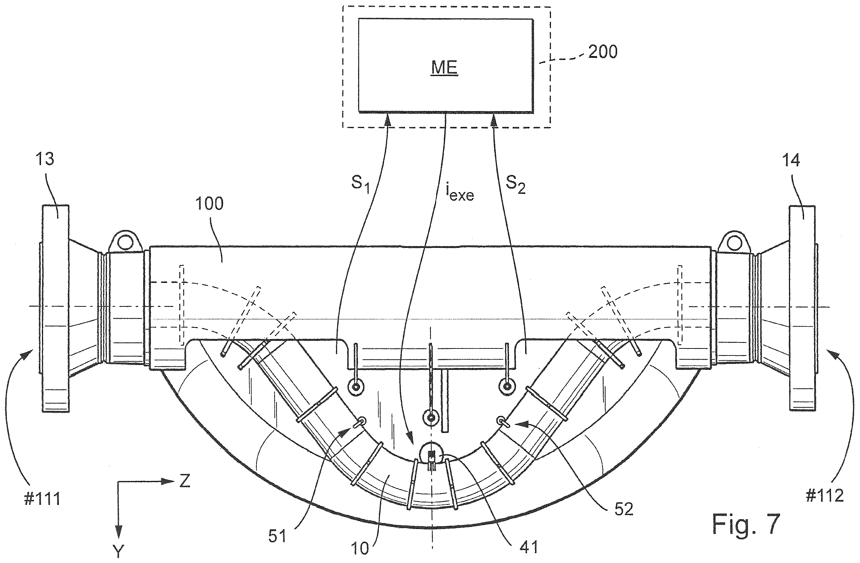

Zum Führen von strömendem Mediums umfaßt das Innenteil des Meßwandlers generell wenigstens ein erstes - im in den Fig. 4 und 5 gezeigten Ausführungsbeispiel einziges zumindest abschnittsweise gekrümmtes - Meßrohr 10, das sich zwischen einem einlaßseitigen ersten Meßrohrende 11# und einem auslaßseitigen zweiten Meßrohrende 12# mit einer Nutz-Schwinglänge erstreckt und zum Erzeugen vorgenannter Reaktionskräfte im Betrieb zumindest zeitweise aktiv zu mechanischen Schwingungen angeregt über seine Nutz-Schwinglänge vibrieren gelassen und dabei, um eine statische Ruhelage oszillierend, wiederholt elastisch verformt wird. Die Nutz-Schwinglänge entspricht hierbei einer Länge einer innerhalb von Lumen verlaufende gedachte Mittel- oder auch Schwerelinie (gedachte Verbindungslinie durch die Schwerpunkte aller Querschnittsflächen des Meßrohrs), im Falle eines gekrümmten Meßrohrs also einer gestreckten Länge des Meßrohrs 10. Es sei an dieser Stelle ausdrücklich darauf hingewiesen, daß - obwohl der Meßwandler im in den Fig. 4 und 5 gezeigten Ausführungsbeispiel lediglich ein einziges eher V-förmig gekrümmtes Meßrohr aufweist und zumindest insoweit in seinem mechanischen Aufbau wie auch seinem Wirkprinzip dem in den US-B 73 60 451 oder der US-B 66 66 098 vorgeschlagenen bzw. auch den seitens der Anmelderin unter der Typbezeichnung "PROMASS H", "PROMASS P" oder "PROMASS S" käuflich angebotenen Meßwandlern ähnelt - zur Realisierung der Erfindung selbstverständlich auch Meßwandler mit geradem und/oder mehr als einem Meßrohr, beispielsweise also zwei oder vier Meßrohren, dienen können, etwa vergleichbar den in den eingangs erwähnten US-A 2010/0236338, US-A 2010/0242624, US-A 2010/0242623, US-A 60 06 609, US-B 65 13 393, US-B 70 17 424, US-B 68 40 109, US-B 69 20 798, US-A 57 96 011, US-A 57 31 527 oder US-A 56 02 345 gezeigten oder beispielsweise auch den seitens der Anmelderin unter der Typbezeichnung "PROMASS I", "PROMASS M" bzw. "PROMASS E" oder "PROMASS F" käuflich angebotenen Meßwandlern jeweils mit zwei parallelen Meßrohren. Demnach kann der Meßwandler auch ein einziges gerades Meßrohr oder wenigstens zwei, beispielsweise mittels eines einlaßseitigen Strömungsteilers und eines auslaßseitigen Strömungsteilers, ggf. zusätzlich auch noch mittels ein- und auslaßseitiger Koppelelemente, miteinander mechanisch gekoppelte und/oder einander baugleiche und/oder gekrümmte und/oder zueinander parallele, Meßrohre zum Führen von zu messendem Medium aufweisen, die im Betrieb zum Erzeugen der Schwingungssignale zumindest zeitweise vibrieren, etwa frequenzgleich auf einer gemeinsamen Schwingfrequenz, jedoch zueinander gegenphasig. Gemäß einer Weiterbildung der Erfindung umfaßt der Meßwandler, wie etwa in Fig. 6 und 7 schematisch dargestellt, daher zusätzlich zum ersten Meßrohr 10 eine zweites Meßrohr 10', daß unter Bildung einer ersten Kopplungszone einlaßseitig mittels eines, beispielsweise plattenförmigen, ersten Kopplerelements und unter Bildung einer zweiten Kopplungszone auslaßseitig mittels eines, beispielsweise plattenförmigen und/oder zum ersten Kopplerelement baugleichen, zweiten Kopplerelements mit dem ersten Meßrohr 10 mechanisch verbunden ist. Auch in diesem Fall definieren also die erste Kopplungszone jeweils ein einlaßseitiges erstes Meßrohrende 11#, 11'# jedes der zwei Meßrohre 10, 10' und die zweite Kopplungszone jeweils ein auslaßseitiges zweites Meßrohrende 12#, 12'# jedes der zwei Meßrohre 10, 10'. Da für den Fall, daß das Innenteil mittels zweier Meßrohre gebildet ist, jedes der beiden, insb. im Betrieb im wesentlichen gegenphasig zueinander oszillierenden und/oder zueinander parallelen und/oder hinsichtlich Form und Material baugleichen, Meßrohre 10, 10' dem Führen von zu messendem Medium dient, mündet jedes der zwei Meßrohre nach einer weiteren Ausgestaltung dieser zweiten Variante des erfindungsgemäßen Meßwandlers einlaßseitig in jeweils eine von zwei voneinander beabstandeten Strömungsöffnungen eines dem Aufteilen von einströmendem Medium in zwei Teilströmungen dienenden ersten Strömungsteiler 15 und auslaßseitig in jeweils eine von zwei voneinander beabstandeten Strömungsöffnungen eines dem Wiederzusammenführen der Teilströmungen dienenden zweiten Strömungsteilers 16, so daß also beide Meßrohre im Betrieb des Meßsystem gleichzeitig und parallel von Medium durchströmt sind. Im in den Fig. 6 und 7 gezeigten Ausführungsbeispiel sind die Strömungsteiler insoweit integraler Bestandteil des Meßwandlergehäuses, als mittels des ersten Strömungsteilers ein das Einlaßende #111 des Meßwandlers definierendes einlaßseitige erstes Gehäuseende und mittels des zweiten Strömungsteilers ein das Auslaßende #112 des Meßwandlers definierendes auslaßseitige zweite Gehäuseende gebildet sind.

Wie aus der Zusammenschau der Fign. 4 und 5 bzw. 6 und 7 ohne weiteres ersichtlich, ist das wenigstens eine Meßrohr 10 jeweils so geformt, daß vorgenannte Mittellinie, wie bei Meßwandlern der in Rede stehenden Art durchaus üblich, in einer gedachten Rohrebene des Meßwandlers liegt. Nach einer Ausgestaltung der Erfindung wird das wenigstens eine Meßrohr 10 im Betrieb dabei so vibrieren gelassen, daß es um eine Schwingungsachse, insb. in einem Biegeschwingungsmode, schwingt, die zu einer die beiden Meßrohrenden 11#, 12# imaginär verbindenden gedachten Verbindungsachse parallel oder koinzident ist. Das wenigstens eine Meßrohr 10 ist ferner so geformt und im Meßwandler angeordnete, daß vorgenannte Verbindungsachse im wesentlichen parallel zu einer Ein- und Auslaßende des Meßwandlers imaginär verbindenden gedachten Längsachse L des Meßwandlers verläuft, ggf. auch koinzidiert.

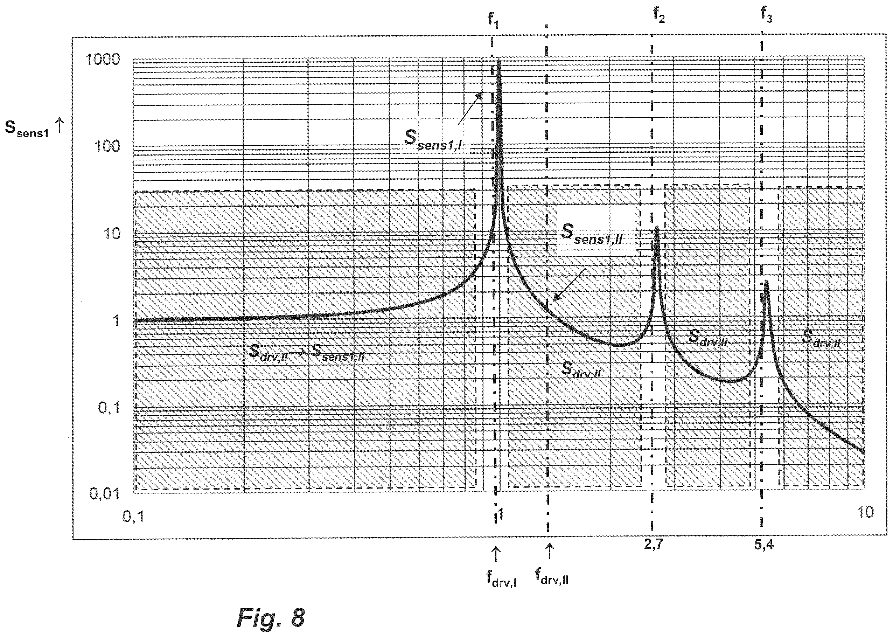

Das wenigstens eine, beispielsweise aus Edelstahl, Titan, Tantal bzw. Zirkonium oder einer Legierung davon hergestellte, Meßrohr 10 des Meßwandlers und insoweit auch eine innerhalb von Lumen verlaufende gedachte Mittellinie des Meßrohrs 10 kann z.B. im wesentlichen U-förmig oder, wie auch in der Fig. 4 und 5 bzw. 6 und 7 bzw. auch Fig. 8 gezeigt, im wesentlichen V-förmig ausgebildet sein. Da der Meßwandler für eine Vielzahl unterschiedlichster Anwendungen, insb. im Bereich der industriellen Meß- und Automatisierungstechnik einsetzbar sein soll, ist ferner vorgesehen, daß das Meßrohr je nach Verwendung des Meßwandlers einen Durchmesser aufweist, der im Bereich zwischen etwa 1 mm und etwa 100 mm liegt.

Zur Minimierung von auf das mittels eines einzigen Meßrohrs gebildeten Innenteils wirkenden Störeinflüssen wie auch zur Reduzierung von seitens des jeweiligen Meßwandlers an die angeschlossene Prozeßleitung insgesamt allfällig abgegebener Schwingungsenergie umfaßt das Innenteil des Meßwandlers gemäß dem in den Fig. 4 und 5 gezeigten Ausführungsbeispiel desweiteren einen mechanisch mit dem - hier einzigen gekrümmten - Meßrohr 10 gekoppelten, beispielsweise ähnlich wie das Meßrohr U- bzw. V-förmige ausgebildete, Gegenschwinger 20. Dieser ist, wie auch in Fig. 2 gezeigt, vom Meßrohr 10 seitlich beabstandet im Meßwandler angeordnet und unter Bildung einer - letztlich vorgenanntes erstes Meßrohrende 11# definierenden - ersten Kopplungszone einlaßseitig und der unter Bildung einer - letztlich vorgenanntes zweites Meßrohrende 12# definierenden - zweiten Kopplungszone auslaßseitig jeweils am Meßrohr 10 fixiert. Der - hier im wesentlichen parallel zum Meßrohr 10 verlaufende, ggf. auch koaxial zu diesem angeordnete - Gegenschwinger 20 ist aus einem zum Meßrohr hinsichtlich des Wärmeausdehnungsverhaltens kompatiblen Metall, wie etwa Stahl, Titan bzw. Zirkonium, hergestellt und kann dabei beispielsweise rohrförmig oder auch im wesentlichen kastenförmig auch ausgeführt sein. Wie in Fig. 2 dargestellt oder u.a. auch in der US-B 73 60 451 vorgeschlagen, kann der Gegenschwinger 20 beispielsweise mittels links- und rechtsseitig des Meßrohrs 10 angeordneten Platten oder auch links- und rechtsseitig des Meßrohrs 10 angeordneten Blindrohren gebildet sein. Alternativ dazu kann der Gegenschwinger 20 - wie etwa in der US-B 66 66 098 vorgeschlagen - auch mittels eines einzigen seitlich des Meßrohrs und parallel dazu verlaufenden Blindrohrs gebildet sein. Wie aus einer Zusammenschau der Fign. 2 und 3 ersichtlich, ist der Gegenschwinger 20 im hier gezeigten Ausführungsbeispiel mittels wenigstens eines einlaßseitigen ersten Kopplers 31 am ersten Meßrohrende 11# und mittels wenigstens eines auslaßseitigen, insb. zum Koppler 31 im wesentlichen identischen, zweiten Kopplers 32 am zweiten Meßrohrende 12# gehaltert. Als Koppler 31, 32 können hierbei z.B. einfache Knotenplatten dienen, die in entsprechender Weise einlaßseitig und auslaßseitig jeweils an Meßrohr 10 und Gegenschwinger 20 befestigt sind. Ferner kann - wie bei dem in den Fig. 2 und 3 gezeigten Ausführungsbeispiel vorgeschlagen - ein mittels in Richtung der gedachten Längsachse L des Meßwandlers voneinander beabstandeten Knotenplatten zusammen mit überstehenden Enden des Gegenschwinger 20 einlaßseitig und auslaßseitig jeweils gebildeter, vollständig geschlossener Kasten oder ggf. auch teilweise offener Rahmen als Koppler 31 bzw. als Koppler 32 dienen. Wie in den Fig. 2 und 3 schematisch dargestellt, ist das Meßrohr 10 ferner über ein einlaßseitig im Bereich der ersten Kopplungszone einmündendes gerades erstes Verbindungsrohrstück 11 und über ein auslaßseitig im Bereich der zweiten Kopplungszone einmündendes, insb. zum ersten Verbindungsrohrstück 11 im wesentlichen identisches, gerades zweites Verbindungsrohrstück 12 entsprechend an die das Medium zu- bzw. abführende - hier nicht dargestellte - Prozeßleitung angeschlossen, wobei ein Einlaßende des einlaßseitigen Verbindungsrohrstück 11 praktisch das Einlaßende des Meßwandlers und ein Auslaßende des auslaßseitigen Verbindungsrohrstück 12 das Auslaßende des Meßwandlers bilden. In vorteilhafter Weise können das Meßrohr 10 und zusammen mit den beiden Verbindungsrohrstücken 11, 12 einstückig ausgeführt sein, so daß zu deren Herstellung z.B. ein einziges rohrförmiges Halbzeug aus einem für solche Meßwandler üblichen Material, wie z.B. Edelstahl, Titan, Zirkonium, Tantal oder entsprechenden Legierungen davon, dienen kann. Anstelle dessen, daß Meßrohr 10, Einlaßrohrstück 11 und Auslaßrohrstück 12 jeweils durch Segmente eines einzigen, einstückigen Rohres gebildet sind, können diese, falls erforderlich aber auch mittels einzelner, nachträglich zusammengefügter, z.B. zusammengeschweißter, Halbzeuge hergestellt werden. Im in den Fig. 2 und 3 gezeigten Ausführungsbeispiel ist ferner vorgesehen, daß die beiden Verbindungsrohrstücke 11, 12, so zueinander sowie zu einer die beiden Kopplungszonen 11#, 12# imaginär verbindenden gedachten Längsachse L des Meßwandlers ausgerichtet sind, daß das hier mittels Gegenschwinger und Meßrohr gebildete Innenteil, einhergehend mit Verdrillungen der beiden Verbindungsrohrstücke 11, 12, um die Längsachse L pendeln kann. Dafür sind die beiden Verbindungsrohrstücke 11, 12 so zueinander auszurichten, daß die im wesentlichen geraden Rohrsegmente im wesentlichen parallel zur gedachten Längsachse L bzw. zur gedachten Schwingungsachse der Biegeschwingungen des Meßrohrs verlaufen daß die Rohrsegmente sowohl zur Längsachse L als auch zueinander im wesentlichen fluchten. Da die beiden Verbindungsrohrstücke 11, 12 im hier gezeigten Ausführungsbeispiel praktisch über ihre gesamte Länge hinweg im wesentlichen gerade ausgeführt sind, sind sie dementsprechend insgesamt zueinander sowie zur imaginären Längsachse L im wesentlichen fluchtend ausgerichtet. Wie aus den Fig. 2 und 3 weiterhin ersichtlich, ist das, insb. im Vergleich zum Meßrohr 10 biege- und torsionssteifes, Meßwandlergehäuse 100, insb. starr, an einem bezüglich der ersten Kopplungszone distalen Einlaßende des einlaßseitigen Verbindungsrohrstücks 11 sowie an einem bezüglich der ersten Kopplungszone distalen Auslaßende des auslaßseitigen Verbindungsrohrstück 12 fixiert. Insoweit ist also das gesamte - hier mittels Meßrohr 10 und Gegenschwinger 20 gebildete - Innenteil nicht nur vom Meßwandlergehäuse 100 vollständig umhüllt, sondern infolge seiner Eigenmasse und der Federwirkung beider Verbindungsrohrstücke 11, 12 im Meßwandler-Gehäuse 100 auch schwingfähig gehalten.

Für den typischen Fall, daß der Meßwandler MW lösbaren mit der, beispielsweise als metallische Rohrleitung ausgebildeten, Prozeßleitung zu montieren ist, sind einlaßseitig des Meßwandlers einer erster Anschlußflansch 13 für den Anschluß an ein Medium dem Meßwandler zuführendes Leitungssegment der Prozeßleitung und auslaßseitig ein zweiter Anschlußflansch 14 für ein Medium vom Meßwandler abführendes Leitungssegment der Prozeßleitung vorgesehen. Die Anschlußflansche 13, 14 können dabei, wie bei Meßwandlern der beschriebenen Art durchaus üblich auch endseitig in das Meßwandlergehäuse 100 integriert sein. Falls erforderlich können die Verbindungsrohrstücke 11, 12 im übrigen aber auch direkt mit der Prozeßleitung, z.B. mittels Schweißen oder Hartlötung, verbunden werden. Im in Fig. 2 und 3 gezeigten Ausführungsbeispiel sind der erste Anschlußflansch 13 dem einlaßseitigen Verbindungsrohrstück 11 an dessen Einlaßende und der zweite Anschlußflansch 14 dem auslaßseitigen Verbindungsrohrstück 12 an dessen Auslaßende angeformt, während im in Fig. 4 und 5 gezeigten Ausführungsbeispiel die Anschlußflansche entsprechend mit den zugehörigen Strömungsteilern entsprechend verbunden sind.

Wie bereits mehrfach erwähnt, werden beim erfindungsgemäßen Meßsystem die für die Messung erforderlichen Reaktionskräfte im jeweils zu messenden Medium durch das Schwingenlassen des wenigstens einen Meßrohrs in einem aktiv angeregten Schwingungsmode, dem sogenannten Nutzmode, bewirkt. Als Nutzmode wird dabei, wie bei Meßwandlern der in Rede stehenden Art durchaus üblich, wenigstens einer von einer Vielzahl von dem wenigstens einen Meßrohr innewohnenden, natürlichen Schwingungsmoden gewählt, in denen nämliches Meßrohr im Bereich seiner Meßrohrenden jeweils einen Schwingungsknoten und im Bereich seiner Nutzschwinglänge wenigstens einen Schwingungsbauch aufweisende Resonanz-Schwingungen um eine Ruhelage ausführt bzw. ausführen kann, deren jeweilige Eigenschwingungsform wie auch deren jeweilige Eigenfrequenz bekanntlich maßgeblich auch von Mediumsparametern des im Meßrohr strömenden Mediums, insb. dessen momentaner Dichte und Viskosität, abhängig sind. Nicht zuletzt infolge der dieser Abhängigkeit vom durch das wenigstens eine Meßrohr, mithin den Meßwandler im Betrieb hindurchströmenden Medium sind die natürlichen Schwingungsmoden im Betrieb des Meßwandlers in erheblichem Maße veränderlich. Je nach Bauart, Anwendung und Meßbereich können die Eigenfrequenzen dabei innerhalb eines sich durchaus im Bereich einiger 100Hz oder sogar im Kilohertz-Bereich bewegenden Nutz-Frequenzbandes variieren. Bei Anregung des wenigstens einen Meßrohrs auf einer seiner momentanen Eigen- oder auch Resonanzfrequenzen kann somit einerseits anhand der momentan angeregten Schwingungsfrequenz eine mittlere Dichte des durch das wenigstens eine Meßrohr momentane strömenden Mediums leicht ermittelt werden. Anderseits kann so auch die für die Aufrechterhaltung der im Nutzmode angeregten Schwingungen momentan erforderliche elektrische Leistung minimiert werden. Neben der vorgenannten Abhängigkeit der natürlichen Schwingungsmoden des wenigstens einen Meßrohrs von dem darin momentan geführten Medium, werden die natürlichen Schwingungsmoden von Meßrohren grundsätzlich aber auch von deren jeweiliger Größe, Form, Material und Wandstärke sowie die jeweilige mechanische Kopplung zu anderen Komponenten des Meßwandlers, wie etwa dem Meßwandler-Gehäuse, einem ggf. vorgesehenen weiteren Meßrohr bzw. einem Gegenschwinger etc., mithin auch von an den Meßrohrenden bzw. den Kopplungszonen im Betrieb wirkenden, ggf. auch schwankenden, Einspannkräften bzw. -momenten mitbestimmt.

Zum aktiven Anregen von Vibrationen des wenigstens einen Meßrohrs, insb. auch jenen im vorgenannten Nutzmode, umfaßt der Meßwandler ferner eine mittels wenigstens eines mit dem wenigstens eine Meßrohr in Wirkverbindung stehenden elektro-mechanischen, beispielsweise elektro-dynamischen, Schwingungserregers gebildete Erregeranordnung 5, die dazu dient, das wenigstens eine Meßrohr betriebsgemäß zumindest zeitweise in für die konkrete Messung jeweils geeignete Schwingungen im Nutzmode, beispielsweise von Biegeschwingungen in einem natürlichen Biegeschwingungsmode, mit jeweils für die Erzeugung und die Erfassung der oben genannten Reaktionskräfte im Medium ausreichend großen Schwingungsamplitude zu versetzen bzw. nämliche Schwingungen aufrechtzuerhalten. Der wenigstens eine - etwa elektrodynamischen, nämlich mittels Tauchankerspule gebildete - Schwingungserreger, mithin die Erregeranordnung, dient hierbei im besonderen dazu, eine von der Umformer-Elektronik mittels wenigstens eines elektrischen Treibersignals $s_{drv}$ eingespeiste elektrische Erregerleistung $P_{exc}$ in, z.B. pulsierende oder harmonische, also im wesentlichen sinusförmige, Erregerkräfte $F_{exc}$ zu konvertieren, die entsprechend auf das wenigsten eine Meßrohre wirken und somit die gewünschten Schwingungen im Nutzmode bewirken. Beispielsweise kann das wenigstens eine Treibersignal gleichzeitig auch eine Vielzahl von sinusförmigen Signalkomponenten mit voneinander verschiedener Signalfrequenz aufweisen, von denen eine - etwa eine zumindest zeitweise hinsichtlich einer Signalleistung dominierende - Signalkomponente eine einer Eigenfrequenz eines als Nutzmode gewählten natürlichen Schwingungsmodes entsprechende Signalfrequenz aufweist. Die - durch Konvertierung von in die Erregeranordnung eingespeister elektrischer Erregerleistung $P_{exc}$ generierten - Erregerkräfte $F_{exc}$ können dabei in dem Fachmann an und für sich bekannter Weise, z.B. mittels einer in der Umformer-Elektronik 12 vorgesehenen, letztlich das Treibersignal liefernden Treiberschaltung Exc entsprechend eingestellt werden, etwa mittels in der Treiberschaltung implementierten, eine Amplitude (Stromstärke) eines Stromes des Treibersignals regelnder Strom- und/oder eine Amplitude (Spannungshöhe) einer Spannung des Treibersignals Spannungs-Reglern hinsichtlich ihres Betrags und, z.B. mittels einer in Betriebsschaltung gleichfalls vorgesehenen Phasen-Regelschleife (PLL), hinsichtlich ihrer momentanen Frequenz oder im Falle mehrfrequenter Anregung hinsichtlich ihrer momentanen Frequenzen, vgl. hierzu beispielsweise auch die US-A 48 01 897 oder die US-B 63 11 136. Der Aufbau und die Verwendung vorgenannter Phasenregel-Schleifen zum aktiven Anregen von Meßrohren zu Schwingungen auf einer ihrer mechanischen Eigenfrequenzen ist z.B. in der US-A 48 01 897 ausführlich beschrieben. Selbstverständlich können auch andere für das Einstellen der Erregerenergie $E_{exc}$ geeignete, dem Fachmann an und für sich bekannte Treiberschaltungen verwendet werden, beispielsweise auch gemäß der dem eingangs erwähnten Stand der Technik, etwa der eingangs erwähnten US-A 47 77 833, US-A 48 01 897, US- A 48 79 911, US-A 50 09 109, US-A 50 24 104, US-A 50 50 439, US-A 58 04 741, US-A 58 69 770, US-A 6073495 oder US-A 63 111 36. Ferner sei hinsichtlich einer Verwendung solcher Treiberschaltungen für Meßwandler vom Vibrationstyp auf die mit Meßumformern der Serie "PROMASS 83" bereitgestellte Umformer-Elektroniken verwiesen, wie sie von der Anmelderin beispielsweise in Verbindung mit Meßwandlern der Serie "PROMASS E", "PROMASS F", "PROMASS H", "PROMASS I", "PROMASS P" oder "PROMASS S" angeboten werden. Deren Treiberschaltung ist beispielsweise jeweils so ausgeführt, daß Biegeschwingungen im Nutzmode auf eine konstante, also auch von der Dichte, p, weitgehend unabhängige Amplitude geregelt werden.

Beim erfindungsgemäßen Meßsystem ist hierbei im besonderen vorgesehen, daß die Umformer-Elektronik die für die Generierung der Erregerkräfte benötigte elektrische Erregerleistung in den Schwingungserreger, mithin die damit gebildete Erregeranordnung, mittels eines solchen elektrischen Treibersignals $s_{drv}$ einspeist, das zumindest zeitweise eine sinusförmige, möglichst mehrere Schwingungsperioden umfassende, Signalkomponente $s_{drv,I}$ erster Art mit einer Signalfrequenz, $f_{drv,I}$, aufweist, die, wie in Fig. 8 schematisch angedeutet, einer momentanen Eigenfrequenz, $f_1$, eines natürlichen Schwingungsmodes erster Ordnung des wenigstens einen Meßrohrs entspricht, in dem das wenigstens eine Meßrohr Eigenschwingungen um eine Ruhelage ausführen kann bzw. ausführt, welche Eigenschwingungen im Bereich des ersten und zweiten Meßrohrendes jeweils einen Schwingungsknoten und im Bereich der Nutz-Schwinglänge genau einen Schwingungsbauch aufweisen, so daß also das wenigstens eine Meßrohr zumindest zeitweise, angeregt vom wenigstens einen Schwingungserreger 41, zumindest anteilig, insb. im Falle der Verwendung nämlichen Schwingungsmode als Nutzmode überwiegend, Schwingungen in Resonanz, nämlich mit einer der momentanen Eigenfrequenz, $f_1$, des Schwingungsmodes erster Ordung entsprechenden Schwingungsfrequenz, $f_{drv,I} = f_1$, ausführt.

Nicht zuletzt für den erwähnten Fall, daß das mittels des Meßwandlers schlußendlich gebildete Meßsystem zur Messung des Massendurchflusses verwendet werden soll, kann es von besonderem Vorteil sein, wenn das wenigstens eine Meßrohr 10 im Betrieb mittels der Erregeranordnung zumindest zeitweise in einem Nutzmode aktiv angeregt ist, in dem es, insb. überwiegend oder ausschließlich, Biegeschwingungen um seine Ruhelage ausführt, und zwar überwiegend mit genau einer natürlichen Eigenfrequenz (Resonanzfrequenz), die einem Biegeschwingungsgrundmode erster Ordnung entspricht, in dem das wenigstens eine schwingende Meßrohr im Bereich seiner Nutz-Schwinglänge genau einen (Biege-) Schwingungsbauch aufweist. Ein Ziel einer Anregung des Biegeschwingungsgrundmode erster Ordnung bzw. dessen Verwendung als Nutzmode besteht also u.a. darin, mittels des wenigstens einen vibrierenden Meßrohrs im hindurchströmendem Medium ausreichend starke Corioliskräfte zu induzieren, so daß im Ergebnis eine zusätzliche, mithin einem Schwingungsmode höherer Ordnung der Rohranordnung - dem sogenannten Coriolismode - entsprechende Verformungen jedes der Meßrohre mit für die Messung ausreichenden Schwingungsamplituden bewirkt werden kann. Für den betriebsmäßig vorgesehenen Fall nämlich, daß das Medium in der Prozeßleitung strömt und somit der Massedurchfluß m von Null verschieden ist, werden mittels dieser Weise vibrierenden wenigstens einen Meßrohrs 10 im hindurchströmenden Medium auch Corioliskräfte induziert. Diese wiederum wirken auf das Meßrohr 10 zurück und bewirken so eine zusätzliche, sensorisch erfaßbare Verformung desselben, und zwar im wesentlichen gemäß einer weiteren natürlichen Eigenschwingungsform von höherer modaler Ordnung als der Nutzmode. Eine momentane Ausprägung dieses, dem angeregten Nutzmode gleichfrequent überlagerten Coriolismodes ist dabei, insb. hinsichtlich ihrer Amplituden, auch vom momentanen Massedurchfluß, m, abhängig, und kann, beispielsweise im Falle der Verwendung des Meßsystems als Coriolis-Massendurchflußmeßgerät, zur Ermittlung der Massendurchflußrate bzw. des totalisierten Massendurchflusses dienen.

Demnach ist nach einer weiteren Ausgestaltung der Erfindung Treibersignal zumindest zeitweise so ausgebildet, daß die Signalfrequenz, $s_{drv,I}$, von dessen Signalkomponente erster Art möglichst genau einer momentanen Eigenfrequenz eines natürlichen Biegeschwingungsmodes entspricht, nämlich dem Biegeschwingungsgrundmode, in dem das wenigstens eine vibrierende Meßrohr Biegeschwingungen um die Ruhelage ausführt, die im Bereich des ersten und zweiten Meßrohrendes jeweils einen Schwingungsknoten und im Bereich der Nutz-Schwinglänge genau einen Schwingungsbauch aufweisen, mithin das wenigstens eine Meßrohr, angeregt vom wenigstens einen Schwingungserreger, zumindest anteilig, insb. überwiegend, Biegeschwingungen in Resonanz ausführt, nämlich mit einer der momentanen Eigenfrequenz des nämlichen Biegeschwingungsmodes entsprechenden Schwingungsfrequenz. Bei einer Verwendung eines aus Edelstahl, insb. Hastelloy, gefertigten Meßrohrs mit einem Kaliber von 29 mm, einer Wandstärke s von etwa 1,5 mm, einer Nutz-Schwinglänge von etwa 420 mm und einer gesehnten Länge, gemessen zwischen den beiden Meßrohrenden, von 305 mm, würde die dem Biegeschwingungsgrundmode entsprechende Eigenfrequenz desselben beispielsweise bei einer Dichte von praktisch Null, z.B. bei lediglich mit Luft gefülltem Meßrohr, ungefähr 500 Hz betragen.

Im in den Fig. 4 und 5 gezeigten Ausführungsbeispiel mit mittels Meßrohr und Gegenschwinger gebildeten Innenteils führt das Meßrohr 10 die mittels der Erregeranordnung aktiv angeregten Biegeschwingungen überwiegend relativ zum Gegenschwinger 20 aus, insb. auf einer gemeinsamen Schwingfrequenz zueinander gegenphasig. Im Falle einer gleichzeitig, beispielsweise differentiell, sowohl auf Meßrohr als auch Gegenschwinger wirkenden Erregeranordnung wird dabei zwangsweise auch der Gegenschwinger 20 zu simultanen Auslegerschwingungen angeregt, und zwar so, daß er frequenzgleich, jedoch zumindest anteilig außerphasig, insb. im wesentlichen gegenphasig, zum im Nutzmode schwingenden Meßrohr 10 oszilliert. Im besonderen sind Meßrohr 10 und Gegenschwinger 20 dabei ferner so aufeinander abgestimmt bzw. so angeregt, daß sie im Betrieb zumindest zeitweise und zumindest anteilig gegengleiche, also gleichfrequente, jedoch im wesentlichen gegenphasige, Biegeschwingungen um die Längsachse L ausführen. Die Biegeschwingungen können dabei so ausgebildete sein, daß sie von gleicher modaler Ordnung und somit zumindest bei ruhendem Fluid im wesentlichen gleichförmig sind; im anderen Fall der Verwendung zweier Meßrohre sind diese, wie bei Meßwandlern der in Rede stehenden Art üblich, mittels der, insb. differentiell zwischen beiden Meßrohre 10, 10' wirkenden, Erregeranordnung aktiv so angeregt, daß sie im Betrieb zumindest zeitweise gegengleiche Biegeschwingungen um die Längsachse L ausführen. Anders gesagt, die beiden Meßrohre 10, 10' bzw. Meßrohr 10 und Gegenschwinger 20 bewegen sich dann jeweils nach der Art von gegeneinander schwingenden Stimmgabelzinken. Für diesen Fall ist gemäß einer weiteren Ausgestaltung der Erfindung der wenigstens einen elektro-mechanischen Schwingungserreger dafür ausgelegt, gegengleiche Vibrationen des ersten Meßrohrs und des zweiten Meßrohrs, insb. Biegeschwingungen jedes der Meßrohre um eine das jeweilige erste Meßrohrende und das jeweilige zweite Meßrohrende imaginär verbindende gedachte Schwingungsachse, anzuregen bzw. aufrechtzuerhalten. Als Coriolismode kann, wie bei derartigen Meßwandlern mit gekrümmtem Meßrohr üblich, z.B. die Eigenschwingungsform des anti-symmetrischen Twistmodes dienen, also jene, bei der das Meßrohr 10, wie bereits erwähnt, auch Drehschwingungen um eine senkrecht zur Biegeschwingungsachse ausgerichteten gedachten Drehschwingungsachse ausführt, die die Mittelinie des Meßrohrs 10 im Bereich der halben Schwingungslänge imaginär schneidet.

Für den erwähnten Fall, daß das wenigstens eine Meßrohr im wesentlichen gerade ist, kann die Signalfrequenz der Signalkomponente erster Art des Treibersignals $s_{drv}$ beispielsweise auch einer momentanen Eigenfrequenz eines natürlichen Torsionsschwingungsmodes, nämlich der des Torsionsschwingungsgrundmode, entsprechend eingestellt sein, in dem das wenigstens eine vibrierende Meßrohr Torsionsschwingungen um die Ruhelage, nämliche um eine das einlaßseitige erste Meßrohrende und das auslaßseitige zweite Meßrohrende imaginär verbindende gedachte Schwingungsachse ausführt, derart, daß nämliche Torsionsschwingungen, nicht zuletzt auch in für die Messung der Viskosität besonders günstiger Wiese, im Bereich des ersten und zweiten Meßrohrendes jeweils einen Schwingungsknoten und im Bereich der Nutz-Schwinglänge genau einen Schwingungsbauch aufweisen. Im Ergebnis dessen, führt also das wenigstens eine Meßrohr, angeregt vom wenigstens einen Schwingungserreger, dann zumindest anteilig, ggf. auch überwiegend, Torsionsschwingungen in Resonanz, nämlich mit einer der momentanen Eigenfrequenz des nämlichen Torsionsschwingungsmodes entsprechenden Schwingungsfrequenz, aus.

Zum Erfassen von Schwingungen des wenigstens einen Meßrohrs 10, nicht zuletzt auch den mittels des wenigstens eine Schwingungserregers aktiv angeregten Schwingungen, weist der Meßwandler ferner jeweils eine entsprechende Sensoranordnung 50 auf. Diese umfaßt, wie auch in den Fig. 4 bis 7 schematische dargestellt, einen - hier vom wenigstens einen Schwingungserreger beabstandet - am wenigstens einen Meßrohr 10 angeordneten, beispielsweise elektrodynamischen, ersten Schwingungssensor 51, der ein Vibrationen des Meßrohrs 10 repräsentierendes, als erstes Schwingungssignal $s_{sens1}$ des Meßwandlers dienendes, Sensorsignal liefert, beispielsweise einer mit den Schwingungen korrespondierende elektrische (Wechsel-)Spannung $u_{sens1}$ mit einer von einer momentanen Amplitude der Schwingungen des wenigstens Meßrohrs abhängigen Amplitude $U_{sens1}$ (Spannungshöhe). Das Schwingungssignal $s_{sens1}$ selbst kann grundsätzlich eine Vielzahl von hinsichtlich ihrer Signalfrequenz verschiedenen Signalkomponenten enthalten, nicht zuletzt auch solche, die mit den aktiv angeregten und insoweit erwünschten Schwingungen des wenigstens einen Meßrohrs korrespondieren. Demnach weist, wie in Fig. 8 schematisch angedeutet, das wenigstens eine Schwingungssignal $s_{sens1}$ beim erfindungsgemäßen Meßsystem, korrespondierend mit dem von der Umformer-Elektronik gelieferten Treibersignals bzw. den damit angetriebenen Schwingungen des wenigstens einen Meßrohrs, zumindest zeitweise auch eine sinusförmige Signalkomponente $s_{sens1,I}$ erster Art mit einer Signalfrequenz, $f_{sens,I}$, auf, die der Signalfrequenz, $f_{drv,I}$, der Signalkomponente $s_{drv,I}$ erster Art des Treibersignals $s_{drv}$, mithin der momentanen Eigenfrequenz, $f_1$, des demnach angeregten Schwingungsmodes erster Ordnung, beispielsweise also der momentanen Eigenfrequenz des Biegeschwingungsgrundmodes oder der momentanen Eigenfrequenz des erwähnten Torsionsschwingungsmodes, entspricht. Zumindest im Falle der Verwendung des Biegeschwingungsgrundmodes als aktive angeregter Schwingungsmode erster Ordnung weist die Signalkomponente $s_{sens1,I}$ erster Art des Schwingungssignals eine vom aktuellen Massendurchfluß des im wenigstens einen Meßrohr 10 strömenden Medium abhängigen Phasendifferenz relativ zur frequenzgleichen

Signalkomponente $s_{sens1,l}$ erster Art des Treibersignals $s_{drv}$ auf.

Nach einer Weiterbildung der Erfindung weist die Sensoranordnung ferner einen vom ersten Schwingungssensor 52 beabstandet am wenigstens einen Meßrohr 10 angeordneten, insb. elektrodynamischen, zweiten Schwingungssensor 52 auf, der ein ebenfalls Vibrationen des Meßrohrs 10 repräsentierendes, als zweites Schwingungssignal $s_{sens2}$ des Meßwandlers dienendes Sensorssignal liefert, das gleichermaßen wie das erste Sensorsignal eine Signals Komponente mit einer der Signalfrequenz, $f_{drv,l}$, der Signalkomponente $s_{drv,l}$ erster Art des Treibersignals $s_{drv}$ entsprechenden Signalfrequenz, zumindest im Falle der Verwendung einander baugleicher Schwingungssensoren im übrigen auch ein dem das erste Schwingungssignal vergleichbares Frequenzspektrum, aufweist. Eine Länge des sich zwischen den beiden, beispielsweise baugleichen, Schwingungssensoren erstreckenden, insb. im wesentlichen freischwingend vibrierenden, Bereichs des zugehörigen wenigstens einen Meßrohrs entspricht hierbei einer Meßlänge des jeweiligen Meßwandlers. In den hier gezeigten Ausführungsbeispielen sind jeweils der erste Schwingungssensor 51 einlaßseitig und der zweite Schwingungssensor 52 auslaßseitig am wenigstens einen Meßrohr 10 angeordnet, insb. vom wenigstens einen Schwingungserreger bzw. von der Mitte des Meßrohrs 10 gleichweit beabstandet wie der erste Schwingungssensor. Wie bei derartigen, in als Coriolis-Massendurchfluß-Meßgerät ausgebildeten Meßsystemen verwendeten, Meßwandlern vom Vibrationstyp durchaus üblich, sind der erste Schwingungssensor 51 und der zweite Schwingungssensor 52 gemäß einer Ausgestaltung der Erfindung ferner jeweils auf einer vom Schwingungserreger 41 eingenommenen Seite des Meßrohrs im Meßwandler angeordnet. Desweiteren kann auch der zweite Schwingungssensor 52 auf der vom ersten Schwingungssensor 51 eingenommenen Seite des Meßrohrs im Meßwandler angeordnet sein. Die Schwingungssensoren 51, 52 der Sensoranordnung können in vorteilhafter Weise zudem so ausgebildet sein, daß sie Schwingungssignale $s_{sens1}$, $s_{sens2}$ gleichen Typs liefern, beispielsweise also jeweils eine Wechselspannung $u_{sense1}$, $u_{sens2}$. Gemäß einer weiteren Ausgestaltung der Erfindung sind sowohl der erste Schwingungssensor als auch der zweite Schwingungssensor ferner jeweils so im Meßwandler MW plaziert, daß jeder der Schwingungssensoren zumindest überwiegend Vibrationen des wenigstens einen Meßrohrs 10 erfaßt. Für den oben beschriebenen Fall, daß das Innenteil mittels eines Meßrohrs und eines mit diesem gekoppelten Gegenschwingers gebildet ist, sind nach einer weiteren Ausgestaltung der Erfindung sowohl der erste Schwingungssensor als auch der zweite Schwingungssensor so ausgebildet und so im Meßwandler plaziert, daß jeder der Schwingungssensoren überwiegend Schwingungen des Meßrohrs relativ zum Gegenschwinger, beispielsweise differentiell, erfassen, daß also sowohl das erste Schwingungssignal $s_{sens1}$ als auch das zweite Schwingungssignal $s_2$, insb. gegengleiche, Schwingungsbewegungen des wenigstens einen Meßrohrs 10 relativ zum Gegenschwinger 20 repräsentieren. Für den anderen beschriebenen Fall, daß das Innenteil mittels zweier, insb. im Betrieb gegengleich schwingender, Meßrohre gebildet ist, sind nach einer anderen Ausgestaltung der Erfindung sowohl der erste Schwingungssensor als auch der zweite Schwingungssensor so ausgebildet und so im Meßwandler plaziert, daß jeder der Schwingungssensoren überwiegend Schwingungen des ersten Meßrohrs 10 relativ zum zweiten Meßrohr 10', beispielsweise differentiell, erfassen, daß also sowohl das erste Schwingungssignal $s_{sens1}$ als auch das zweite Schwingungssignal $s_{sens2}$, insb. gegengleiche, Schwingungsbewegungen der zwei Meßrohre relativ zueinander repräsentieren, insb. derart daß - wie bei konventionellen Meßwandlern üblich - das mittels des ersten Schwingungssensors erzeugte erste Schwingungssignal einlaßseitige Vibrationen des ersten Meßrohrs relativ zum zweiten Meßrohr und das mittels des zweiten Schwingungssensors erzeugte zweite Schwingungssignal auslaßseitige Vibrationen des ersten Meßrohrs relativ zum zweiten Meßrohr repräsentieren. Gemäß einer weiteren Ausgestaltung der Erfindung ist ferner vorgesehen, daß die Sensoranordnung genau zwei Schwingungssensoren, also zusätzlich zum ersten und zweiten Schwingungssensor keine weiteren Schwingungssensoren, aufweist und insoweit hinsichtlich der verwendeten Komponenten konventionellen Sensoranordnungen für Meßwandler der in Rede stehenden Art entspricht.

Es sei an dieser Stelle zudem noch angemerkt, daß, obgleich es sich bei den Schwingungssensoren der im Ausführungsbeispiel gezeigten Sensoranordnung 19 jeweils um solche vom elektrodynamischen Typ, also jeweils mittels einer an einem der Meßrohre fixierten zylindrischen Magnetspule und einem darin eintauchenden, an einem gegenüberliegenden Meßrohr entsprechend fixierten Permanentmagneten realisierte Schwingungssensoren, handelt, ferner durchaus auch andere dem Fachmann bekannte, wie z.B. opto-elektronische, Schwingungssensoren zur Bildung der Sensoranordnung verwendet werden können. Im übrigen können, wie bei Meßwandlern der in Rede stehenden Art durchaus üblich, zusätzlich zu den Schwingungssensoren weitere, insb. Hilfs- bzw. Störgrößen erfassende, Sensoren im Meßwandler vorgesehen sein, wie z.B. Beschleunigungssensoren zum Erfassen von durch äußere Kräfte und/oder Asymmetrien in der Rohranordnung verursachte Bewegungen des gesamten Meßsystems, Dehnungsmeßstreifen zum Erfassen von Dehnungen eines oder mehrerer der Meßrohre und/oder des Aufnehmergehäuses, Drucksensoren zum Erfassen eines im Aufnehmergehäuse herrschenden statischen Drucks und/oder Temperatursensoren zum Erfassen von Temperaturen eines oder mehrerer der Meßrohre und/oder des Aufnehmergehäuses, mittels denen beispielsweise die Funktionstüchtigkeit des Meßwandlers und/oder Änderungen der Empfindlichkeit des Meßaufnehmers auf die primär zu erfassenden Meßgrößen, insb. die Massendurchflußrate und/oder die Dichte, infolge von Querempfindlichkeiten bzw. äußeren Störungen überwacht und ggf. entsprechend kompensiert werden können.

Die Sensoranordnung 19 ist ferner, wie bei derartigen Meßwandlern üblich, in geeigneter Weise mit einer in der Umformer-Elektronik entsprechend vorgesehenen, beispielsweise mittels wenigstens einem Mikroprozessors und/oder mittels wenigstens einem digitalen Signalprozessor gebildete, Meßschaltung gekoppelt, beispielsweise drahtgebunden via Verbindungsleitungen. Das wenigstens eine von der Sensoranordnung, mithin vom Meßwandler gelieferte Schwingungssignal ist, wie auch in Fig. 3 gezeigt, der Umformer-Elektronik ME und daselbst dann der darin vorgesehenen Meß- und Auswerteschaltung μC zugeführt, wo sie mittels einer entsprechenden Eingangsschaltung FE zunächst vorverarbeitet, insb. vorverstärkt, gefiltert und digitalisiert werden, um anschließend geeignet ausgewertet werden zu können. Die Meßschaltung empfängt die Schwingungssignale der Sensoranordnung 19 und generiert daraus, insb. auch der in dem wenigstens einen Schwingungssignale bzw. den Schwingungssignalen enthalten Signalkomponente erster Art die eingangs erwähnten Meßwerte, die beispielsweise eine Massedurchflußrate, einen totalisierten Massendurchfluß und/oder eine Dichte und/oder eine Viskosität des zu messenden Mediums repräsentieren; dies ggf. auch unter Berücksichtigung mittels des wenigstens einen Treibersignals, insb. deren Signalkomponente erster Art in die Erregeranordnung eingespeister, mithin auch darin umgesetzter elektrischer Erregerleistung. Als Eingangsschaltung FE wie auch als Meß- und Auswerteschaltung μC können hierbei in herkömmlichen Coriolis-Massedurchfluß-Meßgeräten zwecks Konvertierung der Schwingungssignale verwendete bzw. Ermittlung von Massendurchflußraten und/oder totalisierten Massendurchflüssen etc. bereits eingesetzte und etablierte Schaltungstechnologien angewendet werden, beispielsweise auch solche gemäß den eingangs erwähnten Stand der Technik. Nach einer weiteren Ausgestaltung der Erfindung ist die Meß- und Auswerteschaltung μC dementsprechend auch mittels eines in der Umformer-Elektronik ME vorgesehenen, beispielsweise mittels eines digitalen Signalprozessors (DSP) realisierten, Mikrocomputers und mittels in diesen entsprechend implementierter und darin ablaufender Programm-Codes realisiert. Die Programm-Codes können z.B. in einem, ggf. der Speicherung von mittels des Meßsystems generierten Meßwerten über einen längeren Zeitraum dienenden, nicht-flüchtigen Datenspeicher EEPROM des Mikrocomputers persistent gespeichert sein und beim Starten desselben in einen, z.B. im Mikrocomputer integrierten, flüchtigen Datenspeicher RAM geladen werden. Gleichermaßen können mittels der Umformer-Elektronik im Betrieb generierte Meßwerte in einen solchen, ggf. auch denselben, flüchtigen Datenspeicher RAM geladen und für eine spätere Weiterverarbeitung entsprechend vorgehalten werden. Für derartige Anwendungen geeignete Prozessoren sind z.B. solche vom Typ TMS320VC33, wie sie von der Firma Texas Instruments Inc. am Markt angeboten werden. Es versteht sich dabei praktisch von selbst, daß das wenigstens eine Schwingungssignal bzw. die Schwingungssignale $s_{sense1}$, $s_{sense2}$ wie bereits angedeutet, für eine Verarbeitung im Mikrocomputer mittels entsprechender Analog-zu-digitalWandler A/D der Umformer-Elektronik ME in entsprechende Digitalsignale umzuwandeln sind, vgl. hierzu beispielsweise die eingangs erwähnten US-B 63 11 136 oder US-A 60 73 495 oder auch vorgenannten Meßumformer der Serie "PROMASS 83". Desweiterene können die Meßwerte, wie bereits erwähnt, vor Ort angezeigt und/oder auch an ein dem Meßsystem übergeordnetes Datenverarbeitungssystem inform digitaler Meßdaten gesendet und daselbst entsprechend weiterverarbeitet werden.

Die Umformer-Elektronik 12, einschließlich der darin realisierten Meß- und Betriebsschaltung, kann desweiteren beispielsweise in einem separaten Elektronik-Gehäuse $7_2$ untergebracht sein, das vom Meßwandler entfernt angeordnet oder, wie in Fig. 1 gezeigt, unter Bildung eines einzigen Kompaktgeräts direkt am Meßwandler 1, beispielsweise von außen am Aufnehmer-Gehäuse $7_1$, fixiert ist. Bei dem hier gezeigten Ausführungsbeispiel ist daher am Aufnehmer-Gehäuse $7_1$ ferner ein dem Haltern des Elektronik-Gehäuses $7_2$ dienendes halsartiges Übergangsstücks angebracht. Innerhalb des Übergangsstücks kann ferner eine, beispielsweise mittels Glas- und/oder Kunststoffverguß hergestellte, hermetisch dichte und/oder druckfeste Durchführung für die elektrische Verbindungsleitungen zwischen Meßwandler 11, insb. den darin plazierten Schwingungserregern und Sensoren, und der erwähnten Umformer-Elektronik 12 angeordnet sein.

Die Umformer-Elektronik dient gemäß einer weiteren Ausgestaltung der Erfindung im ferner dazu unter Verwendung der von der Sensoranordnung 50 gelieferten Schwingungssignale $s_1$, $s_2$, beispielsweise anhand einer zwischen den bei anteilig in Nutz- und Coriolismode schwingendem Meßrohr 10 generierten Schwingungssignalen $s_1$, $s_2$ des ersten und zweiten Schwingungssensors 51, 52 detektierten Phasendifferenz, wiederkehrend einen Massendurchfluß-Meßwert $X_m$ zu ermitteln, der die zu messenden Massendurchflußrate, m, des durch den Meßwandler geführten Mediums möglichst genau repräsentiert. Dafür erzeugt die Meß- und Auswerte-Schaltung gemäß einer weiteren Ausgestaltung der Erfindung im Betrieb wiederkehrend einen Phasendifferenz-Meßwert, der die zwischen der Signalkomponente erster Art des ersten Schwingungssignal $s_1$ und Signalkomponente erster Art des zweiten Schwingungssignals $s_2$ existierenden Phasendifferenz, $\Delta\varphi$, momentan repräsentiert. Die Berechnung des Massendurchfluß-Meßwert $X_m$ kann, unter Verwendung der gleichfalls in der Umformer-Elektronik vorgehaltenen Signalfrequenz der Signalkomponente erster Art des Treiber- bzw. des wenigstens eine Sensorsignals somit beispielsweise basierend auf basierend der bekannten Beziehung:

$$\frac{\Delta\varphi}{f_{drv,l}} \sim m \rightarrow X_m$$

erfolgen. Ferner dient die Meß- und Auswerte-Schaltung des erfindungsgemäßen Meßsystems dient gemäß einer weiteren Ausgestaltung der Erfindung dazu, abgeleitet von der durch die momentane Signalfrequenz der Signalkomponente erster Art des Treiber- bzw. des wenigstens eine Sensorsignals repräsentierte momentane Eigenfrequenz in dem Fachmann an und für sich bekannter Weise zusätzlich einen die Dichte des Mediums repräsentirenden Dichte-Meßwert $X_\rho$ zu generieren, beispielsweise basierend auf der bekannten Beziehung:

$$\frac{1}{f_{drv,I}^2} \sim \rho \rightarrow X_\rho.$$

Alternativ oder in Ergänzung dazu kann die Auswerteschaltung wie bei Meßsystemen der in Rede stehenden Art durchaus üblich ggf. auch dazu verwendet werden, einen Viskositäts-Meßwert $X_\eta$ zu ermitteln, vgl. hierzu auch die eingangs erwähnten US-B 72 84 449, US-B 70 17 424, US-B 69 10 366, US-B 68 40 109, US-A 55 76 500 oder US-B 66 51 513. Zur Ermittlung der zum Bestimmen der Viskosität erforderlichen Erregerenergie oder Erregerleistung bzw. Dämpfung eignet sich dabei beispielsweise das von Treiberschaltung der Umformer-Elektronik gelieferte Treibersignal, etwa Amplitude und Signalfrequenz von dessen Signalkomponente erster Art oder auch eine Amplitude des gesamten, ggf. auch auf eine anhand wenigstens eines der Schwingungssignale ermittelte Schwingungsamplitude normierten Treibersignals, insb. dessen Strom. Alternativ oder in Ergänzung dazu kann aber auch ein dem Einstellen der Signalkomponente erster Art des Treibersignals dienendes internes Steuersignal oder, beispielsweise im Falle einer Anregung der Vibrationen des wenigstens einen Meßrohrs mit einem Erregerstrom von fest vorgegebener bzw. auf konstant geregelter Amplitude, auch wenigstens eines der Schwingungssignale, insb. eine Amplitude von dessen Signalkomponente erster Art, als ein Maß der für die Ermittlung des Viskositäts-Meßwerts erforderlichen Erregerenergie oder Erregerleistung bzw. Dämpfung dienen.

Wie bereit erwähnt, kann bei Meßsystem der in Rede stehenden Art das wenigstens eine Meßrohr vielfältigen Belastungen ausgesetzt sein und insoweit während der gesamten Laufzeit des Meßsystems in kaum oder überhaupt nicht vorsehbarer Weise derart verändert werden, das im Ergebnis eine dem Meßwandler, mithin dem damit gebildeten Meßsystem, immanente Meßwandler-Übertragungsfunktion, gemäß der der Meßwandler das Treibersignal, etwa einen im wenigstens einen Schwingungserreger fließenden Strom $i_{drv}$ oder eine diesen treibende Spannung $u_{drv}$, in das wenigstens einen Schwingungssignal $s_{sens1}$, etwa eine mittels des wenigstens einen Schwingungssensors generierten, als Schwingungssignal $s_{sens1}$ dienenden Spannung $u_{sens1}$ konvertiert, über die Laufzeit des Meßsystems von einer dafür vorab in einem Referenzzustand des Meßwandlers bzw. des Meßsystems, etwa bei einer Kalibrierung und/oder bei einer Inbetriebnahme des Meßsystems und/oder bei einem nachträglichen Abgleich des installierten Meßsystems, ermittelten ursprünglichen Meßwandler-Übertragungsfunktion in erheblichem Maße abweichen kann. Infolge einer solche Änderung der Meßwandler-Übertragungsfunktion ändert sich schlußendlich auch eine Meßsystem-Übertragungsfunktion, gemäß der das Meßsystem den zu erfassenden Mediumsparameter in den entsprechenden Meßwert abbildet und sinkt somit auch die Meßgenauigkeit, mit der das Meßsystem die oben erwähnten fürderhin Meßwerte erzeugt, im Vergleich zur ursprünglichen viel höheren Meßgenauigkeit. Ursachen solcher Veränderungen können beispielsweise thermische oder mechanische Überbelastungen, wie etwa auf den Meßwandler einwirkende Thermoschocks, Übertemperaturen und/oder-drücke, von der angeschlossenen Prozeßleitung auf den Meßwandler ausgeübte erhöhte Einspann- und/oder Rüttelkräfte oder durch das im wenigstens einen Meßrohr strömende Medium bewirkte Erodierungen des Meßrohrs, nämlich Abrasions- und/oder Korrosionserscheinungen oder Bildung eines auf einer das zu messende Medium im Betrieb kontaktierenden Innenseite des Meßrohrs haftenden Belags etc., sein. Infolge dessen können am Meßrohr beispielsweise Deformationen, Materialabtragungen, Rißbildungen, Materialermüdungen oder andere, die strukturelle Integrität des Meßwandlers, mithin die die Betriebssicherheit des gesamten Meßsystems herabsetzende bzw. das Meßsystems schneller altern lassende, Erscheinungen auftreten. Solche, letztlich die Meßgenauigkeit herabsetzenden Alterungserscheinungen können beispielsweise darin begründet sein, daß sich ein Schwingungsverhalten des wenigstens einen Meßrohrs, mithin dessen natürliche Schwingungsmoden, eine elektrische Impedanz des wenigstens einen Schwingungssensors, eine elektrische Impedanz des wenigstens einen Schwingungserregers, eine Wandlerkonstante des wenigstens einen Schwingungserregers, gemäß der dieser das Treibersignal in eine entsprechende Erregerkraft wandelt, und/oder eine Wandlerkonstante des wenigstens einen Schwingungssensors, gemäß der dieser Schwingungsbewegungen des wenigstens eine Meßrohrs in das entsprechende Schwingungssignals wandelt, irreversible verändern.

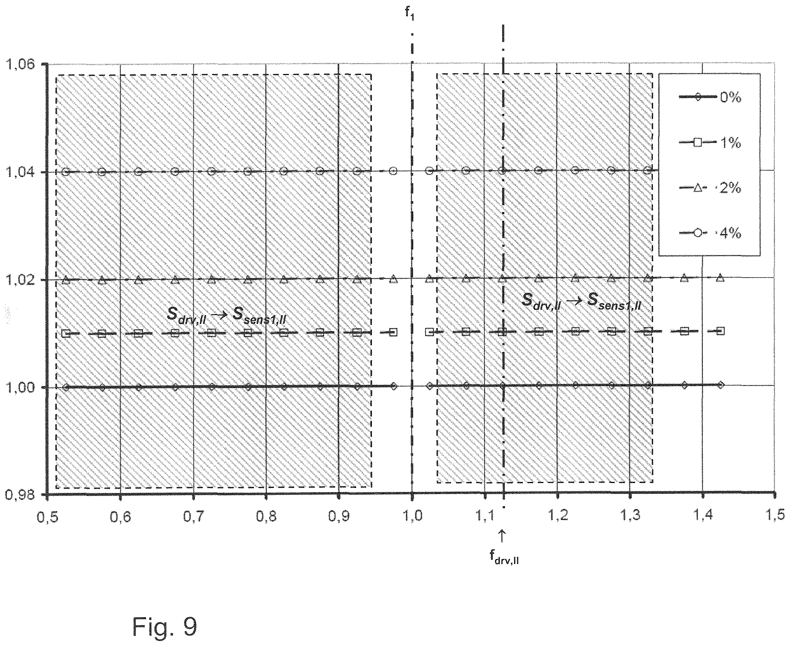

Dem Rechnung tragend dient beim erfindungsgemäßen Meßsystem die Umformer-Elektronik ME im besonderen, nicht zuletzt zwecks wiederkehrender Durchführung einer Systemdiagnose auch während des laufenden Meßtriebs, dazu, im Betrieb, nämlich zu einem Zeitpunkt $t_i$, eine, etwa infolge von Überbelastungen der vorgenannten Art verursachte, Abweichung des Meßsystems von einem dafür vorab, nämlich zu einem Zeitpunkt $t_{Ref}$, - beispielsweise also bei einer Kalibrierung und/oder bei einer Inbetriebnahme des Meßsystems mit einem Medium von bekannter Temperatur und Dichte - ermittelten Referenzzustand zu detektieren und ggf. mittels einer entsprechenden, beispielsweise visuell und/oder akustisch wahrnehmbaren, Systemstatusmeldung $Sys_{fail}$ zu signalisieren, etwa inform eines Alarmes. Dafür ist die Umformer-Elektronik ferner so eingerichtet, daß das mittels der Umformer-Elektronik generierte Treibersignal $s_{drv}$, wie in Fig. 8 schematisch angedeutet, zumindest zeitweise eine, ggf. auch hinsichtlich einer Signalleistung momentan dominierende und/oder mehrere Schwingungsperioden umfassende, sinusförmige Signalkomponente $s_{drv,II}$ zweiter Art mit einer Signalfrequenz, $f_{drv,II}$, aufweist, die von jeder momentanen Eigenfrequenz jedes natürlichen Schwingungsmodes des wenigstens einen Meßrohrs jeweils um mehr als 1Hz, möglichst auch mehr als 5Hz, und/oder um mehr als 1%, möglichst mehr als 10%, nämlicher Eigenfrequenz, abweicht. Angeregt vom wenigstens einen mit nämlichem, die Signalkomponente $s_{drv,II}$ zweiter Art umfassenden Treibersignal gespeisten Schwingungserreger 41 führt das wenigstens eine Meßrohr somit zumindest anteilig erzwungene Schwingungen außer Resonanz aus und weist das wenigstens eine Schwingungssignal $s_{sens1}$ gleichermaßen zumindest zeitweise eine sinusförmige Signalkomponente $s_{sens1,II}$ zweiter Art mit einer Signalfrequenz, $f_{sens,II}$, auf, die der Signalfrequenz, $f_{drv,II}$, der Signalkomponente $s_{drv,II}$ zweiter Art des Treibersignals $_{drv}$, mithin keiner momentanen Eigenfrequenz irgendeines natürlichen Schwingungsmodes des wenigstens einen Meßrohrs entspricht. Hierbei ist es ohne weiteres auch möglich, das Treibersignal in der Weise mittels der Umformer-Elektronik zu generieren, daß es die Signalkomponente erster Art und die Signalkomponente zweiter Art gleichzeitig aufweist, wodurch das wenigstens eine Meßrohr, angeregt vom wenigstens einen Schwingungserreger, gleichzeitig sowohl anteilig Schwingungen in Resonanz, nämlich mit einer der momentanen Eigenfrequenz, $f_1$, des Schwingungsmodes erster Ordnung entsprechenden Schwingungsfrequenz, $f_{drv,I} = f_1$, als auch anteilig erzwungene Schwingungen außer Resonanz ausführt.; falls erforderlich kann das Treibersignal die Signalkomponente erster Art aber auch alternierend zur Signalkomponente zweiter Art aufweisen. Für den Fall, daß beispielsweise beim wenigstens einen Meßrohr des Meßwandlers im Betrieb eine Materialabtragung, mithin eine Reduzierung von dessen Wandstärke zu verzeichnen wäre, würde das in der Fig. 8 schematisch dargestellte Frequenzspektrum des wenigstens eine Meßrohrs im innerhalb des mittels der Signalkomponente zweiter Art des Treibersignals angefahrene Frequenzbereich, mithin die dementsprechend generierte Signalkomponente zweiter Art des Schwingungssignals, beispielsweise den in Fig. 9 schematisch dargestellten, anhand von Labormessungen an einem Meßrohr, von dem die Wandstärke sukzessive um bis zu 4% verringert wurde, aufweisen. Deutlich erkennbar ist hierbei der nahezu lineare Zusammenhang zwischen der Schwingungsamplitude der Schwingungen des Meßrohrs außer Resonanz, mithin der Signalamplitude der Signalkomponente zweiter Art des Schwingungssignals bzw. des Treibersignals, und der zum jeweiligen Meßzeitpunkt momentanen Wandstärke des wenigstens einen Meßrohrs. Falls erforderlich, etwa zwecks einer weiteren Verbesserung der Verläßlichkeit der Diagnose bzw. zwecks einer möglichst genauen Messung der aktuellen (Rest-) Wandstärke des wenigstens eine Meßrohrs, kann es gelegentlich von Vorteil sein, die bei den hier vorliegenden Messungen vernachlässigte geringfügige, nahezu lineare Abhängigkeit der Schwingungsamplitude der Schwingungen des Meßrohrs auch von der üblicherweise ohnehin gemessenen Mediums- bzw. Meßrohrtemperatur und/oder der ohnehin gemessenen Mediumsdichte, p, entsprechend zu kompensieren.

Nach einer weiteren Ausgestaltung der Erfindung ist, nicht zuletzt auch bei Verwendung eines elektrodynamischen Schwingungserregers und/oder -sensors, ferner vorgesehen, daß die Signalfrequenz, $f_{drv,II}$, der Signalkomponente $s_{drv,II}$ zweiter Art des Treibersignals stets größer als 10Hz eingestellt ist bzw. daß nämliche Signalfrequenz, $f_{drv,II}$ größer als ein 0.1-faches der momentanen Eigenfrequenz des Schwingungsmodes erster Ordnung ist. In Ergänzung dazu ist erfindungsgemäß vorgesehen, nicht zuletzt auch zwecks einer sicheren Vermeidung bzw. Unterdrückung allfälliger Anregungen von Schwingungen in Resonanz, etwa infolge von Fehlern bei der in der Treiberschaltung tatsächlich implementierten Frequenz-Regelung, das Treibersignal mittels der Umformer-Elektronik so zu konditionieren, daß die Signalfrequenz $f_{drv,II}$ von dessen Signalkomponente zweiter Art $s_{drv,II}$ mehr als einem 1.01-fachen, möglichst aber auch mehr als einem 1.15-fachen, und weniger als einem 2.7-fachen, möglichst aber auch weniger als einem 2.4-fachen, einer momentanen Eigenfrequenz, $f_1$, des Schwingungsmodes erster Ordnung entspricht, mithin das wenigstens eine Meßrohr so aktiv anzuregen, daß es die erzwungenen Schwingungen außer Resonanz mit einer in einem entsprechenden Frequenzbereich, $| 1.01 \cdot f_1 < f_{drv,II} < 2.7 \cdot f_1 |$, oberhalb des 1.01-fachen bzw. oberhalb des 1.15-fachen, und unterhalb des 2.7-fachen bzw. unterhalb des 2.4-fachen, der momentanen Eigenfrequenz, $f_1$, des Schwingungsmodes erster Ordnung liegenden Schwingungsfrequenz ausführt, und die Signalfrequenz der zweiten Signalkomponente $s_{sens1,II}$ des Schwingungssignals $s_{sens1}$ gleichermaßen oberhalb des 1.01-fachen bzw. oberhalb des 1.15-fachen, und unterhalb des 2.7-fachen bzw. unterhalb des 2.4-fachen, der momentanen Eigenfrequenz, $f_1$, des Schwingungsmodes erster Ordnung liegt. Die Verwendung einer Signalfrequenz innerhalb des vorgenannten engen Frequenzbereich oberhalb des 1.15- und unterhalb des 2.4-fachen der momentanen Eigenfrequenz, $f_1$, hat sich insoweit als für die daraus abgeleitete Systemdiagnose erwiesen, als daselbst die oben erwähnten Abhängigkeiten, oder auch Querempfindlichkeiten, der Amplitude der Meßrohrschwingungen bzw. der Schwingungsmeßsignale von der Mediums- bzw. Meßrohrtemperatur wie auch der Dichte, p, des Mediums sehr gering ausfällt und insoweit eine Varianz der Amplitude trotz vergleichsweise nennenswert schwankender Dichte und/oder Temperatur durchaus vernachlässigbar klein sein kann. Alternativ oder in Ergänzung dazu ist gemäß einer anderen Ausgestaltung der Erfindung die Signalfrequenz $f_{drv,II}$ der Signalkomponente zweiter Art $s_{drv,II}$ des Treibersignals mittels der Umformer-Elektronik so eingestellt, daß nämliche Signalfrequenz $f_{drv,II}$ kleiner als eine momentane Eigenfrequenz, $f_2$, eines Schwingungsmodes zweiter Ordnung des wenigstens einen Meßrohrs ist, in dem das wenigstens eine vibrierende Meßrohr Schwingungen um eine Ruhelage ausführen kann bzw. ausführt, die im Bereich des ersten und zweiten Meßrohrendes jeweils einen Schwingungsknoten und im Bereich der Nutz-Schwinglänge einen weiteren Schwingungsknoten sowie genau zwei Schwingungsbäuche aufweisen, so daß also im Ergebnis das wenigstens eine Meßrohr die erzwungenen Schwingungen außer Resonanz, in einem Frequenzbereich, $| f_{drv,II} < f_2 |$, der unterhalb der momentane Eigenfrequenz des -dem erwähnten Coriolismode entsprechenden - Schwingungsmodes zweiter Ordnung liegt, ausführt, und das wenigstens eine Schwingungssignal zumindest zeitweise eine Signalkomponente zweiter Art mit einer Signalfrequenz aufweist, die unterhalb der momentane Eigenfrequenz des Schwingungsmodes zweiter Ordnung liegt.

Das Einstellen der tatsächlich gewünschten Signalfrequenz der Signalkomponente zweiter Art des Treibersignals kann beispielsweise nach einem, etwa seitens des Herstellers, fest vorgegeben Frequenz-Verhältnis oder aber mehrstufig, als durch das gezielte Anfahren verschiedener Signalfrequenzen, erfolgen, etwa derart, daß die Umformer-Elektronik die Signalfrequenz der Signalkomponente zweiter Art des Treibersignals, beginnend bei einem dafür vorgegebenen Startwert innerhalb des vorgenannten Frequenzbereichs, $| 1.01 \cdot f_1 < f_{drv,II} < 2.7 \cdot f_1 |$, bis zum Erreichen eines für die Signalfrequenz vorgegebenen Endwerts innerhalb nämlichen Frequenzbereichs schrittweise um einen vorgebbaren Betrag erhöht oder schrittweise um einen vorgebbaren Betrag verringert bzw. daß die Umformer-Elektronik die Signalfrequenz der Signalkomponente zweiter Art des Treibersignals beginnend bei einem dafür vorgegebenen Startwert innerhalb des vorgenannten Frequenzbereichs $| 1.01 \cdot f_1 < f_{drv,II} < 2.7 \cdot f_1 |$, bis zum Erreichen eines für die Signalfrequenz vorgegebenen Endwerts innerhalb nämlichen Frequenzbereichs linear erhöht oder linear verringert, oder daß die Umformer-Elektronik nämliche Signalfrequenz abwechselnd linear erhöht bzw. linear verringert.

Erfindungsgemäß ist die Umformer-Elektronik ME ferner dafür vorgesehen und eingerichtet, im Betrieb mittels der Signalkomponente $s_{drv,II}$ zweiter Art des Treibersignals $s_{drv}$ und mittels der Signalkomponente $s_{sens1,II}$ zweiter Art des wenigstens einen Schwingungssignals $s_{sens1}$ - beispielsweise auch wiederkehrend - zu überprüfen bzw. detektieren, ob und/oder inwieweit das Meßsystem im Vergleich zu dem erwähnten vorab, etwa bei einer Kalibrierung und/oder bei einer Inbetriebnahme des Meßsystems, ermittelten Referenzzustand abweicht. Als eine Maß für eine derartige Abweichung kann in vorteilhafter Weise ein basierend auf der Signalkomponente $s_{drv,II}$ zweiter Art des Treibersignals $s_{drv}$ und der Signalkomponente $s_{sens1,II}$ zweiter Art des wenigstens einen Schwingungssignals $s_{sens1}$ ermittelter Systemparameter-Meßwert, $G_{ME,ti}$, dienen, anhand dem, eine aktuelle, nämlich zum Zeitpunkt $t_i$ wirkende, Meßwandler-Übertragungsfunktion ermittelbar ist, gemäß der der Meßwandler das Treibersignal $s_{drv}$, mithin dessen Signalkomponente $s_{drv,II}$ zweiter Art, beispielsweise also einen im wenigstens einen Schwingungserreger fließenden, als Signalkomponente $s_{drv,II}$ zweiter Art des Treibersignals $s_{drv}$ dienenden Strom $i_{drv,II} \rightarrow s_{drv,II}$ oder eine diesen treibende, als Signalkomponente $s_{drv,II}$ zweiter Art des Treibersignals $s_{drv}$ dienende Spannung $u_{drv,II} \rightarrow s_{drv,II}$, in das wenigstens eine Schwingungssignal, mithin dessen Signalkomponente $s_{sens1,II}$ zweiter Art, beispielsweise also eine mittels des wenigstens einen Schwingungssensors generierten, als Signalkomponente $s_{sens1,II}$ zweiter Art des Schwingungssignals $s_{sens1}$ dienenden Spannung $u_{sens1,II}$, konvertiert. Alternativ oder in Ergänzung die vorgenannte Abweichung auch anhand eines Satzes von Meßwerten für das Meßsystem gleichermaßen charakterisierenden anderen Systemparametern, $g_{ME}$, ermittelt werden, anhand denen nämliche Meßwandler-Übertragungsfunktion im Betrieb entsprechend rekonstruiert werden kann. Ein die Meßwandler-Übertragungsfunktion entsprechend repräsentierender Systemparameter, $g_{ME}$, kann beispielsweise ein - naturgemäß einen Real- und einen Imaginärteil aufweisendes komplexes - Verhältnis, $u_{sens1,II}/i_{drv,II}$, der mittels des wenigstens einen Schwingungssensors generierten, als Signalkomponente zweiter Art des Schwingungssignals $s_{sens1}$ dienenden Spannung $u_{sens1,II} \rightarrow s_{sens1,II}$ zu dem im wenigstens einen Schwingungserreger fließenden, als Signalkomponente $s_{drv,II}$ zweiter Art des Treibersignals $s_{drv}$ dienenden Strom $i_{drv,II} \rightarrow s_{drv,II}$, oder beispielsweise auch ein - ebenfalls einen Real- und einen Imaginärteil aufweisendes komplexes - Verhältnis, $u_{sens1,II}/u_{drv,II}$, nämlicher Spannung $u_{sens1,II} \rightarrow s_{sens1,II}$ zu der den im wenigstens einen Schwingungserreger fließenden Strom treibenden, als Signalkomponente zweiter Art des Treibersignals $s_{drv}$ dienenden Spannung $u_{drv,II} \rightarrow s_{drv,II}$ sein.

Demnach können als solche, letztlich vorgenannte Meßwandler-Übertragungsfunktion repräsentierende, mithin den momentanen Zustand des Meßsystems einem Vergleich mit dessen Referenzzustand zugänglich machende, Systemparameter-Meßwert, $G_{ME,ti} \rightarrow g_{ME,ti}$, eine Vielzahl von im Betrieb, nämlich zum Zeitpunkt $t_i$, ohne weiteres Meßsystem intern ermittelbaren Meßgrößen bzw. daraus abgeleitete Funktionswerte dienen, nämlich beispielsweise:

a) eine Phasendifferenz, $\Delta_{\varphi II} = G_{ME,ti}$, zwischen einer mittels des wenigstens einen Schwingungssensors generierten, als Signalkomponente zweiter Art des Schwingungssignals $s_{sens1}$ dienenden, Spannung $u_{sens1,II} \rightarrow s_{sens1,II}$ und einem im wenigstens einen Schwingungserreger fließenden, als Signalkomponente zweiter Art des Treibersignals $s_{drv}$ dienenden Strom $i_{drv,II} \rightarrow s_{drv,II}$; und/oder

b) eine Phasendifferenz, $\Delta \varphi_{II}\big|_{t_i} = G_{ME,ti}$ , zwischen einer mittels des wenigstens einen Schwingungssensors generierten, als Signalkomponente zweiter Art des Schwingungssignals $s_{sens1}$ dienenden, Spannung $u_{sens1,II} \rightarrow s_{sens1,II}$ und einer den im wenigstens einen Schwingungserreger fließenden Strom treibenden, als Signalkomponente zweiter Art des Treibersignals $s_{drv}$ dienenden, Spannung $u_{drv,II} \rightarrow s_{drv,II}$; und/oder

c) ein Verhältnis,
$$\left.\frac{U_{sens1,II}}{I_{drv,II}}\right|_{t_i} = G_{ME,ti}$$
, einer Amplitude (Spannungshöhe) $u_{sens1,II}$ einer mittels des wenigstens einen Schwingungssensors generierten, als Signalkomponente zweiter Art des Schwingungssignals $s_{sens1}$ dienenden, Spannung $u_{sens1,II} \rightarrow s_{sens1,II}$ zu einer Amplitude (Stromstärke) $I_{drv,II}$ einer im wenigstens einen Schwingungserreger fließenden, als Signalkomponente $s_{drv,II}$ zweiter Art des Treibersignals $s_{drv}$ dienenden, Stroms $i_{drv,II} \rightarrow s_{drv,II}$; und/oder

d) ein Verhältnis,
$$\left.\frac{U_{sens1,II}}{U_{drv,II}}\right|_{t_i} = G_{ME,ti}$$
, einer Amplitude (Spannunghöhe) $u_{sens1,II}$ einer mittels des wenigstens einen Schwingungssensors generierten, als Signalkomponente zweiter Art des Schwingungssignals $s_{sens1}$ dienenden, Spannung $u_{sens1,II} \rightarrow s_{sens1,II}$ zu einer Amplitude (Spannunghöhe) $U_{drv,II}$ einer den im wenigstens einen Schwingungserreger fließenden Strom treibenden, als Signalkomponente zweiter Art des Treibersignals $s_{drv}$ dienenden, Spannung $u_{drv,II} \rightarrow s_{drv,II}$, bzw. nämliches Verhältnis, multipliziert mit einem eine für die Signalkomponente zweiter Art des Treibersignals wirksame elektrische Impedanz, $Z_{drv,II}$, des wenigstens einen Schwingungserregers repräsentieren Parameter-Meßwert,

$$\left.\frac{U_{sens1,II}}{U_{drv,II}} \cdot Z_{drv,II}\right|_{t_i} = G_{ME,ti};$$

und/oder

e) ein Funktionswert der Funktionsgleichung:

$$\left.\frac{\left(1 - \dfrac{f_{drv,II}{}^2}{f_{drv,I}{}^2}\right)}{f_{drv,II}} \cdot \frac{U_{sens1,II}}{I_{drv,II}}\right|_{t_i} = \left.\frac{\left(1 - \Omega^2\right)}{f_{drv,I} \cdot \Omega} \cdot \frac{U_{sens1,II}}{I_{drv,II}} \cdot \right|_{t_i} = G_{ME,ti}$$

und/oder

f) ein Funktionswert der Funktionsgleichung:

$$\left.\frac{\left(1 - \dfrac{f_{drv,II}{}^2}{f_{drv,I}{}^2}\right)}{f_{drv,II}} \cdot \frac{U_{sens1,II}}{U_{drv,II}} \cdot Z_{drv,II}\right|_{t_i} = \left.\frac{\left(1 - \Omega^2\right)}{f_{drv,I} \cdot \Omega} \cdot \frac{U_{sens1,II}}{U_{drv,II}} \cdot Z_{drv,II}\right|_{t_i} = G_{ME,ti};$$

und/oder

g) ein Funktionswert der Funktionsgleichung:

$$\frac{\left(1-\frac{f_{drv,II}^2}{f_{drv,I}^2}\right)}{f_{drv,II}}\cdot\frac{U_{sens1,II}}{I_{drv,II}}\Bigg|_{t_i}=\frac{\left(1-\Omega^2\right)}{f_{drv,I}\cdot\Omega}\cdot\frac{U_{sens1,II}}{I_{drv,II}}\Bigg|_{t_i}=G_{ME,ti}\;;$$

und/oder h) ein Funktionswert der Funktionsgleichung:

$$\frac{\left(1-\frac{f_{drv,II}^2}{f_{drv,I}^2}\right)}{f_{drv,II}}\cdot\frac{U_{sens1,II}}{U_{drv,II}}\cdot Z_{drv,II}\Bigg|_{t_i}=\frac{\left(1-\Omega^2\right)}{f_{drv,I}\cdot\Omega}\cdot\frac{U_{sens1,II}}{U_{drv,II}}\cdot Z_{drv,II}\Bigg|_{t_i}=G_{ME,ti}$$

dienen.

Um anhand solcher, den aktuellen Zustand des Meßsystems zum Zeitpunkt $t_i$ wiedergebenden Systemparameter-Meßwerten eine Diagnose des Meßsystem durchführen bzw. eine momentane Abweichung des Meßsystems von dessen Referenzzustand feststellen zu können, ist es erforderlich, für die jeweils zu verwendenden Systemparameter-Meßwerte entsprechende Systemparameter-Referenzwerte, die beispielsweise im Zuge einer Kalibrierung des Meßsystems im Herstellerwerk und/oder im Zuge der Inbetriebnahme des bereits in der Rohrleitung installierten Meßsystems passend ermittelt sind, in der Umformer-Elektronik entsprechend vorzuhalten. Dafür umfaßt die Umformer-Elektronik gemäß einer weiteren Ausgestaltung der Erfindung einen Datenspeicher für solche Meßwerte, die als einen Referenzzustand des Meßsystems, also das Meßsystem zum Zeitpunkt $t_{ref}$, repräsentierende Referenzwerte dienen. Als Datenspeicher für nämliche Referenzwerte kann beispielsweise der bereits erwähnte nicht-flüchtige Datenspeicher EEPROM dienen. In dem Datenspeicher ist eine den Referenzzustand des Meßsystems repräsentierender Referenzdatensatz vorgehalten Systemparameter-Referenzwerte für verschiedene Systemparameter umfaßt. Die Systemparameter-Referenzwerte können beispielsweise mittels des im Referenzzustand befindlichen Meßsystems selbst bzw. mittels des Medium von bekannter Temperatur führenden Meßwandlers erzeugte Meßwerte sein. Unter Berücksichtigung der oben genannten Systemparameter-Meßwerten kann der Referenzdatensatz beispielsweise mittels folgender Meß- bzw. daraus abgeleiteten Funktionswerten gebildet sein:

a) eine Phasendifferenz, $\Delta\varphi_{II} = G_{ME,t_{Ref}}$ , zwischen einer mittels des wenigstens einen Schwingungssensors generierten, als Signalkomponente zweiter Art des Schwingungssignals $s_{sens1}$ dienenden, Spannung $u_{sens1,II} \rightarrow s_{sens1,II}$ und einem im wenigstens einen Schwingungserreger fließenden, als Signalkomponente zweiter Art des Treibersignals $s_{drv}$ dienenden Strom $i_{drv,II} \rightarrow s_{drv,II}$;

b) eine Phasendifferenz, $\Delta\varphi_{II}\big|_{t_{Ref}} = G_{ME,t_{Ref}}$ , zwischen einer mittels des wenigstens einen Schwingungssensors generierten, als Signalkomponente zweiter Art des Schwingungssignals $s_{sens1}$ dienenden, Spannung $u_{sens1,II} \rightarrow s_{sens1,II}$ und einer den im wenigstens einen Schwingungserreger fließenden Strom treibenden, als Signalkomponente zweiter Art des Treibersignals $s_{drv}$ dienenden, Spannung $u_{drv,II} \rightarrow s_{drv,II}$;

c) ein Verhältnis, $\dfrac{U_{sens1,II}}{I_{drv,II}}\bigg|_{t_{Ref}} = G_{ME,t_{Ref}}$ , einer Amplitude (Spannungshöhe) $U_{sens1,II}$ einer mittels des wenigstens einen Schwingungssensors generierten, als Signalkomponente zweiter Art des Schwingungssignals $s_{sens1}$ dienenden, Spannung $u_{sens1,II} \rightarrow s_{sens1,II}$ zu einer Amplitude (Stromstärke) $I_{drv,II}$ einer im wenigstens einen Schwingungserreger fließenden, als Signalkomponente $s_{drv,II}$ zweiter Art des Treibersignals $s_{drv}$ dienenden, Stroms $i_{drv,II} \rightarrow s_{drv,II}$;

d) ein Verhältnis, $\dfrac{U_{sens1,II}}{U_{drv,II}}\bigg|_{t_{Ref}} = G_{ME,t_{Ref}}$ , einer Amplitude (Spannunghöhe) $u_{sens1,II}$ einer mittels des wenigstens einen Schwingungssensors generierten, als Signalkomponente zweiter Art des Schwingungssignals $s_{sens1}$ dienenden, Spannung $u_{sens1,II} \to s_{sens1,II}$ zu einer Amplitude (Spannunghöhe) $U_{drv,II}$ einer den im wenigstens einen Schwingungserreger fließenden Strom treibenden, als Signalkomponente zweiter Art des Treibersignals $s_{drv}$ dienenden, Spannung $u_{drv,II} \to s_{drv,II}$, bzw. nämliches Verhältnis, multipliziert mit einem eine für die Signalkomponente zweiter Art des Treibersignals wirksame elektrische Impedanz, $Z_{drv,II}$, des wenigstens einen Schwingungserregers repräsentieren Parameter-Meßwert,

$$\frac{U_{sens1,II}}{U_{drv,II}} \cdot Z_{drv,II} \bigg|_{t_{Ref}} = G_{ME,t_{Ref}} \; ;$$

e) ein Funktionswert der Funktionsgleichung:

$$\frac{\left(1-\dfrac{f_{drv,II}^{2}}{f_{drv,I}^{2}}\right)}{f_{drv,II}} \cdot \frac{U_{sens1,II}}{I_{drv,II}} \Bigg|_{t_{Ref}} = \frac{\left(1-\Omega^{2}\right)}{f_{drv,I}\cdot\Omega} \cdot \frac{U_{sens1,II}}{I_{drv,II}} \cdot \Bigg|_{t_{Ref}} = G_{ME,t_{Ref}} \; ;$$

f) ein Funktionswert der Funktionsgleichung:

$$\frac{\left(1-\dfrac{f_{drv,II}^{2}}{f_{drv,I}^{2}}\right)}{f_{drv,II}} \cdot \frac{U_{sens1,II}}{U_{drv,II}} \cdot Z_{drv,II} \Bigg|_{t_{Ref}} = \frac{\left(1-\Omega^{2}\right)}{f_{drv,I}\cdot\Omega} \cdot \frac{U_{sens1,II}}{U_{drv,II}} \cdot Z_{drv,II} \Bigg|_{t_{Ref}} = G_{ME,t_{Ref}} \; ;$$

g) ein Funktionswert der Funktionsgleichung:

$$\frac{\left(1-\dfrac{f_{drv,II}^{2}}{f_{drv,I}^{2}}\right)}{f_{drv,II}} \cdot \frac{U_{sens1,II}}{I_{drv,II}} \Bigg|_{t_{Ref}} = \frac{\left(1-\Omega^{2}\right)}{f_{drv,I}\cdot\Omega} \cdot \frac{U_{sens1,II}}{I_{drv,II}} \Bigg|_{t_{Ref}} = G_{ME,t_{Ref}} \; ; \; \text{bzw.}$$

h) ein Funktionswert der Funktionsgleichung:

$$\frac{\left(1-\dfrac{f_{drv,II}^{2}}{f_{drv,I}^{2}}\right)}{f_{drv,II}} \cdot \frac{U_{sens1,II}}{U_{drv,II}} \cdot Z_{drv,II} \Bigg|_{t_{Ref}} = \frac{\left(1-\Omega^{2}\right)}{f_{drv,I}\cdot\Omega} \cdot \frac{U_{sens1,II}}{U_{drv,II}} \cdot Z_{drv,II} \Bigg|_{t_{Ref}} = G_{ME,Ref} \; .$$

Nach einer weiteren Ausgestaltung der Erfindung ist die Umformer-Elektronik ferner so eingerichtet, daß damit die Signalfrequenz der Signalkomponente zweiter Art des Treibersignals in Abhängigkeit von der Signalkomponente erster Art des Treibersignals und/oder in Abhängigkeit von der Signalkomponente erster Art des Schwingungssignals einstellt, mithin das wenigstens eine Meßrohr im Ergebnis die Schwingungen außer Resonanz mit einer gleichermaßen von der momentanen Eigenfrequenz, $f_1$, des Schwingungsmodes erster Ordnung abhängigen Schwingfrequenz ausführt.

Als sehr vorteilhaft, nicht zuletzt auch zwecks einer Vereinfachung der Diagnose bzw. der dafür mit dem Referenzdatensatz letztlich tatsächlich vorzuhaltenden Systemparameter-Referenzwerte, hat sich dabei erwiesen, wenn die Umformer-Elektronik die Signalfrequenz der Signalkomponente zweiter Art des Treibersignals, wie bereits angedeutet, in

$$\frac{f_{drv,II}}{f_1} = \frac{f_{drv,II}}{f_{drv,I}} = \Omega$$

einem vorgegebenen, etwa im nicht-flüchtigen Datenspeicher vorgehaltenen, Frequenz-Verhältnis, , zur momentanen Eigenfrequenz, $f_1$, des Schwingungsmodes erster Ordnung bzw. zur momentanen Signalfrequenz der Signalkomponente erster Art des Treibersignals einstellt. Für diesen Fall könnten nämlich das in einigen der für die Ermittlung der Systemparameter-Meß- bzw. -referenzwerte angewendeten Funktionsgleichungen (vgl. jeweils Pkt. e, f,

$$\frac{\left(1-\Omega^2\right)}{\Omega}$$

g, bzw. h)ausgewiesenen Frequenzverhältnis, durch denn Faktor eins ersetzt, und müßte also nicht mehr extra berechnet werden.

Basierend auf dem Referenzdatensatz und einem entsprechend korrespondierenden, mithin den momentanen Betriebszustand des Meßsystems zum Zeitpunkt $t_i$ repräsentierenden Meßdatensatz, nämlich basierend auf einer zwischen Referenz- und nämlichem Meßdatensatz - etwa durch Vergleich - ermittelten Abweichung, $\Delta G_{ME}$, kann mittels der Umformer-Elektronik nunmehr detektiert werden, ob und/oder inwieweit das Meßsystem im Vergleich zu dem dafür vorab ermittelten Referenzzustand verändert ist, und ggf. eine entsprechende Systemstatusmeldung generiert werden. Der selbstverständlich mittels im Betrieb des Meßsystems erzeugten Meßwerte, nämlich den Systemparameter-Meßwerten vorab gebildete Meßdatensatz kann dafür beispielsweise zunächst auch in einem Datenspeicher der Umformer-Elektronik für mittels des Meßsystems erzeugte Meßwerte- etwa dem erwähnten flüchtigen Datenspeicher RAM - abgespeichert sein. Beispielsweise kann die Umformer-Elektronik den Referenzdatensatz mit dem Meßdatensatz vergleichen, indem von wenigstens einem der den Meßdatensatz bildenden Systemparameter-Meßwerte eine - absolute oder relative - Abweichung, $\Delta G_{ME}$, von einem entsprechenden, nämlich den selben Systemparameter repräsentierenden, Systemparameter-Referenzwert bestimmt, etwa daß die Umformer-Elektronik eine Differenz, $(G_{ME,ti} - G_{ME,Ref}) \rightarrow \Delta G_{ME}$, zwischen nämlichem Systemparameter-Meßwert und dem entsprechenden Systemparameter-Referenzwert ermittelt,

$$\frac{G_{ME,ti}}{G_{ME,Ref}} - 1 \rightarrow \Delta G_{ME}$$

also eine absolute Abweichung, und/oder daß die Umformer-Elektronik ein Verhältnis, von nämlichem Systemparameter-Meßwert und zum entsprechenden Systemparameter-Referenzwert, also eine relative Abweichung, ermittelt. Unter Berücksichtigung der oben genannten System-Parametermeßwerte und den jeweils entsprechenden System-Parameterreferenzwerten kann die Abweichung, $\Delta G_{ME}$, beispielsweise nach folgenden Funktionsgleichungen ohne weiteres ermittelt werden:

$$\left. \frac{\left(1-\frac{f_{drv,II}^2}{f_{drv,I}^2}\right)}{f_{drv,II}} \cdot Z_{drv,II} \right|_{t_i} - \left. \left(1-\frac{f_{drv,II}^2}{f_{drv,I}^2}\right) \cdot \frac{U_{sens1,II}}{U_{drv,II}} \cdot Z_{drv,II} \right|_{t_{Ref}} = \Delta G_{ME};$$

und/oder

$$\frac{\left|\dfrac{\left(1-\dfrac{f_{drv,II}^{2}}{f_{drv,I}^{2}}\right)}{f_{drv,II}}\cdot\dfrac{U_{sens1,II}}{U_{drv,II}}\cdot Z_{drv,II}\right|_{t_i}}{\left.\dfrac{\left(1-\dfrac{f_{drv,II}^{2}}{f_{drv,I}^{2}}\right)}{f_{drv,II}}\cdot\dfrac{U_{sens1,II}}{U_{drv,II}}\cdot Z_{drv,II}\right|_{t_{Ref}}}-1=\Delta G_{ME}\;;$$

und/oder

$$\left.\frac{\left(1-\dfrac{f_{drv,II}^{2}}{f_{drv,I}^{2}}\right)}{f_{drv,II}}\cdot\dfrac{U_{sens1,II}}{I_{drv,II}}\right|_{t_i}-\left.\frac{\left(1-\dfrac{f_{drv,II}^{2}}{f_{drv,I}^{2}}\right)}{f_{drv,II}}\cdot\dfrac{U_{sens1,II}}{I_{drv,II}}\right|_{t_{Ref}}=\Delta G_{ME}\;;$$

und/oder

$$\frac{\left.\dfrac{\left(1-\dfrac{f_{drv,II}^{2}}{f_{drv,I}^{2}}\right)}{f_{drv,II}}\cdot\dfrac{U_{sens1,II}}{I_{drv,II}}\right|_{t_i}}{\left.\dfrac{\left(1-\dfrac{f_{drv,II}^{2}}{f_{drv,I}^{2}}\right)}{f_{drv,II}}\cdot\dfrac{U_{sens1,II}}{I_{drv,II}}\right|_{t_{Ref}}}-1=\Delta G_{ME}\;.$$

Zwecks Generierung einer passenden, nämlich eine unzulässig oder unerwünschte hohe Abweichung von momentanen Betriebs- und entsprechendem Referenzzustand signalisierenden Systemstatusmeldung kann in der Umformer-Elektronik, etwa im nicht-flüchtigen Datenspeicher EEPROM, eine ein entsprechender, etwa vom Hersteller vorgegebener, Schwellenwert vorgehalten sein, der ein für Abweichung, $\Delta G_{ME}$, jeweils zulässiges Toleranzmaß repräsentiert. Die Umformer-Elektronik kann dann beispielsweise so eingerichtet sein, daß sie löst die Systemstatusmeldung auslöst, sofern die ermittelte Abweichung, $\Delta G_{ME}$, das dafür jeweils inform nämlichen Schwellenwert vorgegebene Toleranzmaß, beispielsweise 0.1% des jeweiligen Systemparameter-Referenzwert, überschreitet.

Die vorgenannten, nicht zuletzt auch für die Ermittlung der Abweichung des Meßsystems von seinem - etwa im Herstellerwerk bzw. erst vor Ort ermittelten - Referenzzustand benötigten Systemparameter-Meß- und -Referenzwerte jeweils benötigten Rechenfunktionen können z.B. mittels des oben erwähnten Mikrocomputers der Auswerte-Schaltung µC oder beispielsweise auch einem darin entsprechend vorgesehenen digitalen Signalprozessors DSP sehr einfach realisiert sein. Das Erstellen und Implementieren von entsprechenden Algorithmen, die mit den vorbeschriebenen Formeln korrespondierenden oder beispielsweise auch die Funktionsweise der erwähnten Amplituden- bzw. Frequenzregelschaltung für die Erregeranordnung nachbilden, sowie deren Übersetzung in der Umformer-Elektronik entsprechend ausführbare Programm-Codes ist dem Fachmann im übrigen geläufig und bedarf daher - jedenfalls in Kenntnis der vorliegenden Erfindung - keiner detailierteren Erläuterung. Selbstverständlich können vorgenannte Formeln bzw. andere mit der Umformer-Elektronik realisierte Funktionalitäten des Meßsystems auch ohne weiteres ganz oder teilweise mittels entsprechender diskret aufgebauter und/oder hybriden, also gemischt analogdigitalen, Rechenschaltungen in der Umformer-Elektronik ME realisiert werden.

**Patentansprüche**

1. Meßsystem für, insb. in Rohrleitungen, strömende Medien, welches Meßsystem einen im Betrieb von einem Medium, insb. einem Gas und/oder einer Flüssigkeit, einer Paste oder einem Pulver oder einem anderen fließfähigem Material, durchströmten Meßwandler (MW) vom Vibrationstyp zum Erzeugen von mit Mediumsparametern des strömenden Mediums, insb. einer Massendurchflußrate, einer Dichte und/oder einer Viskosität, korrespondierenden Schwingungssignalen sowie eine mit dem Meßwandler elektrisch gekoppelte Umformer-Elektronik (ME) zum Ansteuern des Meßwandlers und zum Auswerten von vom Meßwandler gelieferten Schwingungssignalen umfaßt,

   - wobei der Meßwandler (MW)

      - wenigstens ein, insb. V-förmiges, U-förmiges oder gerades, sich zwischen einem einlaßseitigen ersten Meßrohrende und einem auslaßseitigen zweiten Meßrohrende mit einer Nutz-Schwinglänge erstreckendes Meßrohr (10; 10'), dem eine Vielzahl von natürlichen Schwingungsmoden innewohnen, zum Führen von strömendem Medium,
      - wenigstens einen, insb. elektrodynamischen, Schwingungserreger (41) zum Konvertieren von elektrischer Erregerleistung in Vibrationen des wenigstens einen Meßrohrs, insb. derart, daß das wenigstens eine Meßrohrs zumindest anteilig und/oder zumindest zeitweise Schwingungen um eine Ruhelage, mit einer momentanen Eigenfrequenz eines dem Meßrohr immanenten natürlichen Schwingungsmodes ausführt, und
      - wenigstens einen, insb. elektrodynamischen, Schwingungssensor (51; 52) zum Erfassen von, insb. einlaßseitigen oder auslaßseitigen, Vibrationen des wenigstens einen Meßrohrs und zum Erzeugen eines, insb. einlaßseitige bzw. auslaßseitige, Vibrationen zumindest des wenigstens einen Meßrohrs repräsentierenden Schwingungssignals ($s_{sens1}$) des Meßwandlers aufweist; und

      - wobei die Umformer-Elektronik (ME) ausgestaltet ist, ein dem Einspeisen von elektrischer Erregerleistung in den wenigstens einen Schwingungserreger (41), mithin dem Bewirken von Vibrationen des wenigstens einen Meßrohrs dienendes Treibersignal ($s_{drv}$) für den wenigstens einen Schwingungserreger (41) zu liefern, derart,

         - daß das Treibersignal ($s_{drv}$) zumindest zeitweise eine, insb. mehrere Schwingungsperioden aufweisende, sinusförmige Signalkomponente ($s_{drv,I}$) erster Art mit einer Signalfrequenz, $f_{drv,I}$, aufweist, die einer momentanen Eigenfrequenz, $f_1$, eines natürlichen Schwingungsmodes erster Ordnung des wenigstens einen Meßrohrs entspricht, in dem das wenigstens eine Meßrohr Eigenschwingungen um eine Ruhelage ausführen kann bzw. ausführt, welche Eigenschwingungen im Bereich des ersten und zweiten Meßrohrendes jeweils einen Schwingungsknoten und im Bereich der Nutz-Schwinglänge genau einen Schwingungsbauch aufweisen, wodurch

            --- das wenigstens eine Meßrohr, angeregt vom wenigstens einen Schwingungserreger (41), zumindest anteilig, insb. überwiegend, Schwingungen in Resonanz, nämlich mit einer der momentanen Eigenfrequenz, $f_1$, des Schwingungsmodes erster Ordung entsprechenden Schwingungsfrequenz, $f_{drv,I} = f_1$, ausführt, und
            --- das wenigstens eine Schwingungssignal ($s_{sens1}$) zumindest zeitweise eine, insb. mehrere Schwingungsperioden aufweisende, sinusförmige Signalkomponente ($s_{sens1,I}$) erster Art mit einer Signalfrequenz, $f_{sens,I}$, aufweist, die der Signalfrequenz, $f_{drv,I}$, der Signalkomponente ($s_{drv,I}$) erster Art des Treibersignals ($s_{drv}$), mithin der momentanen Eigenfrequenz, $f_1$, des Schwingungsmodes erster Ordnung entspricht,

         -- und, daß das Treibersignal ($s_{drv}$) zumindest zeitweise eine, insb. hinsichtlich einer Signalleistung momentan dominierende und/oder mehrere Schwingungsperioden aufweisende, sinusförmige Signalkomponente ($s_{drv,II}$) zweiter Art mit einer Signalfrequenz, $f_{drv,II}$, aufweist, die von jeder momentanen Eigenfrequenz jedes natürlichen Schwingungsmodes des wenigstens einen Meßrohrs jeweils um mehr als 1Hz, insb. mehr als 10Hz, und/oder um mehr als 1%, insb. mehr als 10%, nämlicher Eigenfrequenz, abweicht, wodurch

--- das wenigstens eine Meßrohr, angeregt vom wenigstens einen Schwingungserreger (41), zumindest anteilig erzwungene Schwingungen außer Resonanz ausführt, und

--- das wenigstens eine Schwingungssignal ($s_{sens1}$) zumindest zeitweise eine, insb. mehrere Schwingungsperioden aufweisende, sinusförmige Signalkomponente ($s_{sens1,II}$) zweiter Art mit einer Signalfrequenz, $f_{sens,II}$, aufweist, die der Signalfrequenz, $f_{drv,II}$, der Signalkomponente ($s_{drv,II}$) zweiter Art des Treibersignals ($s_{drv}$), mithin keiner momentanen Eigenfrequenz irgendeines natürlichen Schwingungsmodes des wenigstens einen Meßrohrs entspricht, wobei das Treibersignal die Signalkomponente erster Art und die Signalkomponente zweiter Art gleichzeitig aufweist, wodurch das wenigstens eine Meßrohr, angeregt vom wenigstens einen Schwingungserreger (41), gleichzeitig sowohl anteilig Schwingungen in Resonanz, nämlich mit einer der momentanen Eigenfrequenz, $f_1$, des Schwingungsmodes erster Ordnung entsprechenden Schwingungsfrequenz, $f_{drv,I} = f_1$, als auch anteilig erzwungene Schwingungen außer Resonanz ausführt,

- wobei die Signalfrequenz ($f_{drv,II}$) der Signalkomponente zweiter Art ($s_{drv,II}$) des Treibersignals ($s_{drv}$) mehr als einem 1.01-fachen, insb. mehr als einem 1.15-fachen, und weniger als einem 2.7-fachen, insb. weniger als einem 2.4-fachen, einer momentanen Eigenfrequenz, $f_1$, des Schwingungsmodes erster Ordnung entspricht, wodurch

--- das wenigstens eine Meßrohr, angeregt vom wenigstens einen Schwingungserreger (41) zumindest anteilig erzwungene Schwingungen außer Resonanz mit einer in einem Frequenzbereich, $| 1.01 \cdot f_1 < f_{drv,II} < 2.7 \cdot f_1 |$, oberhalb des 1.01-fachen, insb. oberhalb des 1.15-fachen, und unterhalb des 2.7-fachen, insb. unterhalb des 2.4-fachen, der momentanen Eigenfrequenz, $f_1$, des Schwingungsmodes erster Ordnung liegenden Schwingungsfrequenz ausführt, und

--- die Signalfrequenz der zweiten Signalkomponente ($s_{sens1,II}$) des Schwingungssignals ($s_{sens1}$) oberhalb des 1.01-fachen, insb. oberhalb des 1.15-fachen, und unterhalb des 2.7-fachen, insb. unterhalb des 2.4-fachen, der momentanen Eigenfrequenz, $f_1$, des Schwingungsmodes erster Ordnung liegt;

- und wobei die Umformer-Elektronik (ME) ausgestaltet ist,

-- mittels der Signalkomponente ($s_{drv,II}$) zweiter Art des Treibersignals ($s_{drv}$), insb. basierend auf einem im wenigstens einen Schwingungserreger fließenden als Signalkomponente ($s_{drv,II}$) zweiter Art des Treibersignals ($s_{drv}$) dienenden Strom ($i_{drv,II} \rightarrow s_{drv,II}$) oder einer diesen treibenden als Signalkomponente ($s_{drv,II}$) zweiter Art des Treibersignals ($s_{drv}$) dienende Spannung ($u_{drv,II} \rightarrow s_{drv,II}$),

-- und mittels der Signalkomponente ($s_{sens1,II}$) zweiter Art des wenigstens einen Schwingungssignals ($s_{sens1}$), insb. basierend auf einer mittels des wenigstens einen Schwingungssensors generierten als Signalkomponente ($s_{sens1,II}$) zweiter Art des Schwingungssignals ($s_{sens1}$) dienenden Spannung ($u_{sens1,II}$), zu detektieren, ob und/oder inwieweit das Meßsystem im Vergleich zu einem dafür vorab, insb. bei einer Kalibrierung und/oder bei einer Inbetriebnahme des Meßsystems, ermittelten Referenzzustand, insb. infolge Alterung und/oder infolge Belastung des Meßwandlers, verändert ist, insb. derart, daß ein im Betrieb des Meßsystems anhand der Signalkomponente ($s_{drv,II}$) zweiter Art des Treibersignals ($s_{drv}$) und/oder anhand der Signalkomponente ($s_{sens1,II}$) zweiter Art des wenigstens einen Schwingungssignals ($s_{sens1}$), insb. als

$$\left. \frac{U_{sens1,II}}{I_{drv,II}} \right|_{t_i} = G_{ME,ti} \qquad\qquad \left. \frac{U_{sens1,II}}{U_{drv,II}} \right|_{t_i} = G_{ME,ti}$$

ein Verhältnis oder ein als Verhältnis , ermittelter Systemparameter-Meßwert für wenigstens einen das Meßsystem charakterisierenden Systemparameter von einem im Referenzzustand des Meßsystems für nämlichen Systemparameter ermittelten Systemparameter-Referenzwert um mehr als ein vorgegebenes Toleranzmaß, insb. um mehr als 0.1% des nämlichen Referenzwerts, abweicht.

2. Meßsystem nach einem der vorherigen Ansprüche, wobei die Signalfrequenz, $f_{drv,II}$, der Signalkomponente ($s_{drv,II}$) zweiter Art des Treibersignals ($s_{drv}$) größer als 5Hz, insb. größer als 10Hz, ist, und/oder wobei die Signalfrequenz, $f_{drv,II}$, der Signalkomponente ($s_{drv,II}$) zweiter Art des Treibersignals größer als ein 0.1-faches der momentanen Eigenfrequenz des Schwingungsmodes erster Ordnung ist.

3. Meßsystem nach einem der vorherigen Ansprüche,

- wobei die Signalfrequenz ($f_{drv,II}$) der Signalkomponente zweiter Art ($s_{drv,II}$) des Treibersignals kleiner als eine momentane Eigenfrequenz, $f_2$, eines Schwingungsmodes zweiter Ordnung des wenigstens einen Meßrohrs ist, in dem das wenigstens eine vibrierende Meßrohr Schwingungen um eine Ruhelage ausführen kann bzw. ausführt bzw. ausführen kann, die im Bereich des ersten und zweiten Meßrohrendes jeweils einen Schwingungsknoten und im Bereich der Nutz-Schwinglänge einen weiteren Schwingungsknoten sowie genau zwei Schwingungsbäuche aufweisen, wodurch

-- das wenigstens eine Meßrohr, angeregt vom wenigstens einen Schwingungserreger (41) zumindest anteilig erzwungene Schwingungen außer Resonanz, nämlich in einem Frequenzbereich, $| f_{drv,II} < f_2 |$, der unterhalb der momentane Eigenfrequenz des Schwingungsmodes zweiter Ordnung liegt, ausführt, und
-- das wenigstens eine Schwingungssignal zumindest zeitweise eine Signalkomponente zweiter Art mit einer Signalfrequenz aufweist, die unterhalb der momentane Eigenfrequenz des Schwingungsmodes zweiter Ordnung liegt, insb. derart, daß

--- das wenigstens eine Meßrohr, angeregt vom wenigstens einen Schwingungserreger (41) zumindest anteilig erzwungene Schwingungen außer Resonanz, nämlich in einem Frequenzbereich, $| f_1 < f_{drv,II} < f_2 |$, der oberhalb der momentanen Eigenfrequenz, $f_1$, des Schwingungsmodes erster Ordnung und unterhalb der momentane Eigenfrequenz, $f_2$, des Schwingungsmodes zweiter Ordnung liegt, ausführt und
--- das wenigstens eine Schwingungssignal zumindest zeitweise eine Signalkomponente zweiter Art mit einer Signalfrequenz aufweist, die oberhalb der momentanen Eigenfrequenz des Schwingungsmodes erster Ordnung und unterhalb der momentane Eigenfrequenz des Schwingungsmodes zweiter Ordnung liegt; und/oder

- wobei die Signalfrequenz der Signalkomponente erster Art des Treibersignals ($s_{drv}$) einer momentanen Eigenfrequenz eines natürlichen Biegeschwingungsmodes entspricht, in dem das wenigstens eine vibrierende Meßrohr Biegeschwingungen um die Ruhelage ausführt, die im Bereich des ersten und zweiten Meßrohrendes jeweils einen Schwingungsknoten und im Bereich der Nutz-Schwinglänge genau einen Schwingungsbauch aufweisen (Biegeschwingungsgrundmode), wodurch

- das wenigstens eine Meßrohr, angeregt vom wenigstens einen Schwingungserreger (41), zumindest anteilig, insb. überwiegend, Biegeschwingungen in Resonanz, nämlich mit einer der momentanen Eigenfrequenz des nämlichen Biegeschwingungsmodes entsprechenden Schwingungsfrequenz, ausführt, und
- die Signalfrequenz der Signalkomponente erster Art des wenigstens einen Schwingungssignals der momentanen Eigenfrequenz des nämlichen Biegeschwingungsmodes entspricht.

4.  Meßsystem nach einem der vorherigen Ansprüche,

- wobei die Umformer-Elektronik (ME) mittels der Signalkomponente ($s_{sens1,II}$) zweiter Art des wenigstens einen Schwingungssignals ($s_{sens1}$) eine, insb. als ein Alarm deklarierte, Systemstatusmeldung (Sysfail) generiert, die eine, insb. durch Alterung des Meßsystems bedingte und/oder durch ein Schwingungsverhalten des wenigstens einen Meßrohrs irreversible verändernde Belastungen des Meßwandlers bedingte und/oder durch eine elektrische Impedanz und/oder eine elektro-mechanische Wandlerkonstante des wenigstens einen Schwingungserregers verändernde thermische Belastungen des Meßwandlers bedingte und/oder durch eine elektrische Impedanz und/oder eine elektro-mechanische Wandlerkonstante des wenigstens einen Schwingungssensors verändernde thermische Belastungen des Meßwandlers bedingte, ein vorgegebenes Toleranzmaß überschreitende Abweichung des Meßsystems von einem dafür vorab, insb. bei einer Kalibrierung und/oder bei einer Inbetriebnahme des Meßsystems, ermittelten Referenzzustand, insb. visuell und/oder akustisch wahrnehmbar, signalisiert; und/oder
- wobei die Umformer-Elektronik (ME) mittels der Signalkomponente ($s_{sens1,II}$) zweiter Art des wenigstens Schwingungssignals ($s_{sens1}$) eine, insb. als ein Alarm deklarierte, Systemstatusmeldung ($Sys_{fail}$) generiert, die eine ein vorgegebenes Toleranzmaß überschreitende Abnutzung des Meßrohrs, insb. visuell und/oder akustisch wahrnehmbar, signalisiert; und/oder
- wobei die Umformer-Elektronik (ME) mittels der Signalkomponente ($s_{sens1,II}$) zweiter Art des wenigstens einen Schwingungssignals ($s_{sens1}$) eine, insb. als ein Alarm deklarierte, Systemstatusmeldung generiert, die, insb. visuell und/oder akustisch wahrnehmbar, signalisiert, daß eine strukturelle Integrität des wenigstens einen Meßrohrs nicht mehr gewährleistet ist, insb. infolge von Materialabtragung und/oder infolge von Überlastung und/oder infolge von Rißbildung und/oder infolge von Materialermüdung; und/oder

- wobei die Umformer-Elektronik (ME) mittels der Signalkomponente ($s_{sens1,II}$) zweiter Art des wenigstens einen Schwingungssignals ($s_{sens1}$) eine, insb. als ein Alarm deklarierte, Systemstatusmeldung generiert, die, insb. visuell und/oder akustisch wahrnehmbar, signalisiert, daß auf einer das zu messende Medium im Betrieb kontaktierenden Innenseite des Meßrohrs ein daran haftender Belag gebildet ist; und/oder

- wobei die Umformer-Elektronik (ME) mittels der Signalkomponente ($s_{sens1,II}$) zweiter Art des wenigstens Schwingungssignals ($s_{sens1}$) eine, insb. als ein Alarm deklarierte, Systemstatusmeldung generiert, die eine ein vorgegebenes Toleranzmaß überschreitende Abtragung von Material des Meßrohrs, insb. visuell und/oder akustisch wahrnehmbar, signalisiert; und/oder

- wobei die Umformer-Elektronik (ME) mittels der Signalkomponente ($s_{sens1,II}$) zweiter Art des wenigstens Schwingungssignals ($s_{sens1}$) eine, insb. als ein Alarm deklarierte, Systemstatusmeldung generiert, die Rißbildung im wenigstens einen Meßrohr, insb. visuell und/oder akustisch wahrnehmbar, signalisiert; und/oder

- wobei die Umformer-Elektronik (ME) mittels der Signalkomponente ($s_{sens1,II}$) zweiter Art des wenigstens Schwingungssignals ($s_{sens1}$) eine, insb. als ein Alarm deklarierte, Systemstatusmeldung generiert, die eine ein vorgegebenes Toleranzmaß überschreitende Veränderung der Schwingungseigenschaften des wenigstens einen Meßrohrs, insb. infolge Deformation und/oder infolge von Materialabtragung und/oder infolge von Rißbildung und/oder infolge von Materialermüdung, signalisiert; und/oder

- wobei die Umformer-Elektronik (ME) mittels der Signalkomponente ($s_{sens1,II}$) zweiter Art des wenigstens Schwingungssignals ($s_{sens1}$) eine, insb. als ein Alarm deklarierte, Systemstatusmeldung generiert, die eine ein vorgegebenes Toleranzmaß überschreitende Veränderung einer elektrischen Impedanz des Meßwandlers, insb. visuell und/oder akustisch wahrnehmbar, signalisiert; und/oder

- wobei die Umformer-Elektronik (ME) mittels der Signalkomponente ($s_{sens1,II}$) zweiter Art des wenigstens Schwingungssignals ($s_{sens1}$) eine, insb. als ein Alarm deklarierte, Systemstatusmeldung generiert, die eine ein vorgegebenes Toleranzmaß überschreitende Veränderung einer elektrischen Impedanz und/oder eine elektromechanische Wandlerkonstante des wenigstens einen Schwingungserregers und/oder einer elektrischen Impedanz und/oder eine elektro-mechanische Wandlerkonstante des wenigstens einen Schwingungssensors, insb. visuell und/oder akustisch wahrnehmbar, signalisiert; und/oder

- wobei die Umformer-Elektronik (ME) basierend auf einer Phasendifferenz der Signalkomponente zweiter Art des Schwingungssignals relativ zur Signalkomponente zweiter Art des Treibersignals, detektiert, ob und/oder inwieweit das Meßsystem im Vergleich zu einem dafür vorab, insb. bei einer Kalibrierung und/oder bei einer Inbetriebnahme des Meßsystems, ermittelten Referenzzustand, insb. infolge Alterung und/oder infolge Belastung des Meßwandlers, verändert ist, insb. derart, daß ein im Betrieb des Meßsystems anhand der Signalkomponente ($s_{drv,II}$) zweiter Art des Treibersignals ($s_{drv}$) und/oder anhand der Signalkomponente ($s_{sens1,II}$) zweiter Art des wenigstens einen Schwingungssignals ($s_{sens1}$) ermittelter Systemparameter-Meßwert für wenigstens einen das Meßsystem charakterisierenden Systemparameter von einem im Referenzzustand des Meßsystems für nämlichen Systemparameter ermittelten Systemparameter-Referenzwert um mehr als ein vorgegebenes Toleranzmaß, insb. um mehr als 0.1% des nämlichen Referenzwerts, abweicht, und/oder

- wobei die Umformer-Elektronik die Signalfrequenz der Signalkomponente zweiter Art des Treibersignals in Abhängigkeit von der Signalkomponente erster Art des Treibersignals und/oder in Abhängigkeit von der Signalkomponente erster Art des Schwingungssignals einstellt, insb. derart, daß die Umformer-Elektronik die Signalfrequenz der Signalkomponente zweiter Art des Treibersignals in einem vorgegebenen Frequenz-Verhältnis, $\dfrac{f_{drv,II}}{f_1} = \dfrac{f_{drv,II}}{f_{drv,I}} = \Omega$ , zur momentanen Eigenfrequenz, $f_1$, des Schwingungsmodes erster Ordnung bzw. zur momentanen Signalfrequenz der Signalkomponente erster Art des Treibersignals einstellt.

**5.** Meßsystem nach einem der vorherigen Ansprüche, wobei die Umformer-Elektronik (ME) mittels der Signalkomponente ($s_{sens1,II}$) zweiter Art des wenigstens einen Schwingungssignals ($s_{sens1}$) sowie mittels der Signalkomponente ($s_{drv,II}$) zweiter Art des Treibersignals ($s_{drv}$), insb. wiederkehrend, einen Systemparameter-Meßwert, $G_{ME,ti}$, für einen eine dem Meßwandler immanente Meßwandler-Übertragungsfunktion, mithin das Meßsystem charakterisierenden Systemparameter, $g_{ME}$, ermittelt, gemäß welcher Meßwandler-Übertragungsfunktion der Meßwandler das Treibersignal oder einzelne Signalkomponente ($s_{drv,II}$) davon, insb. einen im wenigstens einen Schwingungserreger fließenden, als Signalkomponente ($s_{drv,II}$) zweiter Art des Treibersignals ($s_{drv}$) dienenden Strom ($i_{drv,II} \rightarrow S_{drv,II}$) oder eine diesen treibende, als Signalkomponente ($s_{dv,II}$) zweiter Art des Treibersignals ($s_{drv}$) dienende Spannung ($u_{drv,II} \rightarrow s_{drv,II}$), in das wenigstens eine Schwingungssignal ($s_{sens1}$) oder einzelne Signalkomponenten davon, insb. eine mittels des wenigstens einen Schwingungssensors generierten, als Signalkomponente ($s_{sens1,II}$) zweiter Art des Schwingungssignals ($s_{sens1}$) dienenden Spannung ($u_{sens1,II}$), konvertiert.

**6.** Meßsystem nach Anspruch 5, wobei die Umformer-Elektronik (ME) mittels des nämlichen, die Meßwandler-Übertragungsfunktion charakterisierenden, Systemparameters, $g_{ME}$, detektiert, ob und/oder inwieweit das Meßsystem im Vergleich zu einem dafür vorab, insb. bei einer Kalibrierung und/oder bei einer Inbetriebnahme des Meßsystems, ermittelten Referenzzustand, insb. infolge Alterung und/oder infolge Belastung des Meßwandlers, verändert ist, insb. derart, daß die Umformer-Elektronik (ME) mittels des nämlichen, die Meßwandler-Übertragungsfunktion charakterisierenden, Systemparameters, $g_{ME}$, ggf. eine, insb. als ein Alarm deklarierte, Systemstatusmeldung generiert, die eine ein vorgegebenes Toleranzmaß überschreitende Abweichung des Meßsystems von einem dafür vorab ermittelten Referenzzustand, insb. visuell und/oder akustisch wahrnehmbar, signalisiert.

**7.** Meßsystem nach einem der vorherigen Ansprüche, wobei die Umformer-Elektronik (ME) mittels der Signalkomponente erster Art des wenigstens einen Schwingungssignals und/oder mittels der Signalkomponente erster Art des Treibersignals, insb. wiederkehrend, einen einen zu messenden Parameter des strömenden Mediums, insb. eine Massendurchflußrate, eine Dichte und/oder eine Viskosität, repräsentierenden Mediumsparameter-Meßwert, $X_M$, ermittelt.

**8.** Meßsystem nach Anspruch 5 und 7, wobei die Umformer-Elektronik (ME) den wenigstens einen Mediumsparameter-Meßwert unter Verwendung auch des Systemparameter-Meßwerts, $G_{ME,ti}$, ermittelt, insb. derart, daß die Umformer-Elektronik (ME) einen Einfluß einer unter Verwendung des Systemparameter-Meßwerts, $G_{ME,ti}$, ermittelten Abweichung des Meßsystems von einem dafür vorab ermittelten Referenzzustand auf eine Meßgenauigkeit des Meßsystems, mit Mediumsparameter-Meßwerte, $X_M$, ermittelt werden, kompensiert.

**9.** Meßsystem nach einem der vorherigen Ansprüche, wobei die Umformer-Elektronik einen, insb. flüchtigen, Datenspeicher für mittels des Meßsystems erzeugte Meßwerte aufweist, in welchem Datenspeicher wenigstens ein mittels im Betrieb des Meßsystems erzeugter Meßwerte gebildeter, einen Betriebszustand des Meßsystems, insb. vorübergehend, repräsentierender Meßdatensatz vorgehalten ist, der basierend auf der Signalkomponente zweiter Art des Treibersignals und/oder basierend auf der Signalkomponente zweiter Art des wenigstens einen Sensorsignals erzeugte Systemparameter-Meßwerte für verschiedene, das Meßsystem charakterisierende Systemparameter umfaßt.

**10.** Meßsystem nach Anspruch 9,

- wobei der Meßdatensatz einen Systemparameter-Meßwert für die Signalkomponente zweiter Art des dem wenigstens einen Schwingungserreger im Betrieb des Meßsystems zugeführten Treibersignals und/oder einen Systemparameter-Meßwert für die Signalkomponente zweiter Art des wenigstens einen vom Meßwandler im Betrieb des Meßsystems gelieferten Schwingungssignals und/oder einen von der Signalkomponente zweiter Art des der im Betrieb des Meßsystems Erregeranordnung zugeführten Treibersignals und von der Signalkomponente zweiter Art des wenigstens einen im Betrieb des Meßsystems vom Meßwandler gelieferten Schwingungssignals abgeleiteten Systemparameter-Meßwert umfaßt; und/oder
- wobei im Datenspeicher für mittels des Meßsystems erzeugte Meßwerte ein mittels im Betrieb des Meßsystems erzeugter Meßwerte gebildeter, im Meßwandler geführtes Medium repräsentierender Meßdatensatz vorgehalten ist, der basierend auf der Signalkomponente erster Art des Treibersignals und/oder basierend auf der Signalkomponente erster Art des wenigstens einen Sensorsignals erzeugte Mediumsparameter-Meßwerte, $X_M$, für verschiedene, das strömende Medium charakterisierende Mediumsparameter, insb. eine Massendurchflußrate, eine Dichte und/oder eine Viskosität, umfaßt.

**11.** Meßsystem nach einem der vorherigen Ansprüche, wobei die Umformer-Elektronik einen, insb. nicht-flüchtigen, Datenspeicher für als einen Referenzzustand des Meßsystems repräsentierende Referenzwerte dienende Meßwerte aufweist, in welchem Datenspeicher wenigstens ein einen Referenzzustand des, insb. bereits in einer Rohrleitung installierten, Meßsystems repräsentierender Referenzdatensatz vorgehalten ist, der, insb. im Zuge einer Kalibrierung des Meßsystems im Herstellerwerk und/oder während einer Inbetriebnahme des Meßsystems mittels desselben erzeugte, Systemparameter-Referenzwerte für verschiedene, nämlich das Meßsystem charakterisierende Systemparameter umfaßt, insb. derart, daß nämliche Systemparameter-Referenzwerte mittels des im Referenzzustand befindlichen Meßsystems selbst und/oder mittels des Medium von bekannter Temperatur führenden Meßwandlers erzeugte Meßwerte sind.

**12.** Meßsystem nach Anspruch 11, wobei der Referenz-Datensatz einen Systemparameter-Referenzwert für eine Signalkomponente zweiter Art des dem wenigstens einen Schwingungserreger bei im Referenzzustand befindlichem Meßsystem zugeführten Treibersignals und/oder einen Systemparameter-Referenzwert für eine Signalkomponente zweiter Art des wenigstens einen vom Meßwandler bei im Referenzzustand befindlichem Meßsystem gelieferten Schwingungssignals und/oder einen von einer Signalkomponente zweiter Art des bei im Referenzzustand befindlichem Meßsystem der Erregeranordnung zugeführten Treibersignals und von einer Signalkomponente zweiter Art des wenigstens einen vom Meßwandler bei im Referenzzustand befindlichem Meßsystem gelieferten Schwingungssignal abgeleiteten Systemparameter-Referenzwert umfaßt.

13. Meßsystem nach einem der Ansprüche 11 bis 12, jeweils in Verbindung mit einem der Ansprüche 5 bis 10, wobei der Referenz-Datensatz einen, insb. mittels des im Referenzzustand befindlichen Meßsystems selbst und/oder mittels des Medium von bekannter Temperatur führenden Meßwandlers ermittelten, die Meßwandler-Übertragungsfunktion des im Referenzzustand befindlichen Meßsystems repräsentierender Systemparameter-Referenzwert, $G_{ME,Ref}$, für den die Meßwandler-Übertragungsfunktion charakterisierenden Systemparameter, $g_{ME}$, umfaßt.

14. Meßsystem nach einem der Ansprüche 11 bis 13, jeweils in Verbindung mit Anspruch 9, wobei die Umformer-Elektronik basierend auf dem Referenzdatensatz und dem Meßdatensatz, insb. anhand einer zwischen Referenzdatensatz und Meßdatensatz ermittelten Abweichung, $\Delta G_{ME}$, detektiert, ob und/oder inwieweit das Meßsystem im Vergleich zu dem dafür vorab ermittelten Referenzzustand verändert ist, insb. derart, daß die Umformer-Elektronik anhand einer zwischen Referenzdatensatz und Meßdatensatz ermittelten Abweichung, $\Delta G_{ME}$, detektiert, ob und/oder inwieweit das Meßsystem im Vergleich zu dem dafür vorab ermittelten Referenzzustand verändert ist, insb. derart, daß die Umformer-Elektronik den Referenzdatensatz mit dem Meßdatensatz, insb. wiederkehrend, vergleicht.

## Claims

1. Measuring system for flowing media, particularly media flowing in pipes, wherein said measuring system comprises a vibronic-type transducer (MW) through which a medium flows during operation, particularly a gas and/or a liquid, a paste or a powder or another material which can flow, wherein said transducer is designed to generate vibration signals corresponding to parameters of the flowing medium, particularly to a mass flow rate, a density and/or a viscosity, as well as a transmitter electronics unit (ME) electrically coupled to the transducer and designed to control the transducer and evaluate vibration signals provided by the transducer,

   - wherein the transducer (MW) comprises

      -- at least one measuring tube (10, 10'), particularly V-shaped, U-shaped or straight, wherein said tube extends between a first measuring tube end on the inlet side and a second measuring tube end on the outlet side with a useful vibration length, wherein said tube has several natural vibration modes and is designed to conduct a flowing medium,
      -- at least one vibration exciter (41), particularly electrodynamic, designed to convert electrical excitation power into vibrations of the at least one measuring tube, particularly in such a way that the at least one measuring tube at least partially and/or at least temporarily executes vibrations around a rest position, with a current natural frequency of a natural vibration mode inherent to the measuring tube, and
      -- at least one vibration sensor (51, 52), particularly electrodynamic, designed to measure vibrations, particularly on the inlet side and on the outlet side, of the at least one measuring tube, and designed to generate a vibration signal ($s_{sens1}$) of the transducer representing vibrations on the inlet side or on the outlet side of the at least one measuring tube; and

   - wherein the transmitter electronics unit (ME) is designed to supply a driver signal ($s_{drv}$) for the at least one vibration exciter (41), wherein said signal serves to provide electrical exciter power to the at least one vibration exciter (41), and to cause vibrations of the at least one measuring tube, in such a way that

      -- the driver signal ($s_{drv}$) at least temporarily has a sinusoidal signal component ($s_{drv,l}$) of the first type, which particularly has multiple vibration periods, with a signal frequency, $f_{drv,l}$, that corresponds to a current natural frequency, $f_1$, of a natural vibration mode of the first order of the at least one measuring tube, in that the at least one measuring tube executes or can execute natural vibrations around a rest position, wherein said natural vibrations have a vibration node in the area of the first and second measuring tube end, respectively, and have exactly one antinode in the area of the useful vibration length, wherein
      --- the at least one measuring tube, excited by the at least one vibration exciter (41), at least partially, particularly primarily, executes vibrations in resonance, particularly with a vibration frequency corresponding to current natural frequency, $f_1$, of the vibration mode of the first order, $f_{drv,I} = f_1$, and

--- the at least one vibration signal ($s_{sens1}$) at least temporarily has a sinusoidal signal component ($s_{sens1,I}$) of the first type, which particularly has multiple vibration periods, with a signal frequency, $f_{sens,I}$, that corresponds to the signal frequency, $f_{drv,I}$, of the signal component ($s_{drv,I}$) of the first type of the driver signal ($s_{drv}$), and consequently to the current natural frequency, $f_1$, of the vibration mode of the first order,

-- and that the driver signal ($s_{drv}$) at least temporarily has a sinusoidal signal component ($s_{drv,II}$) of the second type, which currently dominates with regard to a signal power and/or has multiple vibration periods, wherein said component has a signal frequency, $f_{drv,II}$, which deviates in each case from each current natural frequency of each natural vibration mode of the at least one measuring tube by more than 1 Hz, particularly more than 10 Hz, and/or more than 1 %, particularly more than 10 %, of said natural frequency, wherein

--- the at least one measuring tube, excited by the at least one vibration exciter (41), at least partially executes forced vibrations outside resonance, and

--- the at least one vibration signal ($s_{sens1}$) at least temporarily has a sinusoidal signal component ($s_{sens1,II}$) of the second type, which particularly has multiple vibration periods, with a signal frequency, $f_{sens,II}$, that corresponds to the signal frequency, $f_{drv,II}$, of the signal component ($s_{drv,II}$) of the second type of the driver signal ($s_{drv}$), and consequently does not correspond to any current natural frequency of any natural vibration mode of the at least one measuring tube, wherein the driver signal simultaneously has the signal component of the first type and the signal component of the second type, wherein the at least one measuring tube, excited by the at least one vibration exciter (41), simultaneously partially executes both vibrations in resonance, i.e. with a vibration frequency $f_{drv,I} = f_1$ corresponding to the current natural frequency, $f_1$, of the vibration mode of the first order and partially executes forced vibrations outside resonance,

-- wherein the signal frequency ($f_{drv,II}$) of the signal component of the second type ($s_{drv,II}$) of the driver signal ($s_{drv}$) corresponds to more than 1.01 times, particularly to more than 1.15 times, and to less than 2.7 times, particularly to less than 2.4 times, a current natural frequency, $f_1$, of the vibration mode of the first order, wherein

--- the at least one measuring tube, excited by the at least one vibration exciter (41), at least partially executes forced vibrations outside resonance with a vibration frequency in a frequency range, $| 1.01 \cdot f_1 < f_{drv,II} < 2,7 \cdot f_1 |$, above 1.01 times, particularly above 1.15 times, and below 2.7 times, particularly below 2.4 times, the current natural frequency, $f_1$, of the vibration mode of the first order, and

--- the signal frequency of the second signal component ($s_{sens1,II}$) of the vibration signal ($s_{sens1}$) is above 1.01 times, particularly above 1.15 times, and below 2.7 times, particularly below 2.4 times the current natural frequency, $f_1$, of the vibration mode of the first order;

- and wherein the transmitter electronics unit (ME) is designed

-- to use the signal component ($s_{drv,II}$) of the second type of the driver signal ($s_{drv}$), particularly on the basis of a current ($i_{drv,II} \rightarrow s_{drv,II}$) serving as the signal component ($s_{drv,II}$) of the second type of the driver signal ($s_{drv}$) and flowing in the at least one vibration exciter, or a voltage ($u_{drv,II} \rightarrow s_{drv,II}$) serving as the signal component ($s_{drv,II}$) of the second type of the driver signal ($s_{drv}$) and driving said current,

-- and to use the signal component ($s_{sens1,II}$) of the second type of the at least one vibration signal ($s_{sens1}$), particularly on the basis of a voltage ($u_{sens1,II}$) generated by means of the at least one vibration sensor and serving as the signal component ($s_{sens1,II}$) of the second type of the vibration signal ($s_{sens1}$), to detect whether and/or to what extent the measuring system has changed in relation to a reference state determined beforehand for this purpose, particularly when calibrating and/or commissioning the measuring system, particularly as a result of transducer ageing and/or a load, particularly in such a way that a system parameter measured value determined when the measuring system is in operation using the signal component ($s_{drv,II}$) of the second type of the driver signal ($s_{drv}$) and/or using the signal component ($s_{sens1,II}$) of the second type

$$\left. \frac{U_{sens1,II}}{I_{drv,II}} \right|_{t_i} = G_{ME,ti}$$

of the at least one vibration signal ($s_{sens1}$), particularly as a ratio $\qquad$ or a ratio

$$\left. \frac{U_{sens1,II}}{U_{drv,II}} \right|_{t_i} = G_{ME,ti}$$

for at least a system parameter that characterizes the measuring system deviates from a system parameter reference value determined in the reference state of the measuring system for said system parameter by more than a predefined tolerance, particularly by more than 0.1 % of said reference value.

2. Measuring system as claimed in one of the previous claims, wherein the signal frequency, $f_{drv,II}$, of the signal component ($s_{drv,II}$) of the second type of the driver signal ($s_{drv}$) is greater than 5 Hz, particularly greater than 10 Hz, and/or wherein the signal frequency, $f_{drv,II}$, of the signal component ($s_{drv,II}$) of the second type of the driver signal is greater than 0.1 times the current natural frequency of the vibration mode of the first order.

3. Measuring system as claimed in one of the previous claims,

   - wherein the signal frequency ($f_{drv,II}$) of the signal component of the second type ($s_{drv,II}$) of the driver signal is less than a current natural frequency, $f_2$, of a vibration mode of the second order of the at least one measuring tube, wherein in said mode the at least one vibrating measuring tube executes or can execute vibrations around a rest position, wherein said vibrations each have a vibration node in the area of the first and the second measuring tube end, and another vibration node in the area of the useful vibration length, as well as precisely two anti-nodes, wherein

      -- the at least one measuring tube, excited by the at least one vibration exciter (41), at least partially executes forced vibrations outside resonance, specifically in a frequency range, $| f_{drv,II} < f_2 |$, which is below the current natural frequency of the vibration mode of the second order, and
      -- the at least one vibration signal at least temporarily has a signal component of the second type with a signal frequency which is below the current natural frequency of the vibration mode of the second order, particularly in such a way that

         --- the at least one measuring tube, excited by the at least one vibration exciter (41), at least partially executes forced vibrations outside resonance, particularly in a frequency range, $| f_1 < f_{drv,II} < f_2 |$, which is above the current natural frequency, $f_1$, of the vibration mode of the first order and below the current natural frequency, $f_2$, of the vibration mode of the second order, and
         --- the at least one vibration signal at least temporarily has a signal component of the second type with a signal frequency which is above the current natural frequency of the vibration mode of the first order and below the current natural frequency of the vibration mode of the second order; and/or

   - wherein the signal frequency of the signal component of the first type of the driver signal ($s_{drv}$) corresponds to a current natural frequency of a natural bending vibration mode, wherein in said mode the at least one vibrating measuring tube executes bending vibrations around the rest position, which have, in each case, a vibration node in the area of the first and the second measuring tube end and exactly one antinode (bending vibration basic mode) in the area of the useful vibration length, wherein

      -- the at least one measuring tube, excited by the at least one vibration exciter (41), executes at least partially, particularly primarily, bending vibrations in resonance, particularly with a vibration frequency corresponding to the current natural frequency of said bending vibration mode, and
      -- the signal frequency of the signal component of the first type of the at least one vibration signal corresponds to the current natural frequency of said bending vibration mode.

4. Measuring system as claimed in one of the previous claims,

   - wherein, using the signal component ($s_{sens1,II}$) of the second type of the at least one vibration signal ($s_{sens1}$), the transmitter electronics unit (ME) generates a system status message (Sysfail), particularly declared as an alarm, which signals a deviation of the measuring system - that exceeds a predefined tolerance - from a reference state particularly determined beforehand during a calibration and/or during commissioning of the measuring system, particularly in a visually or acoustically perceivable manner, wherein said deviation is particularly due to the aging of the measuring system and/or due to transducer loads that irreversibly modify a vibration behavior of the at least one measuring tube and/or transducer thermal loads that change an electrical impedance and/or an electromechanical transducer constant of the at least one vibration exciter and/or transducer thermal loads that change an electrical impedance and/or an electromechanical transducer constant of the at least one vibration sensor; and/or
   - wherein, using the signal component ($s_{sens1,II}$) of the second type of the at least one vibration signal ($s_{sens1}$), the transmitter electronics unit (ME) generates a system status message ($Sys_{fail}$), particularly declared as an alarm, that signals, particularly in a visually or acoustically perceivable manner, the wear and tear of the measuring tube that exceeds a predefined tolerance value; and/or

- wherein, using the signal component ($s_{sens1,II}$) of the second type of the at least one vibration signal ($s_{sens1}$), the transmitter electronics unit (ME) generates a system status message, particularly declared as an alarm, which signals, particularly in a visually or acoustically perceivable manner, that a structural integrity of the at least one measuring tube is no longer guaranteed, particularly due to material removal and/or due an overloading and/or due to the formation of cracks and/or due to material fatigue; and/or

- wherein, using the signal component ($s_{sens1,II}$) of the second type of the at least one vibration signal ($s_{sens1}$), the transmitter electronics unit (ME) generates a system status message, particularly declared as an alarm, which signals, particularly in a visually or acoustically perceivable manner, a deposit coating sticking to a measuring tube is formed on an inside of said measuring tube that is in contact with the medium to be measured during operation; and/or

- wherein, using the signal component ($s_{sens1,II}$) of the second type of the at least one vibration signal ($s_{sens1}$), the transmitter electronics unit (ME) generates a system status message, particularly declared as an alarm, which signals, particularly in a visually or acoustically perceivable manner, a removal of the material of the measuring tube above a predefined tolerance value; and/or

- wherein, using the signal component ($s_{sens1,II}$) of the second type of the at least one vibration signal ($s_{sens1}$), the transmitter electronics unit (ME) generates a system status message, particularly declared as an alarm, that signals, particularly in a visually or acoustically perceivable manner, the formation of cracks in the at least one measuring tube; and/or

- wherein, using the signal component ($s_{sens1,II}$) of the second type of the at least one vibration signal ($s_{sens1}$), the transmitter electronics unit (ME) generates a system status message, particularly declared as an alarm, which signals a change of the vibration properties of the at least one measuring tube above a predefined tolerance value, particularly due to a deformation and/or due to material removal and/or due to the formation of cracks and/or due to material fatigue; and/or

- wherein, using the signal component ($s_{sens1,II}$) of the second type of the at least one vibration signal ($s_{sens1}$), the transmitter electronics unit (ME) generates a system status message, particularly declared as an alarm, which signals, particularly in a visually or acoustically perceivable manner, a change in the electrical impedance of the transducer that exceeds a predefined tolerance value; and/or

- wherein, using the signal component ($s_{sens1,II}$) of the second type of the at least one vibration signal ($s_{sens1}$), the transmitter electronics unit (ME) generates a system status message, particularly declared as an alarm, which signals, particularly in a visually or acoustically perceivable manner, a change - exceeding a predefined tolerance value - of an electrical impedance and/or an electromechanical transducer constant of the at least one vibration exciter and/or of an electrical impedance and/or an electromechanical transducer constant of the at least one vibration sensor; and/or

- wherein, on the basis of a phase difference of the signal component of the second type of the vibration signal in relation to the signal component of the second type of the driver signal, the transmitter electronics unit (ME) detects whether and/or to what extent the measuring system is changed in relation to a reference state determined beforehand for this purpose, particularly while calibrating and/or commissioning the measuring system, particularly as a result of transducer aging and/or load, particularly in such a way that a system parameter measured value determined during the operation of the measuring system using the signal component ($s_{drv,II}$) of the second type of the driver signal ($s_{drv}$) and/or using the signal component ($s_{sens1,II}$) of the second type of the at least one vibration signal ($s_{sens1}$) for at least one system parameter that characterizes the measuring system deviates from a system parameter reference value determined in the reference state of the measuring system for said system parameter by more than a predefined tolerance value, particularly by more than 0.1 % of said reference value; and/or

- wherein the transmitter electronics unit sets the signal frequency of the signal component of the second type of the driver signal depending on the signal component of the first type of the driver signal and/or depending on the signal component of the first type of the vibration signal, particularly in such a way that the transmitter electronics unit sets the signal frequency of the signal component of the second type of the driver signal in a predefined frequency ratio, $\dfrac{f_{drv,II}}{f_1} = \dfrac{f_{drv,II}}{f_{drv,I}} = \Omega$ , in relation to the current natural frequency, $f_1$, of the vibration mode of the first order or to the current signal frequency of the signal component of the first type of the driver signal.

5. Measuring system as claimed in one of the previous claims, wherein, using the signal component ($s_{sens1,II}$) of the second type of the at least one vibration signal ($s_{sens1}$), and using the signal component ($s_{drv,II}$) of the second type of the driver signal ($s_{drv}$), the transmitter electronics unit (ME) determines, particularly repeatedly, a system parameter measured value, $G_{ME,ti}$, for a system parameter, $g_{ME}$, characterizing a transducer transmission function that is inherent to the transducer, and therefore characterizing the measuring system,
wherein according to said transducer transmission function the transducer converts the driver signal or individual signal components ($s_{drv,II}$) thereof-particularly a current ($i_{drv,II}$ --> $s_{drv,II}$) flowing through at least one vibration exciter and serving as the signal component ($s_{drv,II}$) of the second type of the driver signal (Sdrv) or a voltage ($u_{drv,II}$ --> $s_{drv,II}$) driving said current and serving as a signal component ($s_{drv,II}$) of the second type of the driver signal ($s_{drv}$) - to the at least one vibration signal ($s_{sens1}$) or to individual signal components thereof, particularly to a voltage ($u_{sens1,II}$) generated using the at least one vibration sensor and serving as the signal component ($s_{sens1,II}$) of the second type of the vibration signal ($s_{sens1}$).

6. Measuring system as claimed in Claim 5, wherein, using the system parameter, $g_{ME}$, that characterizes the transducer transmission function, the transmitter electronics unit (ME) detects whether and/or to what extent the measuring system is changed in relation to a reference state determined beforehand for this purpose, particularly when calibrating and/or commissioning the measuring system, particularly as a result of transducer aging and/or load, particularly in such a way that, using the system parameter, $g_{ME}$, that characterizes the transducer transmission function, the transmitter electronics unit (ME) generates - where applicable - a system status message, which is declared particularly in the form of an alarm and signals, particularly in a manner that is visually and/or acoustically perceivable, a deviation of the measuring system - that exceeds a predefined tolerance value - from a reference state determined beforehand for this purpose.

7. Measuring system as claimed in one of the previous claims, wherein, using the signal component of the first type of the at least one vibration signal and/or using the signal component of the first type of the driver signal, the transmitter electronics unit (ME) determines, particularly repeatedly, a medium parameter measured value, $X_M$, representing a parameter of the flowing medium to be measured, particularly a mass flow rate, a density and/or a viscosity.

8. Measuring system as claimed in Claims 5 and 7, wherein the transmitter electronics unit (ME) determines the at least one medium parameter measured value also using the system parameter measured value, $G_{ME,ti}$, particularly in such a way that the transmitter electronics unit (ME) compensates for an influence of a deviation of the measuring system - determined using the system parameter measured value, $G_{ME,ti}$ - from a reference state determined beforehand for this purpose, on a measurement accuracy of the measuring system, with medium parameter measured values, $X_M$.

9. Measuring system as claimed in one of the previous claims, wherein the transmitter electronics unit comprises a data memory, particularly volatile, for measured values generated using the measuring system, wherein said data memory contains at least one measurement data set formed using measured values generated during the operation of the measuring system and representing an operating state of the measuring system, particularly temporarily, wherein said data set comprises system parameter measured values generated on the basis of the signal component of the second type of the driver signal and/or on the basis of the signal component of the second type of the at least one sensor signal, for different system parameters characterizing the measuring system.

10. Measuring system as claimed in Claim 9,

   - wherein the measurement data set comprises a system parameter measured value for the signal component of the second type of the driver signal supplied to the at least one vibration exciter during the operation of the measuring system and/or a system parameter measured value for the signal component of the second type of the at least one vibration signal provided by the transducer during the operation of the measuring system and/or a system parameter measured value derived from the signal component of the second type of the driver signal supplied to the excitation arrangement during the operation of the measuring system and from the signal component of the second type of the at least one vibration signal provided by the transducer during the operation of the measuring system; and/or
   - wherein a measurement data set formed using the measured values generated during the operation of the measuring system and representing the medium conducted through the transducer is saved in the data memory for measured values generated using the measuring system, wherein said measurement data set comprises medium parameter measured values, $X_M$ - generated on the basis of the signal component of the first type of the driver signal and/or on the basis of the signal component of the first type of the at least one sensor signal - for different medium parameters characterizing the flowing medium, particularly a mass flow rate, a density and/or a viscosity.

11. Measuring system as claimed in one of the previous claims, wherein the transmitter electronics unit comprises a data memory, particularly nonvolatile, for measured values serving as reference values representing a reference state of the measuring system, wherein at least one reference data set representing a reference state of the measuring system is saved in the data memory, wherein said measuring system is particularly already installed in a pipe, wherein said data set comprises system parameter reference values, particularly generated during a calibration of the measuring system in the production factory and/or when commissioning the measuring system using the system parameter reference values generated for different system parameters characterizing the measuring system, particularly in such a way that said system parameter reference values are measured values generated using the measuring system in the reference state and/or using the transducer conducting medium of a known temperature.

12. Measuring system as claimed in Claim 11, wherein the reference data set comprises a system parameter reference value for a signal component of the second type of the driver signal provided to the at least one vibration exciter when the measuring system is in the reference state and/or a system parameter reference value for a signal component of the second type of the at least one vibration signal provided by the transducer when the measuring system is in the reference state and/or a driver signal supplied to the excitation arrangement when the measuring system is in the reference state and a system parameter reference value derived from a signal component of the second type of the at least one vibration signal provided by the transducer while the measuring system is in the reference state.

13. Measuring system as claimed in one of the Claims 11 to 12, in connection, in each case, with one of the Claims 5 to 10, wherein the reference data set comprises a system parameter reference value, $G_{ME,Ref}$, particularly determined using the measuring system in the reference state and/or using the transducer that conducts the medium of a known temperature, wherein said reference value represents the transducer transmission function of the measuring system in the reference state, for the system parameter, $g_{ME}$, that characterizes the transducer transmission function.

14. Measuring system as claimed in one of the Claims 11 to 13, in connection, in each case, with Claim 9, wherein, on the basis of the reference data set and the measurement data set, particularly using a deviation, $\Delta G_{ME}$, determined between the reference data set and the measurement data set, the transmitter electronics unit detects whether and/or to what extent the measuring system is changed in relation to the reference state determined beforehand for this purpose, particularly in such a way that the transmitter electronics unit detects, using a deviation, $\Delta G_{ME}$, determined between the reference data set and the measurement data set, whether and/or to what extent the measuring system has changed in relation to the reference state determined beforehand for this purpose, particularly in such a way that the transmitter electronics unit compares the reference data set to the measurement data set, particularly repeatedly.

## Revendications

1. Système de mesure destiné à des produits en écoulement, notamment dans des conduites, lequel système de mesure comprend un transducteur (MW) de type vibratoire, traversé en fonctionnement par un produit, notamment un gaz et/ou un liquide, une pâte ou une poudre ou un autre matériau fluide, lequel transducteur est destiné à générer des signaux de vibration correspondant à des paramètres du produit en écoulement, notamment à un débit massique, une densité et/ou une viscosité, ainsi qu'une électronique de transmetteur (ME) couplée électriquement au transducteur et destinée à commander le transducteur et à évaluer les signaux de vibration fournis par le transducteur,

- le transducteur (MW) comprenant

-- au moins un tube de mesure (10, 10'), notamment en forme de V, de U ou droit, lequel tube s'étend entre une première extrémité de tube de mesure côté entrée et une deuxième extrémité de tube de mesure côté sortie avec une longueur de vibration utile, tube auquel est inhérente une pluralité de modes de vibration naturels et lequel tube est destiné à guider un produit en écoulement,
-- au moins un excitateur de vibrations (41), notamment électrodynamique, destiné à convertir la puissance d'excitation électrique en vibrations de l'au moins un tube de mesure, notamment de telle sorte que l'au moins un tube de mesure exécute au moins partiellement et/ou au moins temporairement des vibrations autour d'une position de repos, avec une fréquence propre momentanée d'un mode de vibration naturel immanent au tube de mesure, et

-- au moins un capteur de vibration (51, 52), notamment électrodynamique, destiné à mesurer des vibrations, notamment côté entrée et côté sortie, de l'au moins un tube de mesure, et destiné à générer un signal de vibration ($s_{sens1}$) du transducteur représentant les vibrations côté entrée ou côté sortie de l'au moins un tube de mesure ; et

- l'électronique de transmetteur (ME) étant conçue pour fournir un signal d'attaque ($s_{drv}$) servant à l'injection de puissance électrique d'excitation dans l'au moins un excitateur de vibrations (41), et donc à provoquer des vibrations de l'au moins un tube de mesure, pour l'au moins un excitateur de vibrations (41), de telle sorte que

-- le signal d'attaque ($s_{drv}$) présente au moins temporairement une composante de signal sinusoïdale ($s_{drv,I}$) de premier type présentant notamment plusieurs périodes de vibration, avec une fréquence de signal, $f_{drv,I}$, qui correspond à une fréquence propre momentanée, $f_1$, d'un mode de vibration naturel de premier ordre de l'au moins un tube de mesure, en ce que l'au moins un tube de mesure peut exécuter ou exécute des vibrations propres autour d'une position de repos, lesquelles vibrations propres présentent dans la zone de la première et de la deuxième extrémité du tube de mesure respectivement un nœud de vibration et dans la zone de la longueur utile de vibration exactement un ventre de vibrations, ce par quoi

--- l'au moins un tube de mesure, excité par l'au moins un excitateur de vibrations (41), exécute au moins partiellement, notamment principalement, des vibrations en résonance, notamment avec une fréquence de vibration correspondant à la fréquence propre momentanée, $f_1$, du mode de vibration de premier ordre, $f_{drv,I} = f_1$, et

--- l'au moins un signal de vibration ($s_{sens1}$) présente au moins temporairement une composante de signal sinusoïdale ($s_{seris1,I}$) de premier type présentant notamment plusieurs périodes de vibration, avec une fréquence de signal, $f_{sens,I}$, qui correspond à la fréquence de signal, $f_{drv,I}$, de la composante de signal ($s_{drv,I}$) de premier type du signal d'attaque ($s_{drv}$), et donc à la fréquence propre momentanée, $f_1$, du mode de vibration de premier ordre,

-- et que le signal d'attaque ($s_{drv}$) présente au moins temporairement une composante de signal sinusoïdale ($s_{drv,II}$) de deuxième type, laquelle composante domine momentanément en ce qui concerne une puissance de signal et/ou présente plusieurs périodes de vibration, laquelle composante présente une fréquence de signal, $f_{drv,II}$, qui diffère de chaque fréquence propre momentanée de chaque mode de vibration naturel de l'au moins un tube de mesure respectivement de plus de 1 Hz, notamment de plus de 10 Hz, et/ou de plus de 1 %, notamment de plus de 10 %, de ladite fréquence propre, ce par quoi

--- l'au moins un tube de mesure, excité par l'au moins un excitateur de vibrations (41), exécute au moins en partie des vibrations forcées hors résonance, et

--- l'au moins un signal de vibration ($s_{sens1}$) comprend au moins temporairement une composante de fréquence sinusoïdale ($s_{sens1,II}$) de deuxième type, présentant notamment plusieurs périodes de vibration, avec une fréquence de signal, $f_{sens,II}$, qui correspond à la fréquence de signal, $f_{drv,II}$, de la composante de signal ($s_{drv,II}$) de deuxième type du signal d'attaque ($s_{drv}$), et donc à aucune fréquence propre momentanée d'un quelconque mode de vibration naturel de l'au moins un tube de mesure, le signal d'attaque présentant simultanément la composante de signal de premier type et la composante de signal de second type, ce par quoi l'au moins un tube de mesure, excité par l'au moins un excitateur de vibrations (41), exécute simultanément aussi bien des vibrations proportionnellement en résonance, à savoir avec une fréquence de vibration correspondant à la fréquence propre momentanée, $f_1$, du mode de vibration de premier ordre, $f_{drv,I} = f_1$, que des vibrations proportionnellement forcées hors résonance,

-- la fréquence de signal ($f_{drv,II}$) de la composante de signal de second type ($s_{drv,II}$) du signal d'attaque ($s_{drv}$) correspondant à plus de 1,01 fois, notamment à plus de 1,15 fois, et à moins de 2,7 fois, notamment à moins de 2,4 fois, une fréquence propre momentanée, $f_1$, du mode de vibration de premier ordre, ce par quoi

--- l'au moins un tube de mesure, excité par l'au moins un excitateur de vibrations (41), exécute des vibrations forcées au moins en partie hors résonance avec une fréquence de vibration située dans une gamme de fréquences, $| 1,01 \cdot f_1 < f_{drv,II} < 2,7 \cdot f_1 |$, supérieure à 1,01 fois, notamment supérieure à 1,15 fois, et inférieure à 2,7 fois, notamment inférieure à 2,4 fois, la fréquence propre momentanée, $f_1$, du mode de vibration de premier ordre, et

--- la fréquence de signal de la deuxième composante de signal ($s_{sens1,II}$) du signal de vibration ($s_{sens1}$)

est supérieure à 1,01 fois, notamment supérieure à 1,15 fois, et inférieure à 2,7 fois, notamment inférieure à 2,4 fois la fréquence propre momentanée, $f_1$, du mode de vibration de premier ordre ;

- et système de mesure pour lequel l'électronique de transmetteur (ME) est conçue pour détecter,

-- au moyen de la composante de signal ($s_{drv,II}$) de deuxième type du signal d'attaque ($s_{drv}$), notamment sur la base d'un courant ($i_{drv,II} \rightarrow s_{drv,II}$) servant de composante de signal ($s_{drv,II}$) de deuxième type du signal d'attaque ($s_{drv}$) et circulant dans l'au moins un excitateur de vibrations, ou d'une tension ($u_{drv,II} \rightarrow s_{drv,II}$) servant de composante de signal ($s_{drv,II}$) de deuxième type du signal d'attaque ($s_{drv}$) et entraînant ledit courant,
-- et au moyen de la composante de signal ($s_{sens1,II}$) de deuxième type de l'au moins un signal de vibration ($s_{sens1}$), notamment sur la base d'une tension ($u_{sens1,II}$) générée au moyen de l'au moins un capteur de vibration et servant de composante de signal ($s_{sens1,II}$) de deuxième type du signal de vibration ($s_{sens1}$), si et/ou dans quelle mesure le système de mesure est modifié par rapport à un état de référence déterminé à cet effet au préalable, notamment lors d'un étalonnage et/ou d'une mise en service du système de mesure, notamment en raison du vieillissement et/ou d'une charge du transducteur, notamment de telle sorte qu'une valeur mesurée de paramètre système déterminée pendant le fonctionnement du système de mesure au moyen de la composante de signal ($s_{drv,II}$) de deuxième type du signal d'attaque ($s_{drv}$) et/ou au moyen de la composante de signal ($s_{sens1,II}$) de deuxième type de l'au moins un signal de vibration ($s_{sens1}$), notamment

$$\left.\frac{U_{sens1,II}}{I_{drv,II}}\right|_{t_i} = G_{ME,ti} \qquad\qquad \left.\frac{U_{sens1,II}}{U_{drv,II}}\right|_{t_i} = G_{ME,ti}$$

en tant que rapport ou en tant que rapport pour au moins un paramètre système caractérisant le système de mesure diffère d'une valeur de référence de paramètre système déterminée dans l'état de référence du système de mesure pour ce même paramètre système de plus d'une cote de tolérance prédéfinie, notamment de plus de 0,1 % de ladite valeur de référence.

2. Système de mesure selon l'une des revendications précédentes, pour lequel la fréquence de signal, $f_{drv,II}$, de la composante de signal ($s_{drv,II}$) de deuxième type du signal d'attaque ($s_{drv}$) est supérieure à 5 Hz, notamment supérieure à 10 Hz, et/ou pour lequel la fréquence de signal, $f_{drv,II}$, de la composante de signal ($s_{drv,II}$) de deuxième type du signal d'attaque est supérieure à 0,1 fois la fréquence propre momentanée du mode de vibration de premier ordre.

3. Système de mesure selon l'une des revendications précédentes,

- pour lequel la fréquence de signal ($f_{drv,II}$) de la composante de signal de deuxième type ($s_{drv,II}$) du signal d'attaque est inférieure à une fréquence propre momentanée, $f_2$, d'un mode de vibration de deuxième ordre de l'au moins un tube de mesure, mode dans lequel l'au moins un tube de mesure vibrant peut exécuter ou exécute des vibrations autour d'une position de repos, lesquelles vibrations présentent respectivement un nœud de vibration dans la zone de la première et de la deuxième extrémité du tube de mesure, et un autre nœud de vibration dans la zone de la longueur de vibration utile, ainsi qu'exactement deux ventres de vibration, ce par quoi

-- l'au moins un tube de mesure, excité par l'au moins un excitateur de vibrations (41), exécute au moins en partie des vibrations forcées hors résonance, notamment dans une gamme de fréquences, | $f_{drv,II} < f_2$ |, qui se situe en dessous de la fréquence propre momentanée du mode de vibration de deuxième ordre, et
-- l'au moins un signal de vibration présente au moins temporairement une composante de signal de deuxième type avec une fréquence de signal qui se situe en dessous de la fréquence propre momentanée du mode de vibration de deuxième ordre, notamment de telle sorte que

--- l'au moins un tube de mesure, excité par l'au moins un excitateur de vibrations (41), exécute au moins en partie des vibrations forcées hors résonance, notamment dans une gamme de fréquences, | $f_1 < f_{drv,II} < f_2$ |, qui est supérieure à la fréquence propre momentanée, $f_1$, du mode de vibration de premier ordre et inférieure à la fréquence propre momentanée, $f_2$, du mode de vibration de deuxième ordre, et
--- l'au moins un signal de vibration présente au moins temporairement une composante de signal de deuxième type avec une fréquence de signal qui se situe au-dessus de la fréquence propre momentanée du mode de vibration de premier ordre et en dessous de la fréquence propre momentanée du mode de vibration de deuxième ordre ; et/ou

- la fréquence de signal de la composante de signal de premier type du signal d'attaque ($s_{drv}$) correspondant à une fréquence propre momentanée d'un mode de vibration de flexion naturel, mode dans lequel l'au moins un tube de mesure vibrant exécute des vibrations de flexion autour de la position de repos, lesquelles vibrations présentent dans la zone de la première et de la deuxième extrémité du tube de mesure respectivement un nœud de vibration et dans la zone de la longueur de vibration utile exactement un ventre de vibration (mode fondamental de vibration de flexion), ce par quoi

-- l'au moins un tube de mesure, excité par l'au moins un excitateur de vibrations (41), exécute au moins partiellement, notamment principalement, des vibrations de flexion en résonance, notamment avec une fréquence de vibration correspondant à la fréquence propre momentanée dudit mode de vibration de flexion, et

-- la fréquence de signal de la composante de signal de premier type de l'au moins un signal de vibration correspond à la fréquence propre momentanée dudit mode de vibration de flexion.

**4.** Système de mesure selon l'une des revendications précédentes,

- pour lequel l'électronique de transmetteur (ME) génère, au moyen de la composante de signal ($s_{sens1,II}$) de deuxième type de l'au moins un signal de vibration ($s_{sens1}$), un message d'état du système (Sysfail), déclaré notamment comme une alarme, lequel message signale un écart du système de mesure dépassant une cote de tolérance prédéfinie, par rapport à un état de référence déterminé notamment lors d'un étalonnage et/ou lors d'une mise en service du système de mesure, notamment de manière perceptible visuellement et/ou acoustiquement, lequel écart est dû notamment au vieillissement du système de mesure et/ou à des charges du transducteur modifiant de manière irréversible le comportement vibratoire de l'au moins un tube de mesure et/ou à des charges thermiques du transducteur modifiant une impédance électrique et/ou une constante de transducteur électromécanique de l'au moins un excitateur de vibrations et/ou à des charges thermiques du transducteur modifiant une impédance électrique et/ou une constante de transducteur électromécanique de l'au moins un capteur de vibrations ; et/ou

- pour lequel l'électronique de transmetteur (ME) génère, au moyen de la composante de signal ($s_{sens1,II}$) de deuxième type de l'au moins un signal de vibration ($s_{sens1}$) un message d'état du système ($Sys_{fail}$), déclaré notamment comme une alarme, lequel message signale, notamment de manière perceptible visuellement et/ou acoustiquement, une usure du tube de mesure dépassant une cote de tolérance prédéfinie ; et/ou

- pour lequel l'électronique de transmetteur (ME) génère, au moyen de la composante de signal ($s_{sens1,II}$) de deuxième type de l'au moins un signal de vibration ($s_{sens1}$) un message d'état du système, déclaré notamment comme une alarme, lequel message signale, notamment de manière perceptible visuellement et/ou acoustiquement, qu'une intégrité structurelle de l'au moins un tube de mesure n'est plus garantie, notamment suite à l'usure du matériau et/ou suite à une surcharge et/ou suite à la formation de fissures et/ou suite à la fatigue du matériau ; et/ou

- pour lequel l'électronique de transmetteur (ME) génère, au moyen de la composante de signal ($s_{sens1,II}$) de deuxième type de l'au moins un signal de vibration ($s_{sens1}$) un message d'état du système, déclaré notamment comme une alarme, lequel message signale, notamment de manière perceptible visuellement et/ou acoustiquement, qu'un dépôt adhérant au tube de mesure est formé sur une face intérieure de celui-ci et qui est en contact avec le produit à mesurer pendant le fonctionnement ; et/ou

- pour lequel l'électronique de transmetteur (ME) génère, au moyen de la composante de signal ($s_{sens1,II}$) de deuxième type de l'au moins un signal de vibration ($s_{sens1}$) un message d'état du système, déclaré notamment comme une alarme, lequel message signale, notamment de manière perceptible visuellement et/ou acoustiquement, une usure du matériau du tube de mesure dépassant une cote de tolérance prédéfinie ; et/ou

- pour lequel l'électronique de transmetteur (ME) génère, au moyen de la composante de signal ($s_{sens1,II}$) de deuxième type de l'au moins un signal de vibration ($s_{sens1}$) un message d'état du système, déclaré notamment comme une alarme, lequel message signale, notamment de manière perceptible visuellement et/ou acoustiquement, la formation de fissures dans l'au moins un tube de mesure ; et/ou

- pour lequel l'électronique de transmetteur (ME) génère, au moyen de la composante de signal ($s_{sens1,II}$) de deuxième type de l'au moins un signal de vibration ($s_{sens1}$) un message d'état du système, déclaré notamment comme une alarme, lequel message signale une modification des propriétés de vibration de l'au moins un tube de mesure au-delà d'une cote mesure de tolérance prédéfinie, notamment suite à une déformation et/ou suite à une usure du matériau et/ou suite à la formation de fissures et/ou suite à la fatigue du matériau ; et/ou

- pour lequel l'électronique de transmetteur (ME) génère, au moyen de la composante de signal ($s_{sens1,II}$) de deuxième type de l'au moins un signal de vibration ($s_{sens1}$) un message d'état du système, déclaré notamment comme une alarme, lequel message signale, notamment de manière perceptible visuellement et/ou acoustiquement, une modification d'une impédance électrique du transducteur au-delà d'une cote de tolérance prédéfinie ; et/ou

- pour lequel l'électronique de transmetteur (ME) génère, au moyen de la composante de signal ($s_{sens1,II}$) de deuxième type de l'au moins un signal de vibration ($s_{sens1}$) un message d'état du système, déclaré notamment comme une alarme, lequel message signale, notamment de manière perceptible visuellement et/ou acoustiquement, une modification dépassant une cote de tolérance prédéfinie d'une impédance électrique et/ou d'une constante de transducteur électromécanique de l'au moins un excitateur de vibrations et/ou d'une impédance électrique et/ou d'une constante de transducteur électromécanique de l'au moins un capteur de vibrations ; et/ou

- pour lequel l'électronique de transmetteur (ME) détecte, sur la base d'une différence de phase de la composante de signal de deuxième type du signal de vibration par rapport à la composante de signal de deuxième type du signal d'attaque, si et/ou dans quelle mesure le système de mesure est modifié par rapport à un état de référence déterminé au préalable à cet effet, notamment lors d'un étalonnage et/ou d'une mise en service du système de mesure, notamment en raison du vieillissement et/ou de la charge du transducteur, notamment de telle sorte qu'une valeur mesurée de paramètre système déterminée pendant le fonctionnement du système de mesure à l'aide de la composante de signal ($s_{drv,II}$) de deuxième type du signal d'attaque ($s_{drv}$) et/ou à l'aide de la composante de signal ($s_{sens1,II}$) de deuxième type de l'au moins un signal de vibration ($s_{sens1}$) pour au moins un paramètre système caractérisant le système de mesure diffère d'une valeur de référence de paramètre système déterminée dans l'état de référence du système de mesure pour ce même paramètre système de plus d'une cote de tolérance prédéfinie, notamment de plus de 0,1 % de ladite valeur de référence ; et/ou

- pour lequel l'électronique de transmetteur règle la fréquence de signal de la composante de signal de deuxième type du signal d'attaque en fonction de la composante de signal de premier type du signal d'attaque et/ou en fonction de la composante de signal de premier type du signal de vibration, notamment de telle sorte que l'électronique de transducteur règle la fréquence de signal de la composante de signal de deuxième type du

$$\frac{f_{drv,II}}{f_1} = \frac{f_{drv,II}}{f_{drv,I}} = \Omega$$

signal d'attaque dans un rapport de fréquence prédéfini, , par rapport à la fréquence propre momentanée, $f_1$, du mode de vibration de premier ordre ou à la fréquence de signal momentanée de la composante de signal de premier type du signal d'attaque.

5. Système de mesure selon l'une des revendications précédentes, pour lequel l'électronique de transmetteur (ME) détermine, au moyen de la composante de signal ($s_{sens1,II}$) de deuxième type de l'au moins un signal de vibration ($s_{sens1}$), ainsi qu'au moyen de la composante de signal ($s_{drv,II}$) de deuxième type du signal d'attaque ($s_{drv}$), notamment de manière récurrente, une valeur mesurée de paramètre système, $G_{ME,ti}$, pour un paramètre système, $g_{ME}$, caractérisant une fonction de transfert de transducteur immanente au transducteur, et par conséquent le système de mesure,
fonction de transfert de transducteur selon laquelle le transducteur convertit le signal d'attaque ou une composante de signal individuelle ($s_{drv,II}$) de celui-ci - notamment un courant ($i_{drv,II} \rightarrow s_{drv,II}$) circulant dans l'au moins un excitateur de vibrations et servant de composante de signal ($s_{drv,II}$) de deuxième type du signal d'attaque ($s_{drv}$) ou une tension ($u_{drv,II} \rightarrow s_{drv,II}$) entraînant ledit courant et servant de composante de signal ($s_{drv,II}$) de deuxième type du signal d'attaque ($s_{drv}$) - en l'au moins un signal de vibration ($s_{sens1}$) ou en des composantes de signal individuelles de celui-ci, notamment en une tension ($u_{sens1,II}$) générée au moyen de l'au moins un capteur de vibrations et servant de composante de signal ($s_{sens1,II}$) de deuxième type du signal de vibration ($s_{sens1}$).

6. Système de mesure selon la revendication 5, pour lequel l'électronique de transmetteur (ME) détecte, au moyen du paramètre système, $g_{ME}$, caractérisant la fonction de transfert du transducteur, si et/ou dans quelle mesure le système de mesure est modifié par rapport à un état de référence déterminé au préalable à cet effet, notamment lors d'un étalonnage et/ou d'une mise en service du système de mesure, notamment en raison du vieillissement et/ou de la charge du transducteur, notamment de telle sorte que l'électronique de transmetteur (ME) génère, le cas échéant, au moyen du paramètre système, $g_{ME}$, caractérisant la fonction de transfert du transducteur, un message d'état du système, lequel message est déclaré notamment sous la forme d'une alarme et signale, de manière perceptible notamment visuellement et/ou acoustiquement, un écart du système de mesure dépassant une cote de tolérance prédéfinie, par rapport à un état de référence déterminé préalablement à cet effet.

7. Système de mesure selon l'une des revendications précédentes, pour lequel l'électronique de transmetteur (ME) détermine, au moyen de la composante de signal de premier type de l'au moins un signal de vibration et/ou au moyen de la composante de signal de premier type du signal d'attaque, notamment de manière répétitive, une valeur mesurée de paramètre de produit, $X_M$, représentant un paramètre à mesurer du produit qui s'écoule, notamment un débit massique, une densité et/ou une viscosité.

**8.** Système de mesure selon les revendications 5 et 7, pour lequel l'électronique de transmetteur (ME) détermine l'au moins une valeur mesurée de paramètre de produit en utilisant également la valeur mesurée de paramètre système, $G_{ME,ti}$, notamment de telle sorte que l'électronique de transmetteur (ME) compense une influence d'un écart du système de mesure - déterminé en utilisant la valeur mesurée de paramètre système, $G_{ME,ti}$ - par rapport à un état de référence déterminé au préalable à cet effet, sur une précision de mesure du système de mesure, avec des valeurs mesurées de paramètre de produit, $X_M$, déterminées.

**9.** Système de mesure selon l'une des revendications précédentes, pour lequel l'électronique de transmetteur comprend une mémoire de données, notamment volatile, pour des valeurs mesurées générées au moyen du système de mesure, mémoire de données dans laquelle est conservé au moins un jeu de données de mesure formé au moyen de valeurs mesurées générées pendant le fonctionnement du système de mesure et représentant un état de fonctionnement du système de mesure, notamment temporairement, lequel jeu de données comprend des valeurs mesurées de paramètres système générées sur la base de la composante de signal de deuxième type du signal d'attaque et/ou sur la base de la composante de signal de deuxième type de l'au moins un signal de capteur, pour différents paramètres système caractérisant le système de mesure.

**10.** Système de mesure selon la revendication 9,

- pour lequel le jeu de données de mesure comprend une valeur mesurée de paramètre système pour la composante de signal de deuxième type du signal d'attaque acheminé à l'au moins un excitateur de vibrations pendant le fonctionnement du système de mesure et/ou une valeur mesurée de paramètre système pour la composante de signal de deuxième type de l'au moins un signal de vibration fourni par le transducteur pendant le fonctionnement du système de mesure et/ou une valeur mesurée de paramètre système dérivée de la composante de signal de deuxième type du signal d'attaque acheminé au dispositif d'excitation pendant le fonctionnement du système de mesure et de la composante de signal de deuxième type de l'au moins un signal de vibration fourni par le transducteur pendant le fonctionnement du système de mesure ; et/ou
- pour lequel est conservé - dans la mémoire de données pour les valeurs mesurées générées au moyen du système de mesure - un jeu de données de mesure formé au moyen de valeurs mesurées générées pendant le fonctionnement du système de mesure et représentant le produit guidé dans le transducteur, lequel jeu de données de mesure comprend des valeurs mesurées de paramètres de produit, $X_M$ - générées sur la base de la composante de signal de premier type du signal d'attaque et/ou sur la base de la composante de signal de premier type de l'au moins un signal de capteur - pour différents paramètres de produit caractérisant le produit qui s'écoule, notamment un débit massique, une densité et/ou une viscosité.

**11.** Système de mesure selon l'une des revendications précédentes, pour lequel l'électronique de transmetteur comprend une mémoire de données, notamment non volatile, pour des valeurs mesurées servant de valeurs de référence représentant un état de référence du système de mesure, mémoire de données dans laquelle est conservé au moins un jeu de données de référence représentant un état de référence du système de mesure, lequel système de mesure est notamment déjà installé dans une conduite, lequel jeu de données comprend des valeurs de référence de paramètres système, notamment générées au cours d'un étalonnage du système de mesure dans l'usine du fabricant et/ou pendant une mise en service du système de mesure au moyen de celui-ci, pour différents paramètres système caractérisant ledit système de mesure, notamment de telle sorte que lesdites valeurs de référence de paramètres système sont des valeurs mesurées générées au moyen du système de mesure lui-même se trouvant dans l'état de référence et/ou au moyen du transducteur guidant un produit de température connue.

**12.** Système de mesure selon la revendication 11, pour lequel le jeu de données de référence comprend une valeur de référence de paramètre système pour une composante de signal de deuxième type du signal d'attaque fourni à l'au moins un excitateur de vibrations lorsque le système de mesure se trouve dans l'état de référence et/ou une valeur de référence de paramètre système pour une composante de signal de deuxième type du signal de vibration fourni par le transducteur lorsque le système de mesure est dans l'état de référence et/ou un signal d'attaque acheminé au dispositif d'excitation lorsque le système de mesure est dans l'état de référence et une valeur de référence de paramètre système dérivée d'une composante de signal de deuxième type de l'au moins un signal de vibration fourni par le transducteur lorsque le système de mesure est dans l'état de référence.

**13.** Système de mesure selon l'une des revendications 11 à 12, respectivement en liaison avec l'une des revendications 5 à 10, le jeu de données de référence comprenant une valeur de référence de paramètre système, $G_{ME,Ref}$, déterminée notamment au moyen du système de mesure lui-même se trouvant dans l'état de référence et/ou au moyen du transducteur guidant un produit de température connue, laquelle valeur de référence représente la fonction de transfert de transducteur du système de mesure se trouvant dans l'état de référence, pour le paramètre système, $g_{ME}$, caractérisant la fonction de transfert de transducteur.

14. Système de mesure selon l'une des revendications 11 à 13, respectivement en liaison avec la revendication 9, pour lequel l'électronique de transmetteur détecte, sur la base du jeu de données de référence et du jeu de données de mesure, notamment à l'aide d'un écart, $\Delta G_{ME}$, déterminé entre le jeu de données de référence et le jeu de données de mesure, si et/ou dans quelle mesure le système de mesure est modifié par rapport à l'état de référence déterminé au préalable à cet effet, notamment de telle sorte que l'électronique de transmetteur détecte, à l'aide d'un écart, $\Delta G_{ME}$, déterminé entre le jeu de données de référence et le jeu de données de mesure, si et/ou dans quelle mesure le système de mesure est modifié par rapport à l'état de référence déterminé au préalable à cet effet, notamment de telle sorte que l'électronique de transmetteur compare le jeu de données de référence au jeu de données de mesure, notamment de manière répétée.

Fig. 1b

Fig. 1a

Fig. 2a

Fig. 2b

EP 3 628 984 B1

Fig. 3

EP 3 628 984 B1

Fig. 4

43

Fig. 5

Fig. 6

EP 3 628 984 B1

Fig. 7

EP 3 628 984 B1

*Fig. 8*

Fig. 9

EP 3 628 984 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 317340 A
- EP 816807 A
- JP 8136311 A
- JP 9015015 A
- US 20060112774 A
- US 20070062308 A
- US 20070113678 A
- US 20070119264 A
- US 20070119265 A
- US 20070151370 A
- US 20070151371 A
- US 20070186685 A
- US 20080034893 A
- US 20080041168 A
- US 20080141789 A
- US 20100050783 A
- US 0100139416 A2
- US 20100139417 A
- US 20100236338 A
- US 20100242623 A
- US 20100242624 A
- US 0100011882 A2
- US 20100251830 A
- US 4680974 A
- US 4738144 A
- US 4777833 A
- US 4801897 A
- US 4823614 A
- US 4879911 A
- US 5009109 A
- US 5024104 A
- US 5050439 A
- US 5291792 A
- US 5359881 A
- US 5398554 A
- US 5476013 A
- US 5531126 A
- US 5602345 A
- US 5691485 A
- US 5734112 A
- US 5796010 A
- US 5796011 A
- US 5796012 A
- US 5804741 A
- US 5861561 A
- US 5869770 A
- US 5945609 A
- US 5979246 A
- US 6047457 A
- US 6092429 A
- US 6073495 A
- US 6311136 A
- US 6223605 B
- US 6330832 B
- US 6397685 B
- US 6513393 B
- US 6557422 B
- US 6651513 B
- US 6666098 B
- US 6691583 B
- US 6840109 B
- US 6868740 B
- US 6883387 B
- US 7017424 B
- US 7040179 B
- US 7073396 B
- US 7077014 B
- US 7080564 B
- US 7134348 B
- US 7216550 B
- US 7299699 B
- US 7305892 B
- US 7360451 B
- US 7392709 B
- US 7406878 B
- US 7562586 B
- WO 0014485 A
- WO 0102816 A
- WO 03021205 A
- WO 2004072588 A
- WO 2005040734 A
- WO 2005050145 A
- WO 2007097760 A
- WO 2008013545 A
- WO 2008077574 A
- WO 9529386 A
- WO 9516897 A
- WO 9605484 A
- WO 9940394 A
- DE 102009055069
- DE 102010039627
- WO 9939164 A
- WO 2009134830 A1
- US 6711958 B
- US 5349872 A
- US 6006609 A
- US 6920798 B
- US 5731527 A

- US 6311136 B
- US 7284449 B
- US 6910366 B
- US 5576500 A